# FASCICULE DE BREVET EUROPEEN

(11) **EP 3 464 300 B1**
(45) Date de publication et mention de la délivrance du brevet: **01.12.2021**
(21) Numéro de dépôt: 17732514.9
(22) Date de dépôt: 30.05.2017
(51) Int. Cl.: C07F 5/02, C08F 230/06

(54) **NOUVEAUX COMPOSÉS, DÉRIVÉS DE DIOXOBOROLANE OU DE DIOXABORINANE FONCTIONNALISÉS, LEUR PROCÉDÉ DE PRÉPARATION ET LEURS UTILISATIONS**
NEUARTIGE VERBINDUNGEN, FUNKTIONALISIERTE DIOXABOROLAN- ODER DIOXABORINANDERIVATE ZUR HERSTELLUNG DAVON UND VERWENDUNGEN DAVON
NOVEL COMPOUNDS, FUNCTIONALISED DIOXABOROLANE OR DIOXABORINANE DERIVATIVES, METHOD FOR PREPARING SAME AND USES THEREOF

(30) Priorité: 30.05.2016 FR 1654837
(43) Date de publication de la demande: 10.04.2019
(73) Titulaire: Ecole Supérieure de Physique et Chimie Industrielles de la Ville de Paris, 75005 Paris (FR); Centre National de la Recherche Scientifique (CNRS), 75016 Paris (FR)
(72) Inventeur: LEIBLER, Ludwik, 75006 Paris (FR); NICOLAY, Renaud, 91370 Verriêres-le-Buisson (FR)
(74) Mandataire: Regimbeau
(86) Numéro de dépôt international: PCT/FR2017/051343
(87) Numéro de publication internationale: WO 2017/207913

(56) Documents cités:
- WO-A1-2015/110642
- WO-A2-2008/063300
- BURCIN AKGUN ET AL: "Fast and Tight Boronate Formation for Click Bioorthogonal Conjugation", ANGEWANDTE CHEMIE INTERNATIONAL EDITION, vol. 55, no. 12, 14 mars 2016 (2016-03-14) , pages 3909-3913, XP055341607, DE ISSN: 1433-7851, DOI: 10.1002/anie.201510321
- KENNEDY J W J ET AL: "Design of chiral boronate-substituted acrylanilides. - Self-activation and boron-transmitted 1,8-stereoinduction in [4+2] cycloaddition", JOURNAL OF ORGANOMETALLIC CHEMISTRY, ELSEVIER-SEQUOIA S.A. LAUSANNE, CH, vol. 680, no. 1-2, 29 août 2003 (2003-08-29), pages 263-270, XP004450678, ISSN: 0022-328X, DOI: 10.1016/S0022-328X(03)00400-5
- BRIKH A ET AL: "Boronated thiophenols: a preparation of 4-mercaptophenylboronic acid and derivatives", JOURNAL OF ORGANOMETALLIC CHEMISTRY, ELSEVIER-SEQUOIA S.A. LAUSANNE, CH, vol. 581, no. 1-2, 5 juin 1999 (1999-06-05), pages 82-86, XP004172714, ISSN: 0022-328X, DOI: 10.1016/S0022-328X(99)00086-8

## Description

L'invention traite de nouveaux composés, de leur procédé de préparation et de leurs utilisations, notamment pour fonctionnaliser des polymères ou pour le couplage avec des molécules d'intérêt.

Les inventeurs ont découvert une nouvelle réaction de métathèse d'esters boroniques et on décrit :
- la préparation d'une librairie de composés mettant en œuvre cette nouvelle réaction (demande FR15/57821 non publiée)
- des compositions de polymères réticulés comprenant des fonctions esters boroniques permettant des réactions d'échange (demande FR15/57822, demande FR15/59955, non publiées). En particulier, les inventeurs ont décrit un procédé dans lequel un polymère est fonctionnalisé par ajout d'un additif comprenant une fonction ester boronique.

Les composés selon l'invention peuvent être utilisés en tant que tels additifs.

Les composés selon l'invention comprennent un groupement fonctionnel particulièrement adapté à un greffage sur un grand nombre de polymères.

Les composés selon l'invention comprennent un groupement fonctionnel particulièrement adapté à un couplage avec un grand nombre de polymères naturels, tels les peptides et protéines.

La demande de brevet WO 2015/110642 décrit des compositions comprenant au moins un copolymère résultant de la copolymérisation de monomères fonctionnalisés par des diols et un composé comprenant au moins deux fonctions esters boroniques.

### I- DEFINITIONS

Au sens de la présente invention, on désignera par « ester boronique » des composés comprenant un groupe dioxaborolane ou dioxaborinane.

Par « dioxaborolane », on entend, au sens de la présente invention, un groupe de formule :

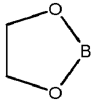

Par « dioxaborinane », on entend, au sens de la présente invention, un groupe de formule :

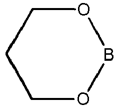

Au sens de la présente invention, par substituants des cycles dioxaborolane ou dioxaborinane on entend les radicaux portés par les atomes de carbone et de bore constituant les cycles dioxaborolane ou dioxaborinane.

Au sens de l'invention l'ester boronique est un dioxaborolane ou un dioxaborinane: 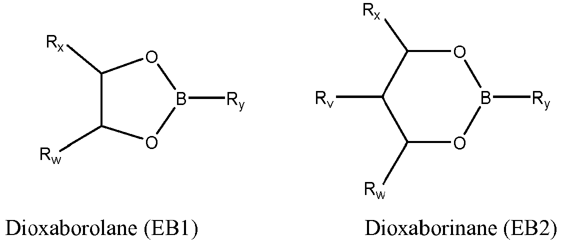 où Rx, Rw et Rv, identiques ou différents, représentent chacun un atome d'hydrogène, un radical hydrocarboné, ou forment ensemble, deux à deux, un cycle aliphatique ou aromatique tels que définis ci-après. Ry est un radical hydrocarboné tel que défini ci-après. Au sens de l'invention, le radical Ry est lié à la fonction ester boronique par une liaison covalente via un atome de carbone.

### Définition des radicaux :

Par groupement « hydrocarboné », on entend, au sens de la présente invention, un groupement comprenant des atomes de carbone et d'hydrogène. Ce groupement peut également comprendre des hétéroatomes et/ou être substitué par des halogènes. Le groupement hydrocarboné comprend avantageusement de 1 à 50, de préférence 1 à 18, de préférence 1 à 12, atomes de carbone.

Par « hétéroatome », on entend, au sens de la présente invention, des atomes de soufre, azote, oxygène, bore, phosphore, silicium.

Par «halogène », on entend, au sens de la présente invention, les atomes de fluor, de chlore, de brome et d'iode.

Les groupements hydrocarbonés peuvent être aliphatiques ou aromatiques.

Par "aliphatique", on entend, au sens de la présente invention un groupement organique acyclique ou cyclique, linéaire ou branché, saturé ou insaturé, à l'exclusion des composés aromatiques.

Le groupe aliphatique peut comprendre des hétéroatomes. En particulier, il peut être interrompu par des fonctions ester, amide, éther, thioéther, amine secondaire ou tertiaire, carbonate, uréthane, carbamide, anhydride. Le cas échéant, le groupe aliphatique peut être substitué notamment par un halogène, un groupement -Rz, -OH, -NH2, -NHRz, -NRzR'z, -C(O)-H, -C(O)-Rz,-C(O)-OH, -C(O)-NRzR'z,-C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz avec Rz, R'z, identiques ou différents, représentant un radical alkyle en C₁-C₅₀.

Par groupement « alkyle », on entend, au sens de la présente invention, une chaîne hydrocarbonée, saturée ou insaturée, linéaire ou ramifiée, avantageusement comportant 1 à 50, de préférence 1 à 18, de préférence 1 à 12, atomes de carbone, et qui peut comprendre un ou plusieurs hétéroatomes. Ainsi, par abus de langage, au sens de l'invention le terme « alkyle » englobe également :
- les «alcényles », c'est-à-dire les chaînes hydrocarbonées comportant au moins une double liaison ;
- les "hétéroalkyle", c'est-à-dire les groupements alkyles tel que définis précédemment comprenant au moins un hétéroatome.

Le terme « (hétéro)alkyle » désigne les groupements alkyles et les groupements hétéroalkyles.

Par groupement «alcanediyle », on entend, au sens de la présente invention, une chaîne hydrocarbonée divalente, saturée ou insaturée, linéaire ou ramifiée, comprenant avantageusement de 1 à 50, de préférence 1 à 18, de préférence 1 à 12, atomes de carbone et qui peut comprendre un ou plusieurs hétéroatomes. Ainsi, par abus de langage, au sens de l'invention le terme «alcanediyle » englobe également les «alcènediyles », c'est-à-dire les chaînes hydrocarbonées comprenant au moins une double liaison, comme par exemple, un groupement vinylène (éthénylène) ou propénylène et les « hétéro alcanediyle », c'est-à-dire les groupements alcanediyles tel que définis précédemment comprenant au moins un hétéroatome.

Le terme « (hétéro)alcanediyle » désigne les groupements alcanediyle et les groupements hétéroalcanediyle.

Le terme « (hétéro)alcènediyle » désigne les groupements alcènediyle et les groupements hétéroalcènediyle.

Par groupement «cycloalkyle », on entend, au sens de la présente invention, une chaîne alkyle cyclique, saturée ou partiellement insaturée, mais non aromatique, comportant avantageusement de 3 à 10 atomes de carbone. La chaîne alkyle peut comprendre un ou plusieurs hétéroatomes, on parlera alors spécifiquement d' « hétérocycloalkyle ». Le groupement peut comprendre plus d'un cycle et ainsi comprendre des cycles fusionnés, liés ou spiro. A titre d'exemple, on peut citer les groupes cyclopropyle, cyclopentyle, cyclohexyle, cycloheptyle, pyrrolidinyle, pipéridinyle, pipérazinyle ou morpholinyle. Le cas échéant, le groupe cycloalkyle peut être substitué notamment par un halogène, un groupement -Rz, -OH, -NH2, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz avec Rz, R'z, identiques ou différents, représentant un radical alkyle en C₁-C₅₀. Le cas échéant, le groupement cycloalkyle pourra être divalent, on parlera alors avantageusement de radical « cycloaliphatique ».

Le terme « (hétéro)cycloalkyle » désigne les groupements cycloalkyles et les groupements hétérocycloalkyles.

Par "aromatique", on entend, au sens de la présente invention, un groupe organique contenant un système cyclique par la règle d'aromaticité de Hückel. Le groupe aromatique peut comprendre des hétéroatomes, on parlera alors spécifiquement de radical « hétéroaromatique ». Ainsi, le terme « aromatique » englobe les groupements « arylaliphatiques », c'est-à-dire un groupement comprenant au moins un groupement aromatique et au moins un groupement aliphatique, tels que définis. Le groupement aliphatique peut être lié à une partie de la molécule et le groupement aromatique peut être lié à une autre partie de la molécule. Le groupement peut comprendre deux groupements aromatiques, chacun relié à une partie de la molécule, et reliés entre eux par une chaîne aliphatique.

Le groupe aromatique peut être interrompu par des fonctions ester, amide, éther, thioéther, amine secondaire ou tertiaire, carbonate, uréthane, carbamide, anhydride. Le groupe aromatique peut comprendre un ou plusieurs cycles accolés ou liés de manière covalente. Le cas échéant, le groupe aromatique peut être substitué notamment par un halogène, un groupement -Rz, -OH, -NH2, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz avec Rz, R'z, identiques ou différents, représentant un radical alkyle en C₁-C₅₀ .

Par « aryle », on entend, au sens de la présente invention, un groupement hydrocarboné aromatique. Le terme « aryle » englobe les groupements aralkyles et alkyl-aryle. Le groupement hydrocarboné aromatique peut être substitué une ou plusieurs fois notamment par un halogène, un groupement -Rz, -OH, -NH₂, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz avec Rz, R'z, identiques ou différents, représentant un radical alkyle en C₁-C₅₀ . Avantageusement le groupement hydrocarboné aromatique comporte de 6 à 10 atomes de carbone, et peut comprendre un ou plusieurs cycles accolés, comme par exemple un groupement phényle ou naphtyle. Avantageusement, il s'agit du phényle.

Par «alkyl-aryle », on entend, au sens de la présente invention, un groupe alkyle tel que défini ci-dessus, lié au reste de la molécule par l'intermédiaire d'un groupe aromatique tel que défini ci-dessus. Ce terme désignera aussi bien les radicaux monovalents que les radicaux divalents.

Par «aralkyle», on entend, au sens de la présente invention, un groupe aryle tel que défini ci-dessus, lié au reste de la molécule par l'intermédiaire d'un groupe aliphatique tel que défini ci-dessus. Ce terme désignera aussi bien les radicaux monovalents que les radicaux divalents.

Par « hétéroaryle », on entend, au sens de la présente invention, un groupement aryle pour lequel au moins un des atomes du cycle aromatique est un hétéroatome. Le groupe aromatique comprend un ou plusieurs, notamment 1 ou 2, cycles hydrocarbonés accolés, dans lequel un ou plusieurs atomes de carbone, avantageusement 1 à 4 et encore plus avantageusement 1 ou 2, sont chacun remplacés par un hétéroatome tels que par exemple un atome de soufre, d'azote ou d'oxygène. Des exemples de groupes hétéroaryle sont les groupes furyle, thiényle, pyrrolyle, pyridinyle, pyrimidinyle, pyrazolyle, imidazolyle, oxazolyle, isoxazolyle, oxadiazolyle, triazolyle, tétrazolyle ou encore indyle. Par "hétéroalkyl-aryle", on entend, au sens de la présente invention, un groupe alkyl-aryle tel que défini substitué par au moins un hétéroatome. Par "hétéroaralkyle", on entend, au sens de la présente invention, un groupe aralkyle tel que défini substitué par au moins un hétéroatome.

Le terme « (hétéro)aryle » désigne les groupements aryles et les groupements hétéroaryles.

Par « maléimide », on entend, au sens de la présente invention, un radical de formule suivante :

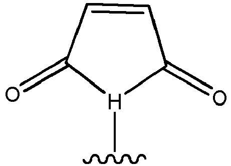

Par « thiol », on entend, au sens de la présente invention, un radical de formule -SH.

Par « alcène terminale », on entend, au sens de la présente invention, un radical de formule -CH=CH₂.

Par « aminé primaire », on entend, au sens de la présente invention, un radical de formule ―NH₂.

Par « acrylamide », on entend, au sens de la présente invention, un radical de formule :

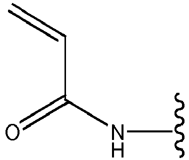

Par « méthacrylamide », on entend, au sens de la présente invention, un radical de formule

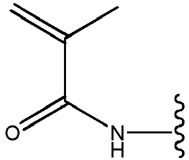

Par « (méth)acrylate », on désigne l'acrylate et le méthacrylate :

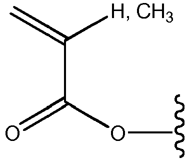

Par « azoture », on entend, au sens de la présente invention, un radical de formule :

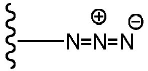

Par « alkoxyamine », on entend, au sens de la présente invention, un radical de formule : -O-N-(alkyle)₂.

Par « alkoxysilane », on entend, au sens de la présente invention, un radical de formule : -Si-(O-alkyle)₃.

Par « azodicarbonyle », on entend, au sens de la présente invention, un radical de formule -C(O)-N=N-C(O)-.

Par « nitroxyde », on entend, au sens de la présente invention, un radical de formule :

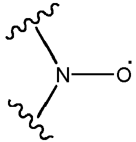

### II- COMPOSES

La présente invention a pour objet un composé de formule (I) 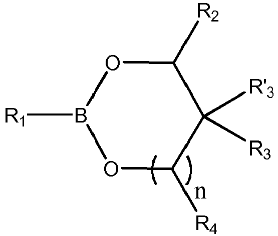 dans laquelle
n = 0 ou 1
R₁ est lié de manière covalente à l'atome de bore par un atome de carbone et représente un groupement hydrocarboné, substitué ou non, pouvant comprendre un ou des hétéroatomes ou halogènes, en particulier pouvant être substitué par au moins un radical de formule (I') 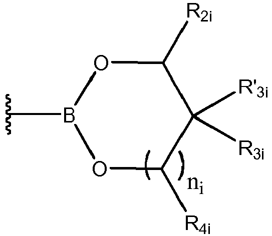
nᵢ = 0 ou 1
R₂, R₂ᵢ, R₃, R'₃, R₃ᵢ, R'₃ᵢ, R₄, R₄ᵢ, identiques ou différents, représentent un atome d'hydrogène ou un radical hydrocarboné, substitué ou non, pouvant comprendre un ou des hétéroatomes ou halogènes, ou forment ensemble, deux à deux, un cycle aliphatique ou aromatique R₂, R₂ᵢ, R₃, R'₃, R₃ᵢ, R'₃ᵢ, R₄, R₄ᵢ ne sont pas substitués par un radical de formule (I')
R₁ peut représenter un radical de formule -X, lié de manière covalente à l'atome de bore par un atome de carbone
Lorsque R₁ représente un radical de formule -X, aucun ou un de R₂, R₃, R'₃ ou R₄ représente un radical de formule -X
Lorsque R₁ ne représente pas un radical de formule -X, un de R₂, R₃, R'₃ ou R₄ représente un radical de formule -X
R'₃ = H lorsque n=0 ou lorsque R₂ ou R₄ représente un radical de formule -X
Un de R₂ᵢ, R₃ᵢ, R'₃ᵢ ou R₄ᵢ représente un radical de formule ―Xᵢ
R'₃ᵢ = H lorsque nᵢ=0 ou lorsque R₂ᵢ ou R₄, représente un radical de formule ―Xᵢ

X, Xᵢ sont choisis parmi :
- -(CH₂)ₘ-CH(R₅)-Y où Y est un radical maléimide, thiol, -NH2, acrylamide, méthacrylamide, alcène terminal, m est un entier allant de 0 à 12, R₅ est un radical hydrocarboné, substitué ou non, pouvant comprendre un ou des hétéroatomes ou halogènes ;
- -(CH₂)ₘ-R₆-Y où Y est un radical maléimide, thiol, -NH2, acrylamide, méthacrylamide, alcène terminal, m est un entier allant de 0 à 12, R₆ est un radical hydrocarboné, substitué au moins par Y, pouvant comprendre un ou des hétéroatomes ou halogènes ;
- -(CH₂)ᵣ-Y, où Y est un radical maléimide, thiol, -NH2, acrylamide, méthacrylamide, alcène terminal, r est un entier allant de 1 à 12 ;
- 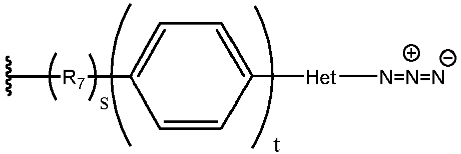 avec Het = -O-CO- ou - 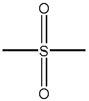 et R₇ est un radical hydrocarboné, substitué ou non, pouvant comprendre un ou des hétéroatomes ou halogènes, s vaut 0 ou 1, t vaut 0 ou 1, s+t = 1 ou 2, préférentiellement s+t=1 ;
- 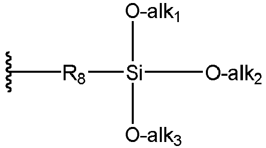 avec alk₁, alk₂, alk₃ représentant chacun, indépendamment les uns des autres, un alkyle, linéaire ou ramifié, en C₁-C₄ et R₈ est un radical hydrocarboné, substitué ou non, pouvant comprendre un ou des hétéroatomes ou halogènes ;
- 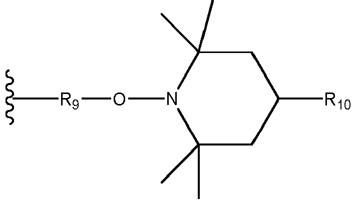 avec R₉ est un radical hydrocarboné, substitué ou non, pouvant comprendre un ou des hétéroatomes ou halogènes et R₁₀ est un atome d'hydrogène, ou un radical hydroxyle, ou un radical hydrocarboné, substitué ou non, pouvant comprendre un ou des hétéroatomes ou halogènes ; 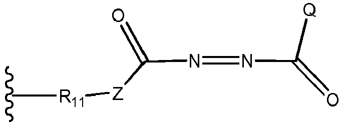 la double liaison est de configuration *cis* ou *trans,* avec R₁₁ est un radical hydrocarboné, substitué ou non, pouvant comprendre un ou des hétéroatomes ou halogènes, Z est un groupe divalent choisi parmi -O-, -S-, -NH-, Q est un radical alcoxy en C₁-C₆ ou 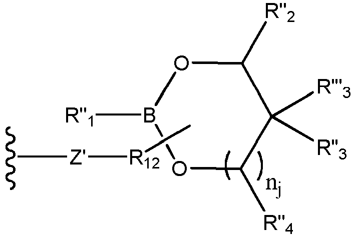 avec Z' est un groupe divalent choisi parmi -O-, -S-, -NH-, un de R"₂, R‴₃, R"₃, R"₄, R"₁ est manquant en fonction du lieu de substitution, R₁₂ est un radical hydrocarboné, substitué ou non, pouvant comprendre un ou des hétéroatomes ou halogènes, R"₁ est lié de manière covalente à l'atome de bore par un atome de carbone et représente un groupement hydrocarboné, substitué ou non, pouvant comprendre un ou des hétéroatomes ou halogènes, R"₂, R"₃, R‴₃, R"₄, identiques ou différents, représentent un atome d'hydrogène ou un radical hydrocarboné, substitué ou non, pouvant comprendre un ou des hétéroatomes ou halogènes, ou forment ensemble, deux à deux, un cycle aliphatique ou aromatique, R"₁ est lié de manière covalente à l'atome de bore par un atome de carbone et représente un groupement hydrocarboné, substitué ou non, pouvant comprendre un ou des hétéroatomes ou halogènes ;
- 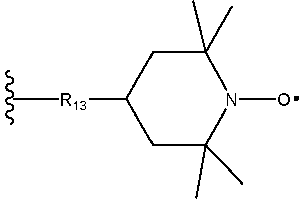 avec R₁₃ est un radical hydrocarboné, substitué ou non, X et Xᵢ portant chacun la même fonction terminale Y, azoture, alkoxysilane, alkoxyamine, azodicarbonyle ou nitroxyde ;
   Et R₁ ne peut représenter X que lorsque X répond aux définitions suivantes :
   - 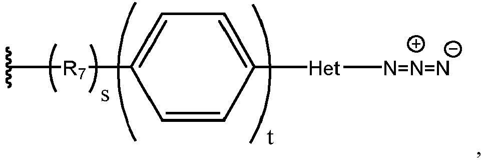 avec R₇, s, t et Het étant tels que définis précédemment ; ou
   - 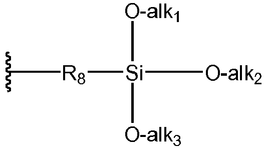 avec alk₁, alk₂, alk₃ et R₈ étant tels que définis précédemment ; ou
   - 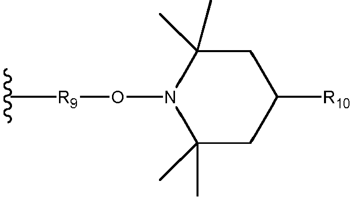 avec R⁹ et R¹⁰ étant tels que définis précédemment; ou
   - 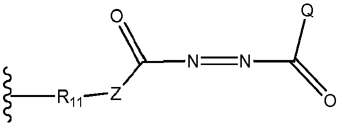 avec R¹¹, Z et Q étant tels que définis précédemment; ou
   - 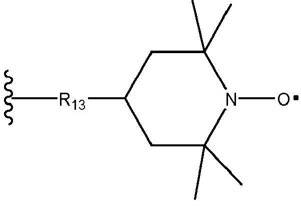 avec R¹³ étant tel que défini précédemment.

Par « substitué par au moins un radical de formule (1') », on entend que le radical R₁ est substitué par au moins un radical de formule (I'), avantageusement de 1 à 6 radicaux de formule (I'), plus avantageusement 1 ou 2 radicaux de formule (I'), encore plus avantageusement 1 seul radical de formule (I'). En présence de plusieurs radicaux de formule (I'), les radicaux R₂ᵢ, R₃ᵢ, R'₃ᵢ, R₄ᵢ répondent aux définitions données par la suite mais peuvent être différents d'un radical de formule (I') à un autre.

Dans un mode de réalisation de l'invention, les composés de formule (I) comprennent un seul cycle dioxaborolane ou dioxaborinane (dans ce cas le radical R₁ n'est pas substitué par un radical de formule (I')).

Dans un autre mode de réalisation de l'invention, les composés de formule (I) comprennent deux cycles dioxaborolane et/ou dioxaborinane (dans ce cas le radical R₁ est substitué par un seul radical de formule (I') ou le radical R1 représente X).

### Radical R₁

Le radical R₁ est toujours lié de manière covalente à l'atome de bore par un atome de carbone. Dans une variante, le radical R₁ ne représente pas X.

R₁ peut en particulier représenter un cycle permettant ainsi la présence de plusieurs radicaux de formule (I'), éventuellement sur chaque atome de carbone du cycle ou une chaîne hydrocarbonée permettant la présence de plusieurs radicaux de formule (I'), éventuellement sur différents atomes de carbone de la chaîne.

R₁ est avantageusement un groupe alkyle, aryle, aralkyle, alkyle-aryle ou cycloalkyle , chacun de ces groupes peut également comprendre des hétéroatomes tels que O, N, S, ou Si.

En particulier, le radical R₁ peut contenir des hétéroatomes, en particulier choisis parmi O, N, S ou Si, et/ou peut être substitué. En particulier, ce radical peut être substitué par des groupes fonctionnels, tels que des fonctions ester ou amide ou (méth)acrylate ou styrène, ou un (des) composé(s) de formule (I'). En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. En particulier, ce radical peut être interrompu par des fonctions ester, amide, éther, thioéther, amine secondaire ou tertiaire, carbonate, uréthane, carbamide, anhydride.

Dans une variante avantageuse, R₁ représente un groupement aryle ou hétéroaryle, substitué ou non substitué. Plus avantageusement le radical R₁ est un radical aryle ou hétéroaryle non substitué ou substitué de 1 à 3 fois. Encore, plus avantageusement le radical R₁ est un radical aryle non substitué ou substitué de 1 à 3 fois. En particulier, ce radical peut être substitué par des groupes fonctionnels, tels que des fonctions ester ou amide ou (méth)acrylate ou styrène, ou un (des) composé(s) de formule (I'). En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀, avantageusement en C₁-C₁₈, plus avantageusement en C₁-C₁₂. Ce radical comprend avantageusement 0, 1, 2, 3 substituants.

Avantageusement, R₁ représente un cycle benzénique, un cycle naphtalénique, un groupe arylaliphatique composé de deux cycles benzéniques reliés par un groupe alcanediyle en C₁-C₆, un cycle pyridine, un cycle pyrimidine, un cycle triazine. De tels cycles sont non substitués ou substitués de 1 à 3 fois. Encore, plus avantageusement le radical R₁ est un radical benzénique non substitué ou substitué de 1 à 3 fois. Encore, plus avantageusement le radical R₁ est un radical benzénique non substitué ou substitué une fois. Dans une variante, R₁ est substitué par des groupes fonctionnels, tels que des fonctions ester ou amide ou (méth)acrylate ou styrène. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂. Dans une autre variante, R₁ est substitué par un composé de formule (I').

Dans une autre variante, R₁ est substitué par un ou des groupes fonctionnels tels que décrit précédemment et par un composé de formule (I'). Avantageusement, lorsque le radical R₁ est substitué une fois, il est substitué par un composé de formule (I'). Encore plus avantageusement, lorsque le radical R₁ est substitué par composé de formule (I'), les deux groupements dioxaborolane ou dioxaborinane sont situés en para l'un de l'autre sur le cycle, avantageusement le cycle benzénique.

Dans une autre variante, R₁ n'est pas substitué. Encore plus avantageusement, le radical R₁ représente un cycle benzénique non substitué.

Dans une autre variante, le radical R1 représente X. Dans cette variante, X répond aux définitions suivantes : 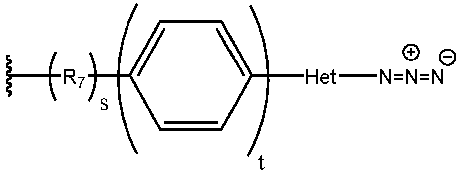
, avec R₇, s, t et Het étant tels que définis précédemment ; ou 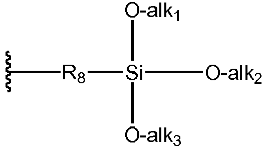
avec alk₁, alk₂, alk₃ et R₈ étant tels que définis précédemment ; ou 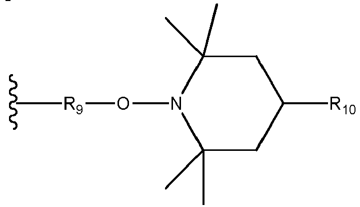
avec R₉ et R₁₀ étant tels que définis précédemment ; ou 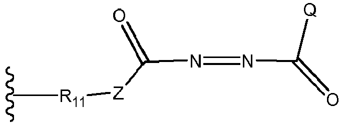
avec R₁₁, Z et Q étant tels que définis précédemment, la double liaison pouvant être de configuration *cis* ou *trans* ; ou 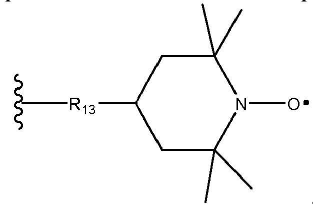
avec R₁₃ étant tel que défini précédemment.

### Radicaux R₂, R₃, R'₃,_R₄ et R₂ᵢ, R₃ᵢ, R'₃ᵢ, R₄ᵢ,

Lorsque R₁ est différent de X, un de R₂, R₃, R'₃, R₄ représente X. Lorsque R₁ représente X, aucun ou un de R₂, R₃, R'₃, R₄ représente X. Les autres, identiques ou différents, représentent avantageusement un atome d'hydrogène ou un radical hydrocarboné non substitué

Lorsque le radical de formule (I') est présent, un de R₂ᵢ, R₃ᵢ, R'₃ᵢ, R₄ᵢ représente Xi, les autres identiques ou différents, représentent avantageusement un atome d'hydrogène ou un radical hydrocarboné non substitué.

Lorsqu'ils ne représentent pas X ou Xᵢ, R₂, R₂ᵢ, R₃, R₃ᵢ, R'₃, R'₃ᵢ, R₄, R₄ᵢ représentent avantageusement un atome d'hydrogène, un groupe alkyle, alcényle, aryle, cycloalkyle, hétéroaryle, hétéroalkyle, hétérocycloalkyle, chacun de ces groupes pouvant être substitués, ou ces radicaux forment ensemble, deux à deux, un (hétéro)cycloalkyle ou un (hétéro)aryle. Les substituants possibles sont avantageusement choisis parmi un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂.

Lorsqu'ils ne représentent pas X ou Xᵢ, R₂, R₂ᵢ, R₃, R₃ᵢ, R'₃, R'₃ᵢ, R₄, R₄ᵢ représentent avantageusement un atome d'hydrogène, un groupe alkyle, alcényle, aryle, cycloalkyle, hétéroaryle, hétéroalkyle, hétérocycloalkyle, chacun de ces groupes n'étant pas substitués, ou ces radicaux forment ensemble, deux à deux, un (hétéro)cycloalkyle ou un (hétéro)aryle.

Lorsqu'ils ne représentent pas X ou Xᵢ, R₂, R₂ᵢ, R₃, R₃ᵢ, R₄, R₄ᵢ représentent avantageusement un atome d'hydrogène.

Lorsqu'ils ne représentent pas X ou Xᵢ, R'₃, R'₃ᵢ, identiques ou différents, représentent avantageusement H ou -CH₃.

Dans un mode de réalisation, R₃ représente X et R'₃ représente H ou -CH₃. Le cas échéant, R₃ᵢ représente Xᵢ et R'₃ᵢ représente H ou -CH₃.

### Radicaux ―X et Xᵢ :

Avantageusement, les radicaux X et Xᵢ sont identiques.

R₅ représente avantageusement H ou un radical hydrocarboné non substitué.

R₅ représente avantageusement un atome d'hydrogène, un groupe alkyle, alcényle, aryle, cycloalkyle, hétéroaryle, hétéroalkyle, hétérocycloalkyle, chacun de ces groupes pouvant être substitués. Les substituants possibles sont avantageusement choisis parmi un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂.

R₅ représente avantageusement un atome d'hydrogène, un groupe alkyle, alcényle, aryle, cycloalkyle, hétéroaryle, hétéroalkyle, hétérocycloalkyle, chacun de ces groupes n'étant pas substitué. R₅ représente avantageusement H.

R₆ est un radical divalent. Il représente avantageusement un radical hydrocarboné substitué au moins par Y.

R₆ représente avantageusement un groupe (hétéro)alcanediyle, (hétéro)alcènediyle, (hétéro)aryle, (hétéro)cycloalkyle. R₆ représente avantageusement un groupe alcanediyle en C₁-C₆.

Outre Y, R₆ peut être substitué. Les substituants possibles sont avantageusement choisis parmi un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂.

Avantageusement, R₆ n'est substitué que par Y.

Avantageusement, lorsque R₁ est X, s vaut 0.

Avantageusement, r varie de 1 à 4. Avantageusement, r=1 ou r=4.

Avantageusement, m varie de 0 à 4. Avantageusement, m = 0.

### Maléimide :

Dans une variante, X, Xᵢ représentent un radical portant une fonction maléimide.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
un de R₂, R₃, R'₃ ou R₄ représente un radical de formule -X ; R₁ ne représente pas un radical de formule -X ;
lorsqu'ils sont présents, un de R₂ᵢ, R₃ᵢ, R'₃₁ ou R₄ᵢ représente un radical de formule ―Xᵢ ;
X, Xᵢ représentent, indépendamment l'un de l'autre, un radical choisi parmi :
   - -(CH₂)ₘ-CH(R₅)-Y où Y est un radical maléimide ;
   - -(CH₂)ₘ-R₆-Y où Y est un radical maléimide ;
   - -(CH₂)ᵣ-Y, où Y est un radical maléimide ;
où m, r, les radicaux R₅, R₆ sont tels que définis précédemment.

Lorsque R₁ est substitué par un radical de formule (I'), R₁ est avantageusement interrompu par des fonctions, tel que défini précédemment.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

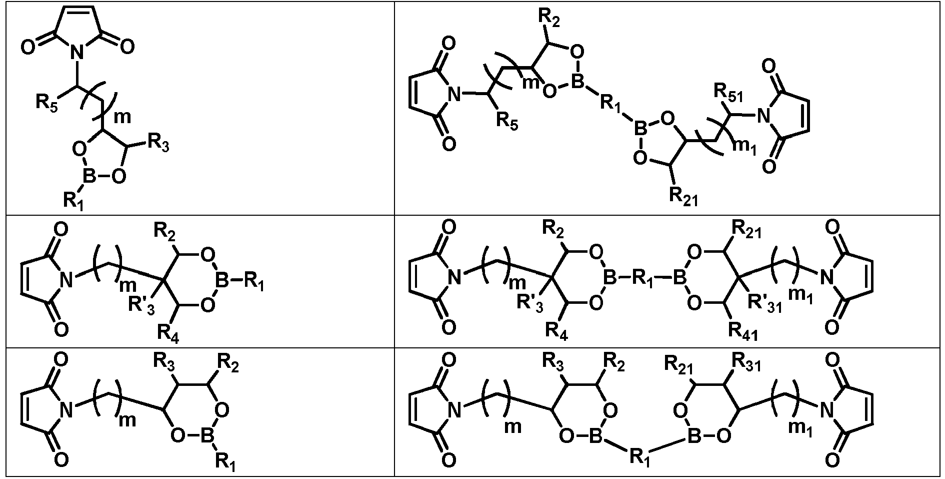

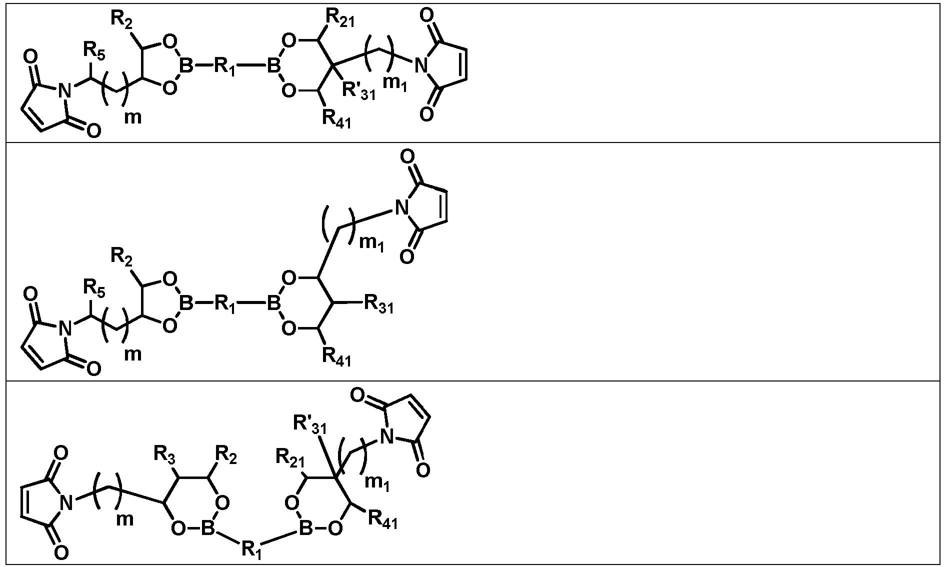

m, R₁, R₂, R₂₁, R₃, R'₃, R₃₁, R'₃₁, R₄, R₄₁, R₅, ayant la même définition que précédemment avec i=1 .

Avantageusement, R'₃, R'₃₁ représentent H ou CH₃.
R₅₁ répond à la même définition que celle donnée pour R₅ précédemment
m₁ répond à la même définition que celle donnée pour m précédemment

### Thiol :

Dans une variante, X, Xᵢ représentent un radical portant une fonction thiol.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
un de R₂, R₃, R'₃ ou R₄ représente un radical de formule -X ; R₁ ne représente pas un radical de formule -X ;
lorsqu'ils sont présents, un de R₂ᵢ, R₃ᵢ, R'₃ᵢ ou R₄ᵢ représente un radical de formule -X; ;
X, Xᵢ représentent, indépendamment l'un de l'autre, un radical choisi parmi :
   - -(CH₂)ₘ-CH(R₅)-Y où Y est un radical thiol ;
   - -(CH₂)ₘ-R₆-Y où Y est un radical thiol ;
   - -(CH₂)ᵣ-Y, où Y est un radical thiol ;
où m, r, les radicaux R₅, R₆ sont tels que définis précédemment.

Lorsque R₁ est substitué par un radical de formule (I'), R₁ est avantageusement interrompu par des fonctions, tel que défini précédemment.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

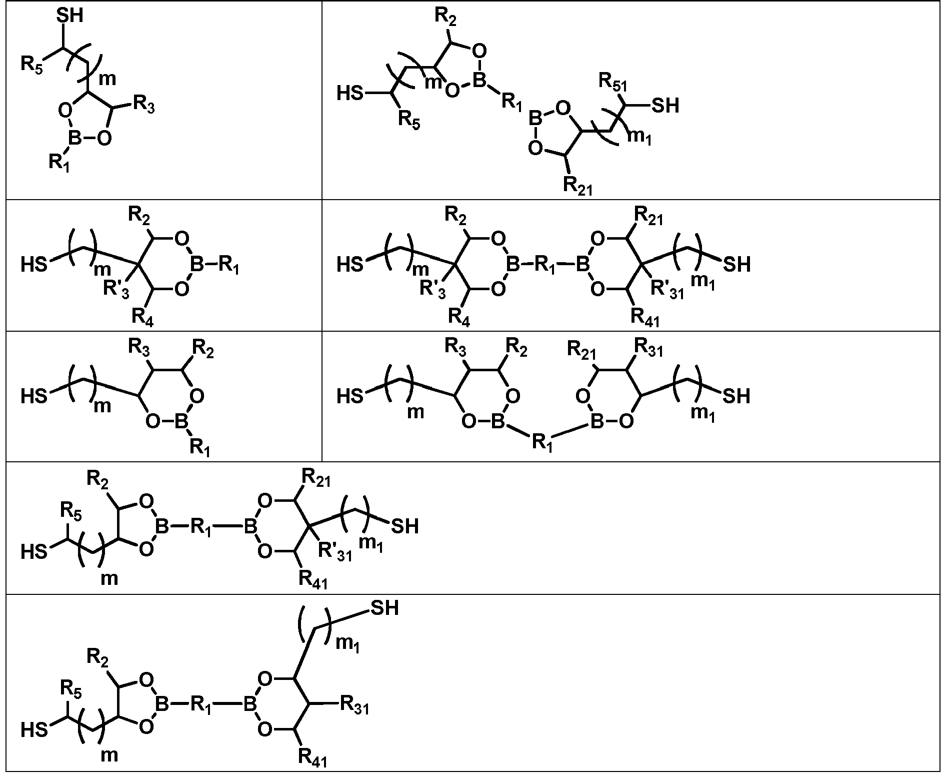

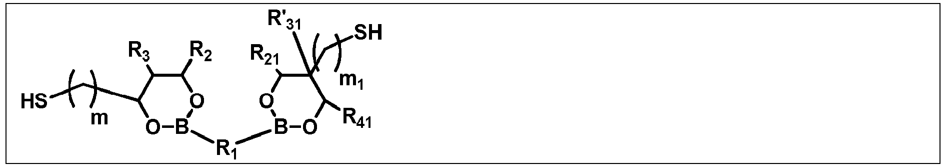

m, R₁, R₂, R₂₁, R₃, R'₃, R₃₁, R'₃₁, R₄, R₄₁, R₅, ayant la même définition que précédemment avec i=1

Avantageusement, R'₃, R'₃₁ représentent H ou CH₃.
R₅₁ répond à la même définition que celle donnée pour R₅ précédemment
m₁ répond à la même définition que celle donnée pour m précédemment

### Alcène terminal :

Dans une variante, X, Xᵢ représentent un radical portant une fonction alcène terminale.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
un de R₂, R₃, R'₃ ou R₄ représente un radical de formule -X ; R₁ ne représente pas un radical de formule -X ;
lorsqu'ils sont présents, un de R₂ᵢ, R₃ᵢ, R'₃ᵢ ou R₄ᵢ représente un radical de formule ―Xᵢ ;
X, Xᵢ représentent, indépendamment l'un de l'autre, un radical choisi parmi :
   - -(CH₂)ₘ-CH(R₅)-Y où Y est un radical alcène terminale ;
   - -(CH₂)ₘ-R₆-Y où Y est un radical alcène terminale ;
   - -(CH₂)ᵣ-Y, où Y est un radical alcène terminale ;
où m, r, les radicaux R₅, R₆ sont tels que définis précédemment.

Lorsque R₁ est substitué par un radical de formule (I'), R₁ est avantageusement interrompu par des fonctions, tel que défini précédemment.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

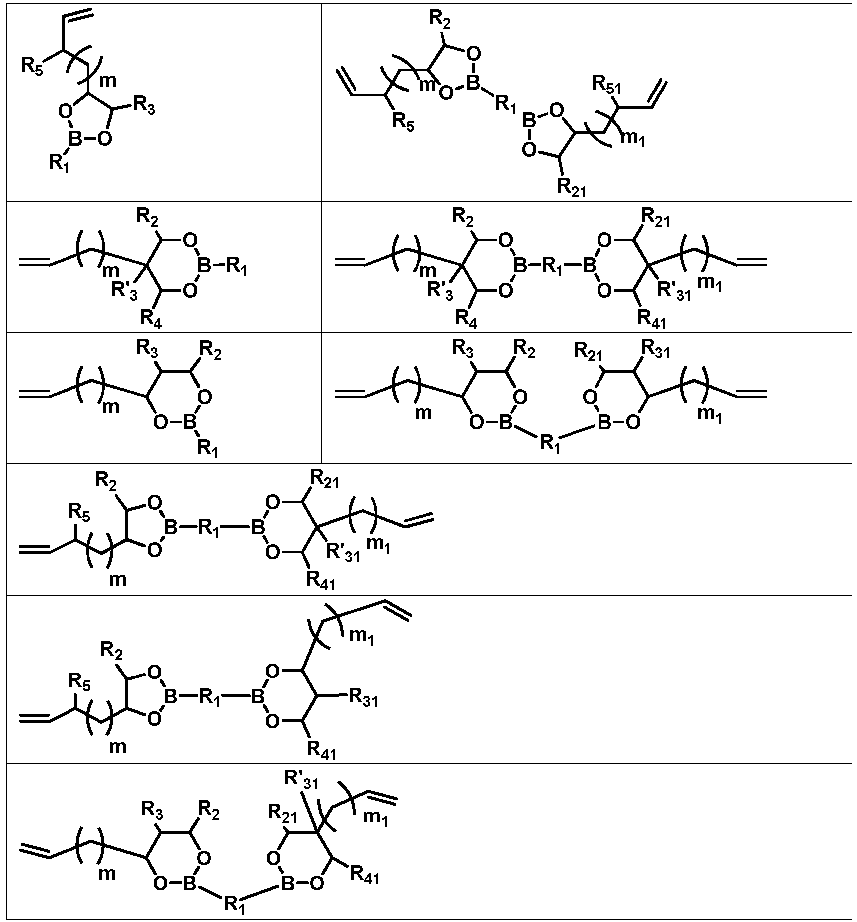

m, R₁, R₂, R₂₁, R₃, R'₃, R₃₁, R'₃₁, R₄, R₄₁, R₅, ayant la même définition que précédemment avec i=1

Avantageusement, R'₃, R'₃₁ représentent H ou CH₃.
R₅₁ répond à la même définition que celle donnée pour R₅ précédemment
m₁ répond à la même définition que celle donnée pour m précédemment

### Azoture

Dans une variante, X, Xᵢ représentent un radical portant une fonction azoture.

Dans cette variante, les composés de l'invention répondent à la formule (I) dans laquelle :
n, nᵢ, les radicaux R₁, R₂, R₂ᵢ, R₃, R'₃, R₃ᵢ, R'₃ᵢ, R₄, R₄ᵢ, sont tels que définis précédemment ;
aucun ou un de R₂, R₃, R'₃ ou R₄ représente un radical de formule -X ;
R₁ peut représenter un radical de formule -X, lié de manière covalente à l'atome de bore par un atome de carbone
X, Xᵢ représentent, indépendamment l'un de l'autre, un radical choisi parmi : 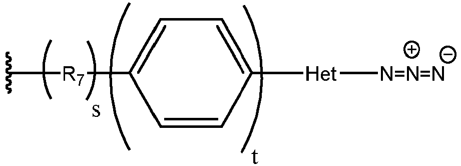 avec Het = -O-CO- ou - 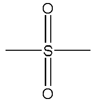 et R₇ est un radical hydrocarboné, substitué ou non, pouvant comprendre un ou des hétéroatomes ou halogènes, s vaut 0 ou 1, t vaut 0 ou 1, s+t = 1 ou 2, préférentiellement s+t=1.

R₇ est avantageusement un groupe alcanediyle, alcènediyle, aryle, alkyle-aryle, aralkyle ou cycloalkyle, chacun de ces groupes peut également comprendre des hétéroatomes tels que O, N, S, ou Si.

En particulier, le radical R₇ peut contenir des hétéroatomes, en particulier choisis parmi O, N, S ou Si, et/ou peut être substitué. En particulier, ce radical peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -OC(O)-Rz, -O-C(O)-O-Rz, -O-C(O)-N(H)-Rz, -N(H)-C(O)-O-Rz, -O-Rz, -S-Rz, -C(O)-N(H)-Rz, - N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂. En particulier, ce radical peut être interrompu par des fonctions ester, amide, éther, thioéther, amine secondaire ou tertiaire, carbonate, uréthane, carbamide, anhydride.

Encore plus avantageusement, le radical R₇ représente une chaine alcanediyle saturée linéaire comprenant de 1 à 6 carbones, plus avantageusement de 1 à 4 carbones, encore plus avantageusement 1 ou 4 carbones, encore plus avantageusement 1 carbone.

Encore plus avantageusement, lorsque R₁ est X alors s =0 et t=1 .

Avantageusement, lorsque R₂, R₂ᵢ, R₃, R'₃, R₃ᵢ, R'₃ᵢ, R₄, R₄ᵢ, sont X, Xᵢ, alors s =1 et t=0.

Dans une variante, le composé comprend un radical X : un de R₁, R₂, R₃, R'₃ ou R₄ représente X.

Dans une autre variante, le composé comprend deux radicaux X : R₁ représente X et un de R₂, R₃, R'₃ ou R₄ représente X.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

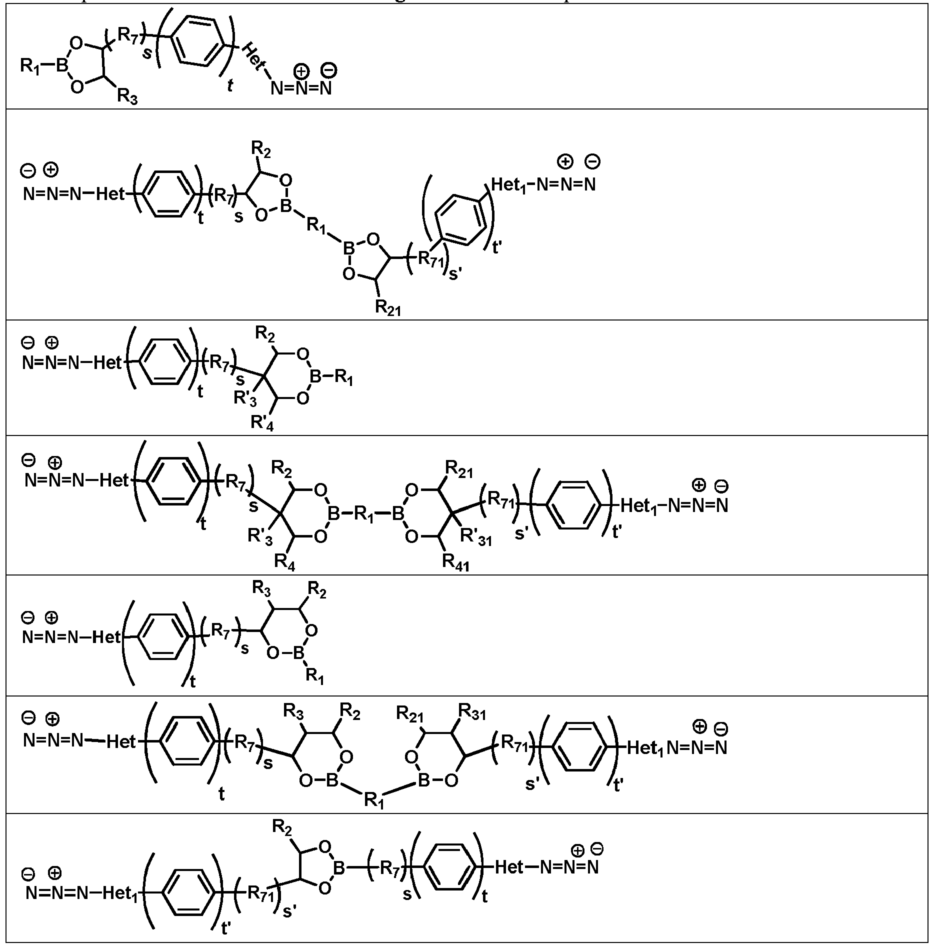

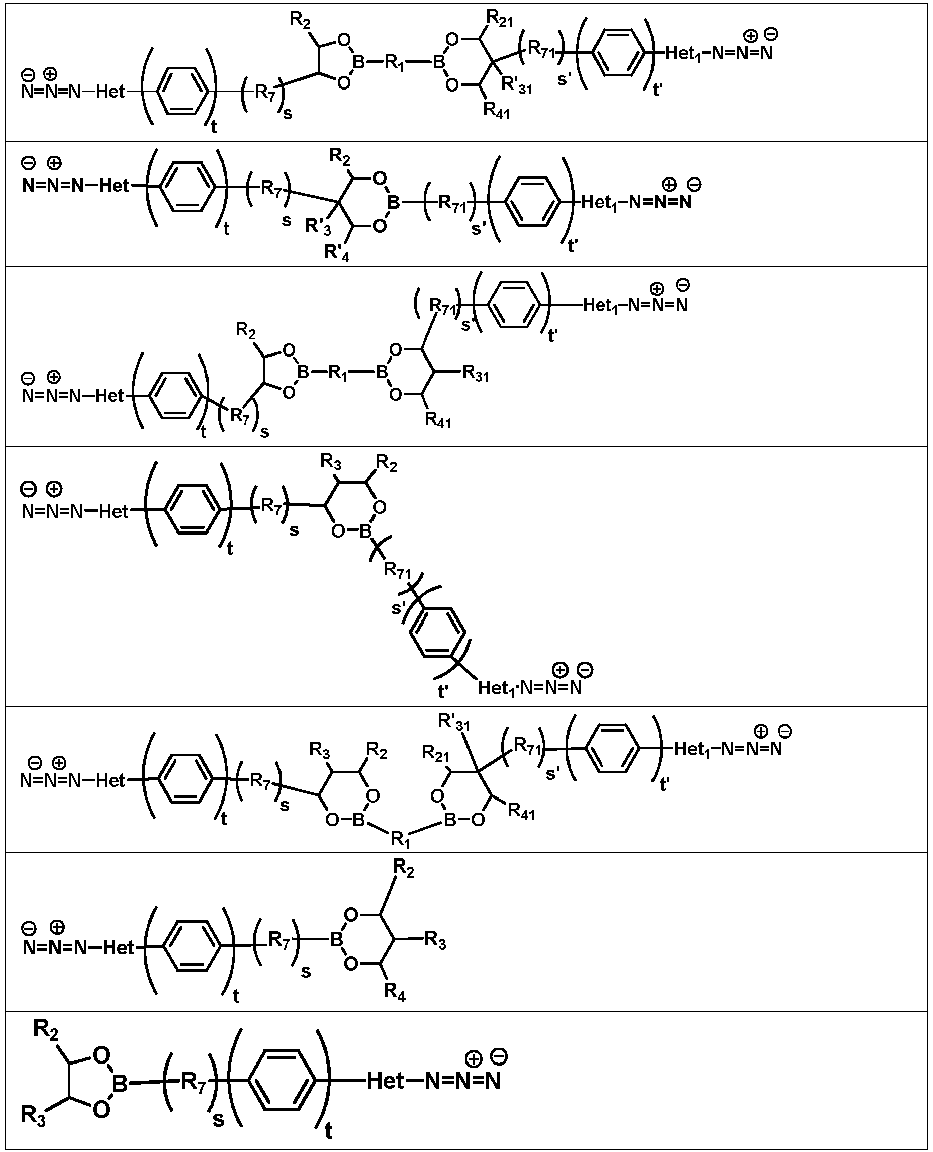

R₁, R₂, R₂₁, R₃, R'₃, R₃₁, R'₃₁, R₄, R₄₁, R₇, Het, s et t ayant la même définition que précédemment avec i=1
s' vaut 0 ou 1, t' vaut 0 ou 1, s'+t' = 1 ou 2, préférentiellement s'+t'=1;

Avantageusement, R'₃, R'₃₁ représentent H ou CH₃.
R₇₁ répond à la même définition que celle donnée pour R₇ précédemment
Het₁ répond à la même définition que celle donnée pour Het précédemment
m₁ répond à la même définition que celle donnée pour m précédemment

Ces nouveaux composés peuvent avantageusement être utilisés en alternative aux composés décrits dans WO2015/067531 pour fonctionnaliser des polymères.

### Alkoxysilane :

Dans une variante, X, Xᵢ représentent un radical portant une fonction alkoxysilane.

Dans cette variante, les composés de l'invention répondent à la formule (I) dans laquelle :
n, nᵢ, les radicaux R₁, R₂, R_{2;}, R₃, R'₃, R₃ᵢ, R'₃ᵢ, R₄, R₄ᵢ, sont tels que définis précédemment ;
aucun ou un de R₂, R₃, R'₃ ou R₄ représente un radical de formule -X ;
R₁ peut représenter un radical de formule -X, lié de manière covalente à l'atome de bore par un atome de carbone
X, Xᵢ représentent, indépendamment l'un de l'autre, un radical choisi parmi : 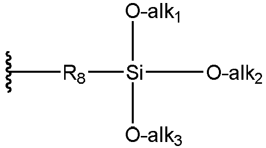 avec alk₁, alk₂, alk₃ représentant chacun, indépendamment les uns des autres, un alkyle, linéaire ou ramifié, en C₁-C₄ et R₈ est un radical hydrocarboné, substitué ou non, pouvant comprendre un ou des hétéroatomes ou halogènes

R₈ est avantageusement un groupe alcanediyle, alcènediyle, aryle, alkyle-aryle, aralkyle ou cycloalkyle, chacun de ces groupes peut également comprendre des hétéroatomes tels que O, N, S, ou Si.

En particulier, le radical R₈ peut contenir des hétéroatomes, en particulier choisis parmi O, N, S ou Si, et/ou peut être substitué. En particulier, ce radical peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -OC(O)-Rz, -O-C(O)-O-Rz, -O-C(O)-N(H)-Rz, -N(H)-C(O)-O-Rz, -O-Rz, -S-Rz, -C(O)-N(H)-Rz, - N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂. En particulier, ce radical peut être interrompu par des fonctions ester, amide, éther, thioéther, amine secondaire ou tertiaire, carbonate, uréthane, carbamide, anhydride, en particulier uréthane.

Plus avantageusement, R₈ est une chaîne alcanediyle, alcènediyle linéaire interrompue par une fonction uréthane. Encore plus avantageusement, le radical R₈ représente une chaine alcanediyle, alcènediyle linéaire interrompue par une fonction uréthane, comprenant de 1 à 6 atomes de carbone, avantageusement de 1 à 4 atomes de carbone, entre un des atomes de carbone du cycle dioxaborolane ou dioxaborinane et l'atome d'oxygène de la fonction uréthane et de 1 à 6 atomes de carbone, avantageusement de 2 à 4 atomes de carbone, entre l'atome d'azote de la fonction uréthane et l'atome de silicium de la fonction alkoxysilane. Encore plus avantageusement, le radical R₈ représente une chaine alcanediyle, alcènediyle linéaire contenant une fonction uréthane avec un radical -CH₂- ou - (CH₂)₄- reliant un carbone du cycle dioxaborolane ou dioxaborinane et l'atome d'oxygène de la fonction uréthane et un radical -(CH₂)₃- reliant l'azote de la fonction uréthane et l'atome de silicium de la fonction alkoxysilane.

Dans une autre variante, R₈ est un radical alkyle-aryle interrompu par une fonction uréthane, en particulier un radical (alkyle en C₁-C₆)-aryle interrompu par une fonction uréthane. Le radical R₈ peut également représenter un radical alkyle-aryle contenant une fonction uréthane avec un radical -(C₆H₄)-reliant le bore du cycle dioxaborolane ou dioxaborinane et l'atome d'oxygène de la fonction uréthane et un radical -(CH₂)₃- reliant l'azote de la fonction uréthane et l'atome de silicium de la fonction alkoxysilane.

Dans une autre variante, le radical R₈ représente une chaîne alcanediyle, alcènediyle e linéaire interrompue par une fonction thioéther et par une fonction choisie parmi une fonction amide ou une fonction ester, et l'alcanediyle ou l'alcènediyle contient 2 atomes de carbone entre l'atome de soufre de la fonction thioéther et le carbone de la fonction carbonyle de l'amide ou de l'ester. Avantageusement, le radical R₈ comprend au total de 5 à 12 atomes de carbone, encore plus avantageusement de 7 à 10 atomes de carbone, avec de 1 et 4 atomes de carbone entre un atome de carbone du cycle dioxaborolane ou dioxaborinane et la fonction thioéther. Encore plus avantageusement, le radical R₈ représente une chaine alcanediyle, alcènediyle linéaire contenant au total de 5 à 10 atomes de carbone, avantageusement 7 atomes de carbone, une fonction thioéther et une fonction amide ou ester, l'atome de soufre de la fonction thioéther et le carbone de la fonction carbonyle de l'amide ou de l'ester étant séparés par un radical -(CH₂)₂-.

Dans une autre variante, le radical R₈ représente une chaine alcanediyle, alcènediyle linéaire contenant une fonction thioéther et entre 3 et 8 atomes de carbone, encore plus avantageusement entre 4 et 8 atomes de carbone et encore plus avantageusement entre 4 et 7 atomes de carbone.

Dans une autre variante, le radical R₈ représente une chaine alcanediyle, alcènediyle linéaire contenant de 5 à 10 atomes de carbone, avantageusement 7 atomes de carbone, et trois fonctions : une fonction éther, une fonction thioéther et une fonction alcool.

Avantageusement, alk₁, alk₂, alk₃ représentant chacun, indépendamment les uns des autres, un radical méthyle, éthyle, isopropyle, t-butyle. En particulier, alk₁, alk₂, alk₃ représentant chacun, indépendamment les uns des autres, un radical méthyle ou éthyle. En particulier, alk₁, alk₂, alk₃ représentant chacun, indépendamment les uns des autres, un radical méthyle ou éthyle et au moins un de alk₁, alk₂, alk₃ est méthyle et au moins un de alk₁, alk₂, alk₃ est éthyle.

Dans une variante, le composé comprend un radical X : un de R₁, R₂, R₃, R'₃ ou R₄ représente X.

Dans une autre variante, le composé comprend deux radicaux X : R₁ représente X et un de R₂, R₃, R'₃ ou R₄ représente X.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ #n.

Les composés selon l'invention sont avantageusement choisis parmi :

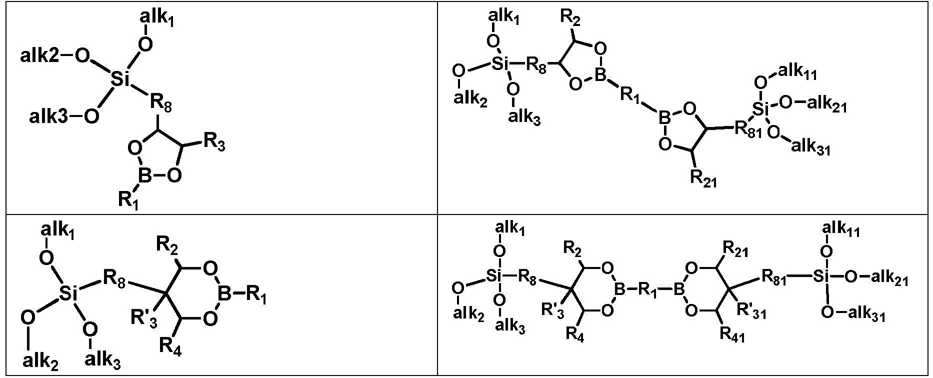

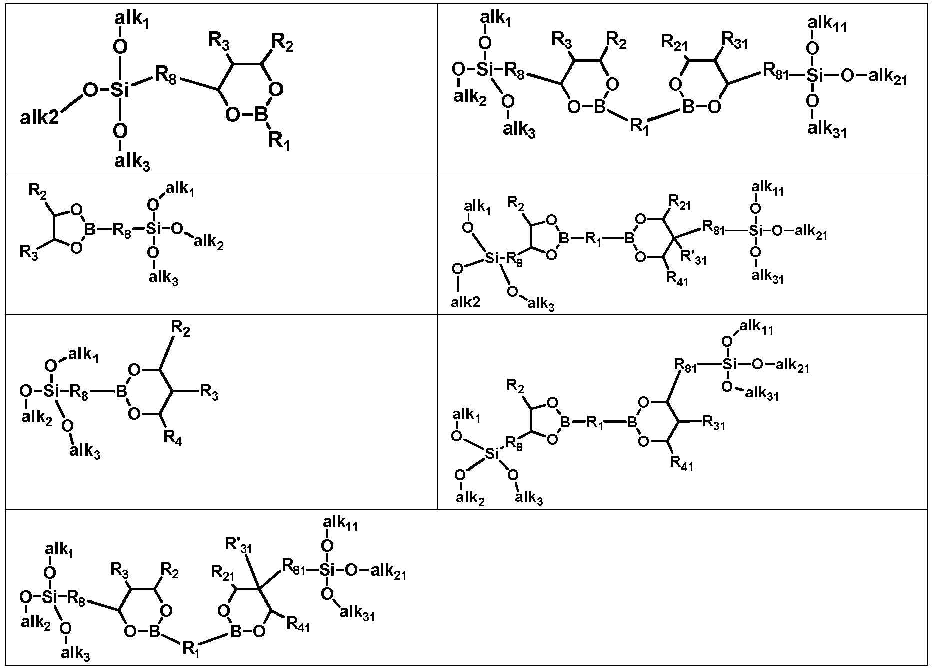

R₁, R₂, R₂₁, R₃, R'₃, R₃₁, R'₃₁, R₄, R₄ᵢ, R₈, Het, alk₁, alk₂, alk₃ ayant la même définition que précédemment avec i=1

Avantageusement, R'₃, R'₃₁ représentent H ou CH₃.
R₈₁ répond à la même définition que celle donnée pour R₈ précédemment
alk₁₁, alk₂₁, allk₃₁ identiques ou différents, répondent à la même définition que celle donnée pour alk₁, alk₂, alk₃ précédemment

Par ces composés, on propose de nouveaux agents de couplage à base de silane, qui peuvent être utilisés dans toutes les applications décrites pour ces agents de couplage.

### Aminé :

Dans une variante, X, Xᵢ représentent un radical portant une fonction amine primaire.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
un de R₂, R₃, R'₃ ou R₄ représente un radical de formule -X ; R₁ ne représente pas un radical de formule -X
X, Xᵢ représentent, indépendamment l'un de l'autre, un radical choisi parmi :
   - -(CH₂)ₘ-CH(R₅)-Y où Y est un radical -NH₂, m est un entier allant de 0 à 12, R₅ est un radical hydrocarboné, substitué ou non, pouvant comprendre un ou des hétéroatomes ou halogènes ;
   - -(CH₂)ₘ-R₆-Y où Y est un radical -NH₂, m est un entier allant de 0 à 12, R₆ est un radical hydrocarboné, substitué au moins par Y, pouvant comprendre un ou des hétéroatomes ou halogènes ;
   - -(CH₂)ᵣ-Y, où Y est un radical -NH₂, r est un entier allant de 0 à 12
où m, r, les radicaux R₅, R₆ sont tels que définis précédemment.

Lorsque R₁ est substitué par un radical de formule (I'), R₁ est avantageusement interrompu par des fonctions, tel que défini précédemment.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

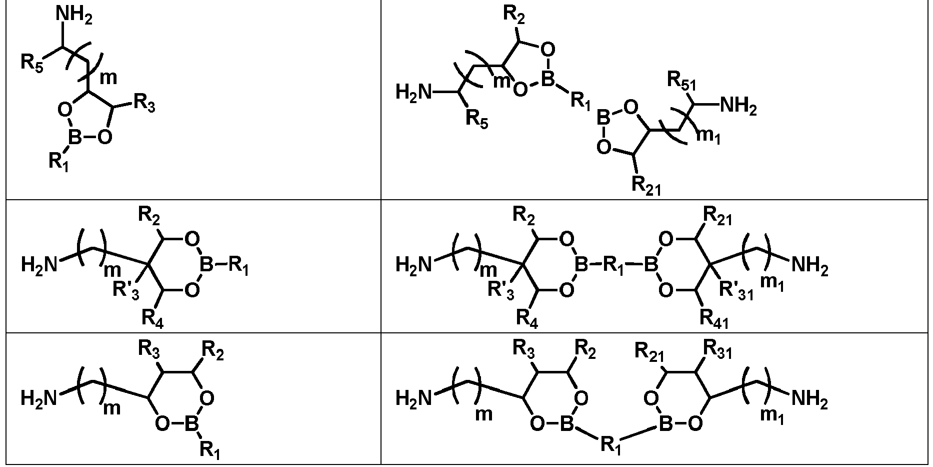

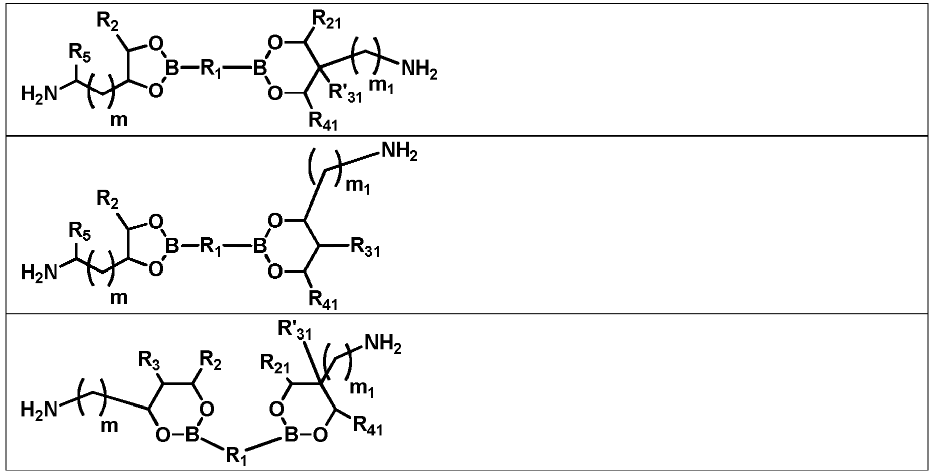

m, R₁, R₂, R₂₁, R₃, R'₃, R₃₁, R'₃₁, R₄, R₄₁, R₅, ayant la même définition que précédemment avec i=1

Avantageusement, R'₃, R'₃₁ représentent H ou CH₃.
R₅₁ répond à la même définition que celle donnée pour R₅ précédemment
m₁ répond à la même définition que celle donnée pour m précédemment

### Acrylamide/méthacrylamide :

Dans une variante, X, Xᵢ représentent un radical portant une fonction acrylamide ou méthacrylamide.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
un de R₂, R₃, R'₃ ou R₄ représente un radical de formule ―X ; R₁ ne représente pas un radical de formule -X
X, Xᵢ représentent, indépendamment l'un de l'autre, un radical choisi parmi :
   - -(CH₂)ₘ-CH(R₅)-Y où Y est un radical acrylamide ou méthacrylamide, m est un entier allant de 0 à 12, R₅ est un radical hydrocarboné, substitué ou non, pouvant comprendre un ou des hétéroatomes ou halogènes ;
   - -(CH₂)ₘ-R₆-Y où Y est un radical acrylamide ou méthacrylamide, m est un entier allant de 0 à 12, R₆ est un radical hydrocarboné, substitué au moins par Y, pouvant comprendre un ou des hétéroatomes ou halogènes ;
   - -(CH₂)ᵣ-Y, où Y est un radical acrylamide ou méthacrylamide, r est un entier allant de 0 à 12
où m, r, les radicaux R₅, R₆ sont tels que définis précédemment.

Lorsque R₁ est substitué par un radical de formule (I'), R₁ est avantageusement interrompu par des fonctions, tel que défini précédemment.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

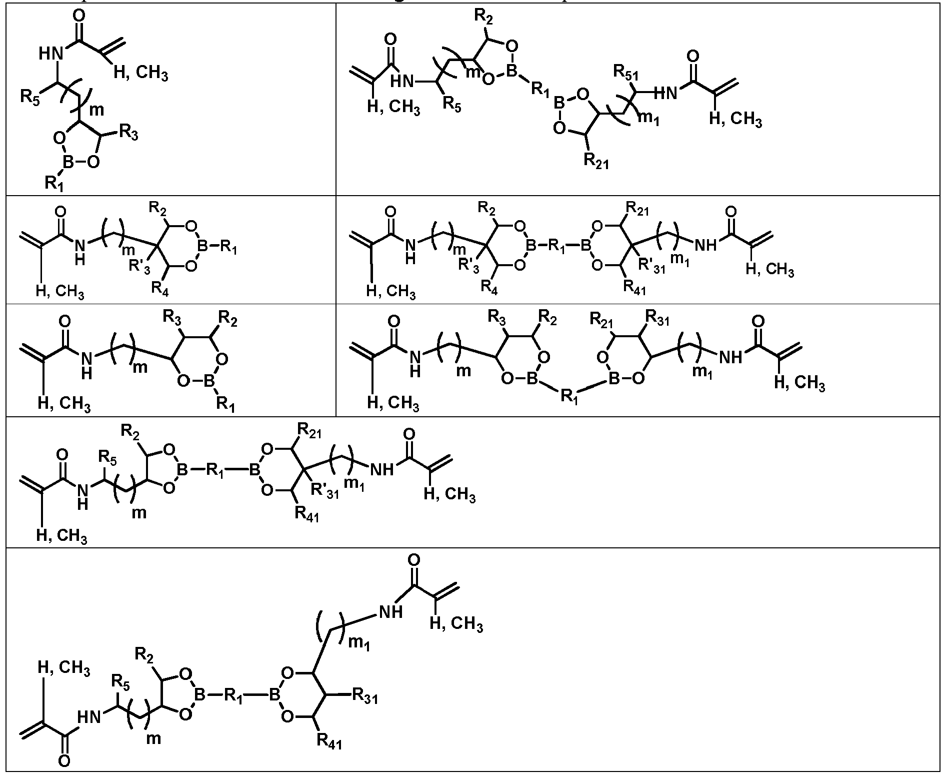

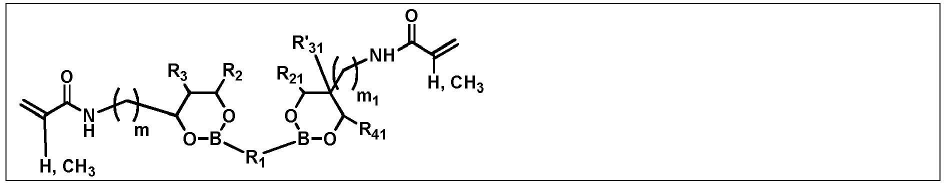

m, R₁, R₂, R₂₁, R₃, R'₃, R₃₁, R'₃₁, R₄, R₄₁, R₅, ayant la même définition que précédemment avec i=1

Avantageusement, R'₃, R'₃₁ représentent H ou CH₃.
R₅₁ répond à la même définition que celle donnée pour R₅ précédemment
m₁ répond à la même définition que celle donnée pour m précédemment

### Alkoxyamines :

Dans une variante, X, Xᵢ représentent un radical portant un radical alkoxyamine.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
aucun ou un de R₂, R₃, R'₃ ou R₄ représente un radical de formule -X ;
R₁ peut représenter un radical de formule -X, lié de manière covalente à l'atome de bore par un atome de carbone
X, Xᵢ représentent, indépendamment l'un de l'autre, un radical 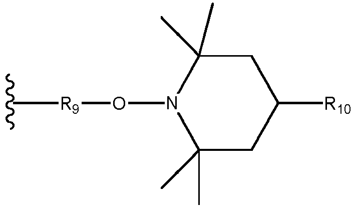 avec R₉ est un radical hydrocarboné, substitué ou non, pouvant comprendre un ou des hétéroatomes ou halogènes et R₁₀ est un atome d'hydrogène, ou un radical hydroxyle, ou un radical hydrocarboné, substitué ou non, pouvant comprendre un ou des hétéroatomes ou halogènes.

R₉ est avantageusement un groupe alcanediyle, alcènediyle, aryle, alkyle-aryle, aralkyle ou cycloalkyle, chacun de ces groupes peut également comprendre des hétéroatomes tels que O, N, S, ou Si.

En particulier, le radical R₉ peut contenir des hétéroatomes, en particulier choisis parmi O, N, S ou Si, et/ou peut être substitué. En particulier, ce radical peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -OC(O)-Rz, -O-C(O)-O-Rz, -O-C(O)-N(H)-Rz, -N(H)-C(O)-O-Rz, -O-Rz, -S-Rz, -C(O)-N(H)-Rz, - N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂. En particulier, ce radical peut être interrompu par des fonctions ester, amide, éther, thioéther, amine secondaire ou tertiaire, carbonate, uréthane, carbamide, anhydride.

Avantageusement, le radical R₉ représente un des radicaux suivants:

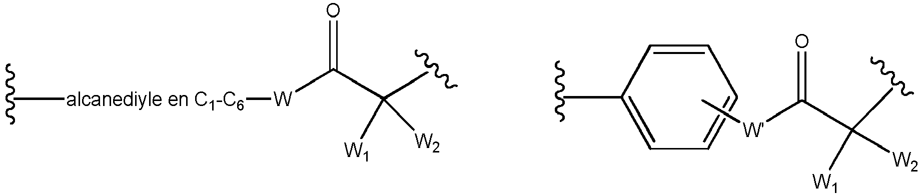

Avec W représente O, NH ou S, W' représente O ou NH, W₁ représente un alkyle en C₁-C₄, avantageusement CH₃, W₂ représente H ou un alkyle en C₁-C₄, avantageusement H ou CH₃, les substituants du cycle benzénique étant en positions en méta ou para

Encore plus avantageusement, le radical R₉ représente un des radicaux suivants:

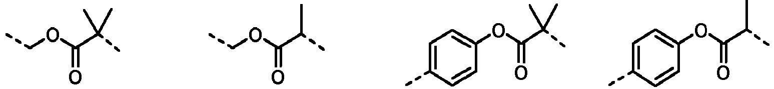

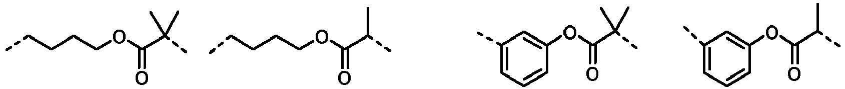

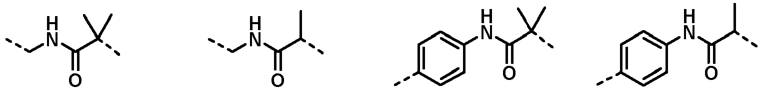

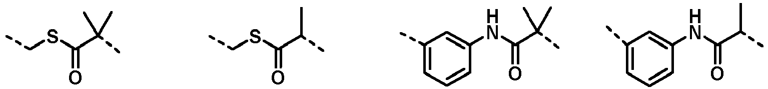

Les liaisons en pointillées représentent les liaisons entre le radical R₉ et la fonction ester boronique d'une part et entre le radical R₉ et l'atome d'oxygène de la fonction alkoxyamine d'autre part.

R₁₀ est avantageusement un atome d'hydrogène ou un radical hydroxyle.

Dans une variante, le composé comprend un radical X : un de R₁, R₂, R₃, R'₃ ou R₄ représente X.

Dans une autre variante, le composé comprend deux radicaux X : R₁ représente X et un de R₂, R₃, R'₃ ou R₄ représente X.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

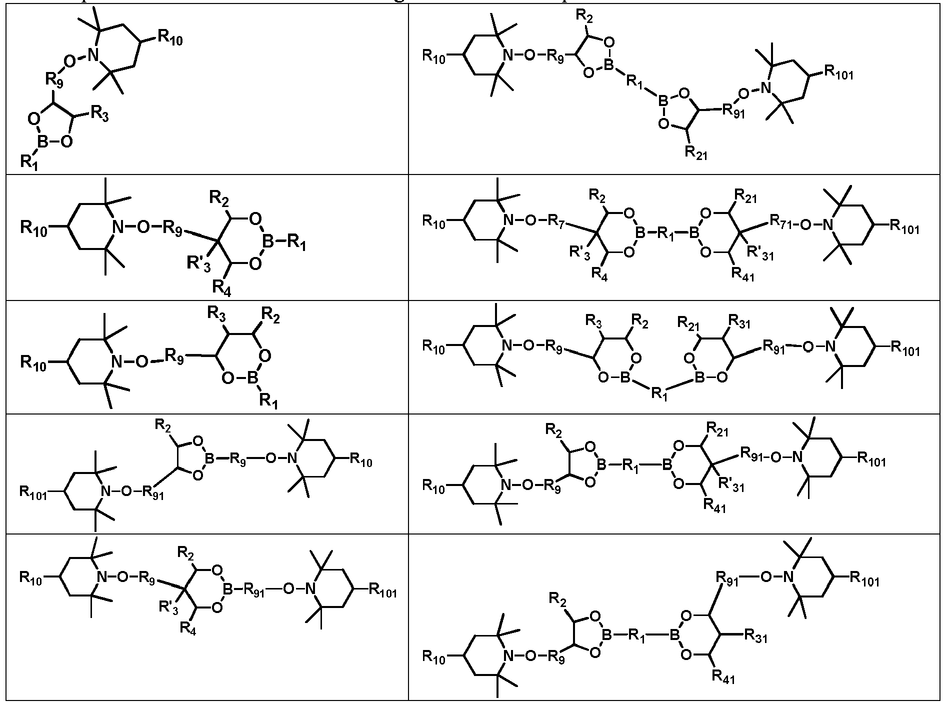

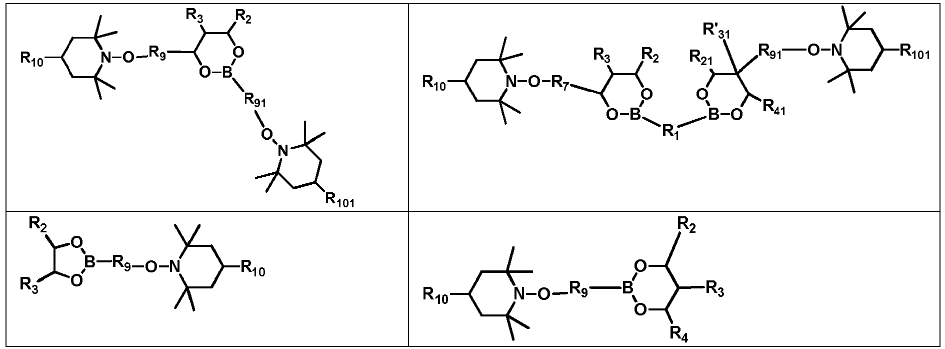

R₁, R₂, R₂₁, R₃, R'₃, R₃₁, R'₃₁, R₄, R₄ᵢ, R₉, R₁₀ ayant la même définition que précédemment avec i=1

Avantageusement, R'₃, R'₃₁ représentent H ou CH₃.
R₉₁ répond à la même définition que celle donnée pour R₉ précédemment
R₁₀₁ répond à la même définition que celle donnée pour R₁₀ précédemment

### Azodicarbonyle :

Dans une variante, X, Xᵢ représentent un radical portant un radical azodicarbonyle.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
aucun ou un de R₂, R₃, R'₃ ou R₄ représente un radical de formule -X ;
R₁ peut représenter un radical de formule -X, lié de manière covalente à l'atome de bore par un atome de carbone
X, Xᵢ représentent, indépendamment l'un de l'autre, un radical 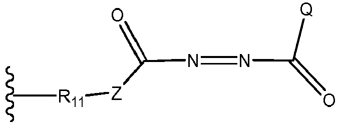 la double liaison étant de configuration *cis* ou *trans* avec R₁₁ est un radical hydrocarboné, substitué ou non, pouvant comprendre un ou des hétéroatomes ou halogènes, Z est un groupe divalent choisi parmi -O-, -S-, -NH-, Q est un radical alcoxy en C₁-C₆ ou 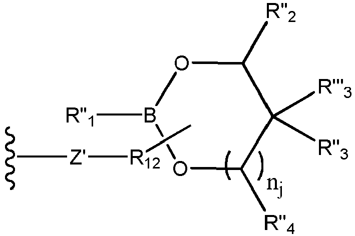 avec Z' est un groupe divalent choisi parmi -CH₂-, -O-, -S-, -NH-, un de R"₂, R‴₃, R"₃, R"₄, R"₁ est manquant en fonction du lieu de substitution, R₁₂ est un radical hydrocarboné, substitué ou non, pouvant comprendre un ou des hétéroatomes ou halogènes, R"₁ est lié de manière covalente à l'atome de bore par un atome de carbone et représente un groupement hydrocarboné, substitué ou non, pouvant comprendre un ou des hétéroatomes ou halogènes, R"₂, R"₃, R‴₃, R"₄, identiques ou différents, représentent un atome d'hydrogène ou un radical hydrocarboné, substitué ou non, pouvant comprendre un ou des hétéroatomes ou halogènes, ou forment ensemble, deux à deux, un cycle aliphatique ou aromatique, R"₁ est lié de manière covalente à l'atome de bore par un atome de carbone et représente un groupement hydrocarboné, substitué ou non, pouvant comprendre un ou des hétéroatomes ou halogènes.

R"₁, R"₂, R‴₃, R"₃, R"₄ répondent avantageusement aux mêmes définitions que celles données pour R₁, R₂, R'₃, R₃, R₄ aux paragraphes généraux « Radical R₁ » et « Radicaux R₂, R'₃, R₃, R₄, R₂ᵢ, R'₃ᵢ, R₃ᵢ, R₄ᵢ », à la seule exception que R"₁ ne peut pas représenter X.

R₁₁, R₁₂, identiques ou différents, sont avantageusement alcanediyle, alcènediyle, aryle, alkyle-aryle, aralkyle ou cycloalkyle, chacun de ces groupes peut également comprendre des hétéroatomes tels que O, N, S, ou Si.

En particulier, les radicaux R₁₁, R₁₂, peuvent contenir des hétéroatomes, en particulier choisis parmi O, N, S ou Si, et/ou peut être substitué. En particulier, ce radical peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀. Rz, R'z, identiques ou différents, représentant avantageusement un radical alkyle en C₁-C₁₈, plus avantageusement en C₁-C₁₂. En particulier, ce radical peut être interrompu par des fonctions ester, amide, éther, thioéther, amine secondaire ou tertiaire, carbonate, uréthane, carbamide, anhydride.

Dans une variante, le radical R₁₁ représente avantageusement une chaine alcanediyle saturée linéaire comprenant de 1 à 6 carbones, plus avantageusement de 1 à 4 carbones, encore plus avantageusement 1 ou 4 carbones, encore plus avantageusement 1 carbone.

Dans une autre variante, le radical R₁₁ représente avantageusement un cycle benzénique -(C₆H₄)-.

Dans une variante, le radical R₁₂ représente avantageusement une chaine alcanediyle saturée linéaire comprenant de 1 à 6 carbones, plus avantageusement de 1 à 4 carbones, encore plus avantageusement 1 ou 4 carbones, encore plus avantageusement 1 carbone.

Dans une autre variante, le radical R₁₂ représente avantageusement un cycle benzénique -(C₆H₄)-.

Encore plus avantageusement, lorsque le radical R₁ est R₁₁, R₁₁ est un cycle benzénique -(C₆H₄)-.

Encore plus avantageusement, lorsque le radical Rʺ₁ est R₁₂, R₁₂ est un cycle benzénique -(C₆H₄)-.

Encore plus avantageusement, les radicaux R₁₁ et R₁₂ sont identiques.

Dans une variante, le composé comprend un radical X : un de R₁, R₂, R₃, R'₃ ou R₄ représente X.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

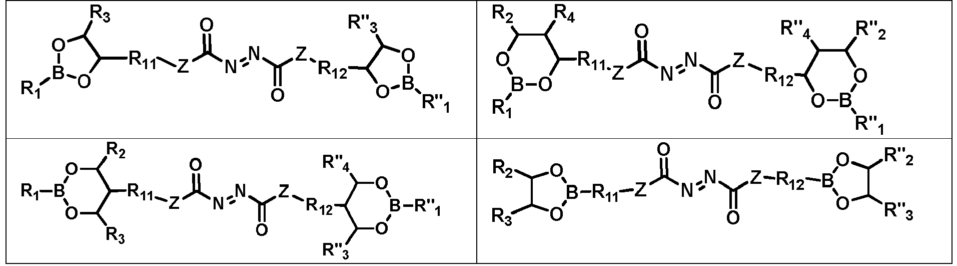

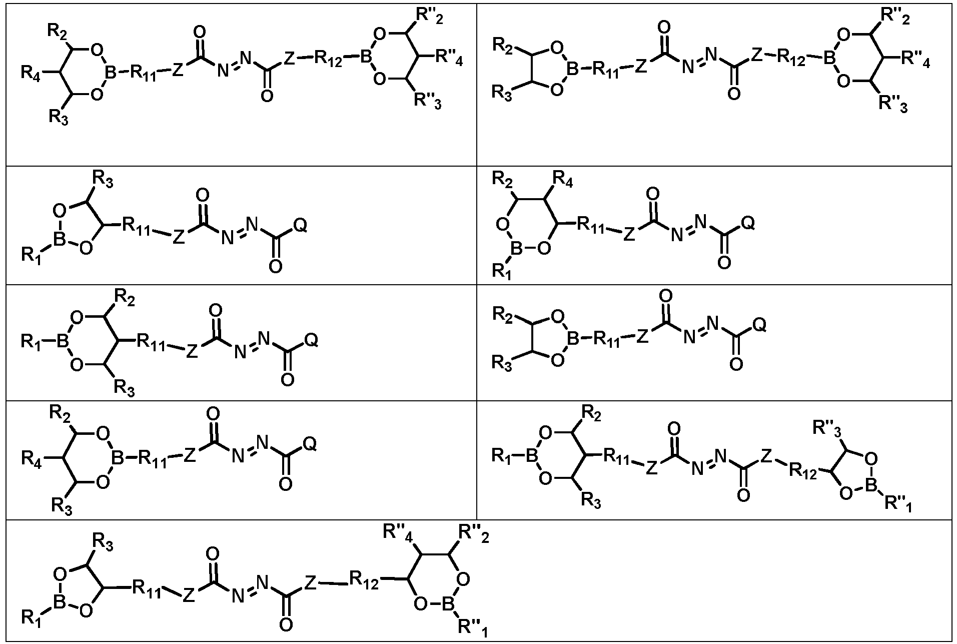

R₁, R₂, Rʺ₂, R₃, Rʺ₃, R₄, Rʺ₄, R₁₁, R₁₂, ayant la même définition que précédemment avec i=1
R₉₁ répond à la même définition que celle donnée pour R₉ précédemment
R₁₀₁ répond à la même définition que celle donnée pour R₁₀ précédemment
Q est un radical alcoxy en C₁-C₆

### Nitroxydes :

Dans une variante, X, Xᵢ représentent un radical portant un radical nitroxyde.

Dans cette variante, les composés de l'invention répondent à la formule (I) dans laquelle
n, nᵢ, les radicaux R₁, R₂, R₂ᵢ, R₃, R'₃, R₃ᵢ, R'₃ᵢ, R₄, R₄ᵢ, sont tels que définis précédemment ;
aucun ou un de R₂, R₃, R'₃ ou R₄ représente un radical de formule -X ;
R₁ peut représenter un radical de formule -X, lié de manière covalente à l'atome de bore par un atome de carbone
X, Xᵢ représentent, indépendamment l'un de l'autre, un radical 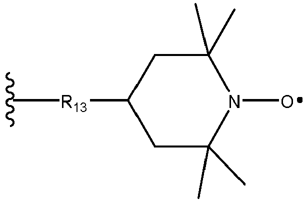 avec R₁₃ est un radical hydrocarboné, substitué ou non, pouvant comprendre un ou des hétéroatomes ou halogènes.
R₁₃ est avantageusement un groupe alcanediyle, alcènediyle, aryle, alkyle-aryle, aralkyle ou cycloalkyle, chacun de ces groupes peut également comprendre des hétéroatomes tels que O, N, S, ou Si.

En particulier, le radical R₁₃ peut contenir des hétéroatomes, en particulier choisis parmi O, N, S ou Si, et/ou peut être substitué. En particulier, ce radical peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -OC(O)-Rz, -O-C(O)-O-Rz, -O-C(O)-N(H)-Rz, -N(H)-C(O)-O-Rz, -O-Rz, -S-Rz, -C(O)-N(H)-Rz, - N(H)-C(O)-Rz avec Rz, R'z, identiques ou différents, représentant un radical alkyle en C₁-C₅₀. Rz, R'z, identiques ou différents, représentent avantageusement un radical alkyle en C₁-C₁₈, plus avantageusement en C₁-C₁₂. En particulier, ce radical peut être interrompu par des fonctions ester, amide, éther, thioéther, amine secondaire ou tertiaire, carbonate, uréthane, carbamide, anhydride.

Dans une variante, le composé comprend un radical X : un de R₁, R₂, R₃, R'₃ ou R₄ représente X.

Dans une autre variante, le composé comprend deux radicaux X : R₁ représente X et un de R₂, R₃, R'₃ ou R₄ représente X.

Lorsqu'il est présent, Xᵢ peut être différent ou identique au radical X. Xᵢ est avantageusement identique au radical X.

Lorsque un ou plusieurs radicaux de formule (I') est présent, les différents ni peuvent être identiques ou différents. Avantageusement le composé de formule (I) comprend 0 ou 1 radical de formule (I'), plus avantageusement 0.

En présence d'un seul radical de formule (I'), nᵢ peut être identique ou différent de n. Dans un mode de réalisation, nᵢ =n. Dans un autre mode de réalisation, nᵢ ≠n.

Les composés selon l'invention sont avantageusement choisis parmi :

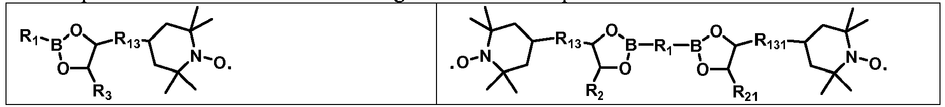

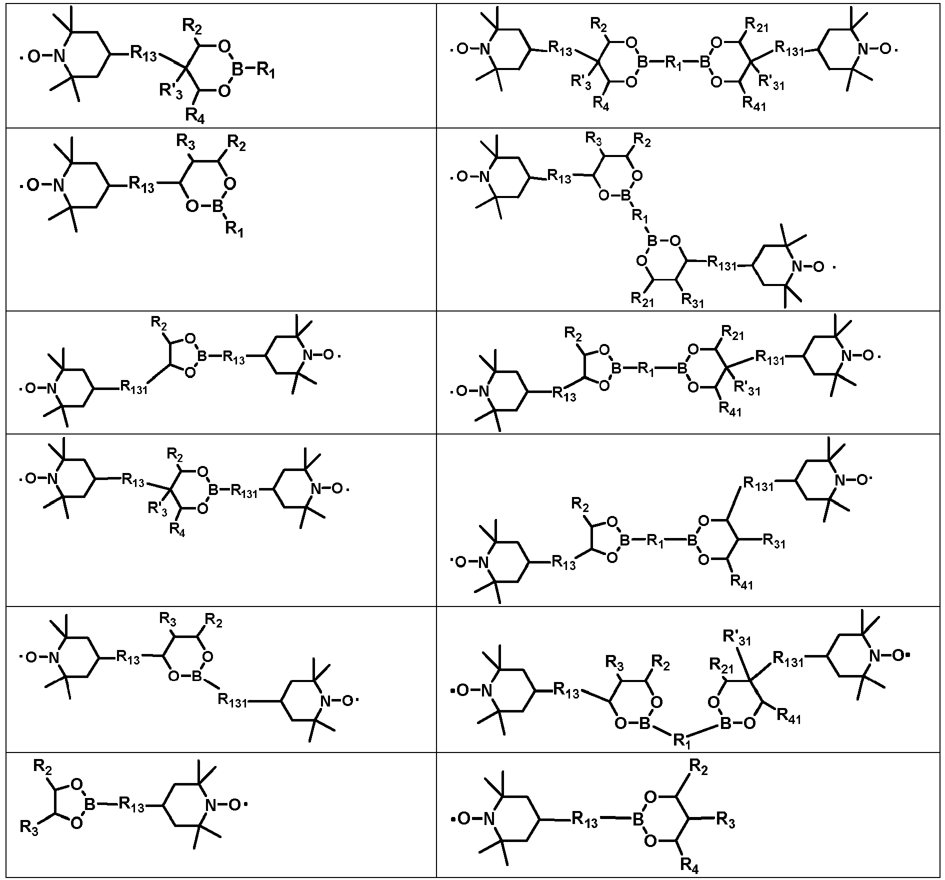

R₁, R₂, R₂₁, R₃, R'₃, R₃₁, R'₃₁, R₄, R₄₁, R₁₃ ayant la même définition que précédemment avec i=1

Avantageusement, R'₃, R'₃₁ représentent H ou CH₃.
R₁₃₁ répond à la même définition que celle donnée pour R₁₃ précédemment.

### III-PROCEDES DE SYNTHESE

### Alcène terminal :

Les esters boroniques contenant un ou plusieurs radicaux -X, -Xi, dans lesquels le radical Y est un alcène terminal peuvent être préparés par réaction de condensation entre des acides boroniques et des diols 1,2- et/ou des diols 1,3- contenant une fonction alcène terminal.

Les acides boroniques sont disponibles commercialement ou peuvent êtres synthétisés par les voies de synthèse connues de l'homme de l'art. En effet, de part l'importance croissante des acides boroniques comme intermédiaires de synthèse en chimie fine, un très grand nombre de composés acide boronique sont commerciaux (à titre d'exemple plus de 1100 acides boroniques sont commercialisés par Sigma-Aldrich) et de très nombreuses voies de synthèse ont été développées (Hall, D. G., Boronic Acids - Preparation, Applications in Organic Synthesis and Medicine, WILEY-VCH: (2008). Editeur : Wiley VCH; Édition : 2nd Completely Revised Edition, 2 Volume Set (19 octobre 2011). ISBN-10: 3527325980, ISBN-13: 978-3527325986). Les diols 1,2- et/ou 1,3- contenant une fonction alcène terminal sont disponibles commercialement, comme à titre d'exemples non limitatifs le 3,4-dihydroxy-1-butène (numéro CAS 497-06-3), le 7-octène-1,2-diol (numéro CAS 85866-02-0) ou le 6-heptène-2,4-diol (numéro CAS 19781-76-1), ou peuvent être synthétisés suivant des procédés connus de l'homme de l'art. A titre d'exemples non limitatifs de synthèse de diols 1,2- et/ou 1,3- contenant une fonction alcène terminal, ont peut citer: Henri Cramail et col., Polym. Chem., 2014, 5, 6142; Michael T. Crimmins et col., J. Am. Chem. Soc. 2005, 127, 17200; Xue-Long Hou et col., Org. Biomol. Chem. 2003, 1, 1565.

La réaction de condensation entre les acides boroniques et les diols 1,2- et/ou les diols 1,3-contenant une fonction alcène terminal peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

### Aminé :

Les esters boroniques contenant un ou plusieurs radicaux -X, -Xi, dans lesquels le radical Y est une amine primaire peuvent être préparés par réaction de condensation entre des acides boroniques et des diols 1,2- et/ou des diols 1,3- contenant une fonction amine primaire.

Les diols 1,2- et/ou 1,3- contenant une fonction amine primaire sont disponibles commercialement, comme à titre d'exemples non limitatifs le 3-amino-1,2-propanediol (numéro CAS 616-30-8), le 2-amino-1,3-propanediol (numéro CAS 534-03-2), le 2-amino-2-methyl-1,3-propanediol (numéro CAS 115-69-5) ou le tris(hydroxymethyl)aminomethane (numéro CAS 77-86-1), ou peuvent être synthétisés suivant des procédés connus de l'homme de l'art. A titre d'exemples non limitatifs de synthèse de diols 1,2- et/ou 1,3- contenant une fonction amine primaire, ont peut citer: Shengqi Wang et col., Tetrahedron Lett. 2014, 55, 94; Mattie S. M. Timmer et col., J. Org. Chem. 2010, 75, 5470.

La réaction de condensation entre les acides boroniques et les diols 1,2- et/ou les diols 1,3- contenant une fonction amine primaire peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

### Maléimide :

Les esters boroniques contenant un ou plusieurs radicaux -X, -Xi, dans lesquels le radical Y est un maléimide peuvent être préparés par réaction de condensation entre des acides boroniques et des diols 1,2- et/ou des diols 1,3- contenant une fonction maléimide ou une fonction maléimide protégée sous forme de cycloadduit furane/maléimide.

Les diols 1,2- et/ou 1,3- contenant une fonction maléimide ou une fonction maléimide protégée sous forme de cycloadduit furane/maléimide peuvent être préparés par réaction de condensation entre l'anhydride maléique protégé sous forme de cycloadduit furane/anhydride maléique (exo-3,6-Epoxy-1,2,3,6-tetrahydrophthalic anhydride; numéro CAS 6118-51-0) et des diols 1,2- ou des diols 1,3-contenant une fonction amine primaire.

La réaction de condensation entre les acides boroniques et les diols 1,2- et/ou les diols 1,3-contenant une fonction maléimide ou une fonction maléimide protégée sous forme de cycloadduit furane/maléimide peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation. Cette dernière approche, utilisation d'un montage de Dean-Stark, permet d'effectuer la condensation, entre les acides boroniques et les diols contenant une fonction maléimide protégée sous forme de cycloadduit furane/maléimide, et la déprotection des fonctions maléimides en une seule étape.

### Acrylamide/Méthacrylamide :

Les esters boroniques contenant un ou plusieurs radicaux -X, -Xi, dans lesquels le radical Y est un acrylamide ou un méthacrylamide peuvent être préparés par réaction de condensation entre des acides boroniques et des diols 1,2- et/ou des diols 1,3- contenant une fonction acrylamide ou méthacrylamide.

Les diols 1,2- et/ou 1,3- contenant une fonction acrylamide ou méthacrylamide peuvent être préparés suivant des procédés connus de l'homme de l'art à partir de diols 1,2- ou de diols 1,3- contenant une fonction amine primaire. A titre d'exemples non limitatifs de synthèse de diols 1,2- et/ou 1,3- contenant une fonction acrylamide ou méthacrylamide, ont peut citer: Cameron Alexander et col., Polym. Chem., 2010, 1, 1252; Patrick H Benz and Adam Reboul, WO 2015161199 A1, "(Meth)acrylamide polymers for contact lenses and intraocular lenses"; Fusheng Du et col., Macromol. Rapid Commun. 2007, 28, 597.

La réaction de condensation entre les acides boroniques et les diols 1,2- et/ou les diols 1,3- contenant une fonction acrylamide ou méthacrylamide peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

### Thiol :

Les esters boroniques contenant un ou plusieurs radicaux -X, -Xi, dans lesquels le radical Y est une fonction thiol peuvent être préparés par réaction de condensation entre des acides boroniques et des diols 1,2- et/ou des diols 1,3- contenant une fonction thiol.

Les diols 1,2- et/ou 1,3- contenant une fonction thiol sont disponibles commercialement, comme à titre d'exemple non limitatif le 3-mercapto-1,2-propanediol (numéro CAS 96-27-5), ou peuvent être synthétisés suivant des procédés connus de l'homme de l'art. A titre d'exemple non limitatif de synthèse de diols 1,2- et/ou 1,3- contenant une fonction thiol, ont peut citer John E. Casida et col., Bioorg. Med. Chem. 2010, 18, 1942. Les diols 1,2- et/ou 1,3- contenant une fonction thiol peuvent également être préparés à partir diols 1,2- et/ou 1,3- contenant une fonction alcool, comme par exemple le 1,2,6-hexanetriol. (numéro CAS 106-69-4) ou le 1,1,1-tris(hydroxymethyl)propane (numéro CAS 77-99-6). Suivant cette approche, les fonctions diol 1,2- et/ou 1,3- sont d'abord protégées sous forme de cétals ou d'acétals, préférentiellement de 1,3-dioxanes et 1,3-dioxolanes en utilisant l'acétone comme groupement protecteur et l'acide paratoluènesulfonique comme catalyseur. L'eau formée au cours de la protection est piégée au moyen de tamis moléculaire ou éliminée en utilisant un appareil de Dean-Stark. La fonction alcool restante est transformée en atome de brome ou de chlore suivant les des procédés connus de l'homme de l'art. La fonction thiol est ensuite introduite par réaction de substitution nucléophile de l'atome d'halogène avec un xanthogénate, préférentiellement l'éthyle xanthogénate de potassium (numéro CAS 140-89-6) ou le thioacétate de potassium (numéro CAS 10387-40-3), puis aminolyse avec une amine primaire. Enfin, la fonction diol 1,2- ou dioll,3- est déprotégée par hydrolyse acide.

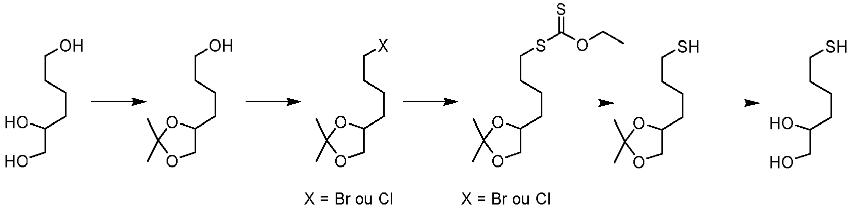

La réaction de condensation entre les acides boroniques et les diols 1,2- et/ou les diols 1,3-contenant une fonction thiol peut être effectuée en présence de piège à eau, comme du tamis moléculaire par exemple, ou en utilisant un appareil de Dean-Stark qui permet d'éliminer par distillation l'eau formée au cours de la condensation.

### Azoture :

Les esters boroniques contenant un ou plusieurs radicaux -X, -Xi, -(R₇)ₛ-(C₆H₄)ₜ-Hₑₜ-N₃, peuvent être préparés par condensation d'acides boroniques avec des azotures de sulfonyle (-(R₇)ₛ-(C₆H₄)ₜ-SO₂-N₃) contenant une fonction 1,2-diol ou 1,3 diol ou par condensation avec d'acides boroniques avec des azidoformates (-(R₇)ₛ-(C₆H₄)ₜ-O-CO-N₃) contenant une fonction 1,2-diol ou 1,3-diol.

La réaction de condensation entre les acides boroniques et les diols 1,2- et/ou les diols 1,3-contenant une fonction azoture de sulfonyle (-(R₇)ₛ-(C₆H₄)ₜ-SO₂-N₃) ou une fonction azidoformate (-(R₇)ₛ-(C₆H₄)ₜ-O-CO-N₃) peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

Les azotures de sulfonyle contenant une fonction 1,2-diol ou 1,3-diol peuvent être préparés à partir de diols 1,2 ou de diols1,3 contenant une fonction acide sulfonique (-SO₂OH) suivant les procédés connus de l'homme de l'art, comme à titre d'exemple non limitatif la procédure décrite par G. G. Hazen et al., Organic Syntheses, Coll. Vol. 9, p.400 (1998); Vol. 73, p.144 (1996).

Les diols 1,2- et/ou les diols 1,3- contenant une fonction acide sulfonique (-SO₂OH) peuvent être préparés à partir de diols 1,2- et/ou de diols 1,3- contenant une fonction thiol ou disulfure suivant les procédés décrits dans les brevets "Preparation of high-purity alkanesulfonic acids" Hiromitsu Kobayashi, Masaaki Shimizu, et Hirohisa Nito, Priorité JP 2001-141623, May 11, 2001, brevet JP 4824194 B2 et "Preparation of alkanesulfonic acids from dialkyl disulfides" Hiromitsu Kobayashi et Hirohisa Nito, Priorité JP 2002-323466, Nov 7, 2002, brevet n° JP 4312445 B2.

Les diols 1,2- contenant une fonction acide sulfonique (-SO₂OH) peuvent également être préparés à partir de diols 1,2- contenant une fonction alcène suivant le procédé décrit par Alasdair M. Cook et col., Microbiology 2010, 156, 1556.

Les diols 1,2- et/ou les diols 1,3- contenant une fonction azidoformate (-(R₇)ₛ-(C6H4)ₜ-O-CON₃) peuvent être préparés à partir de diols 1,2- et/ou de diols 1,3- contenant une fonction thiol ou disulfure suivant les procédés décrits par A. R. A. S. Deshmukh et col., Synlett 2002, 9,: 1455; L. Carpino et col. Org. Synth. 1964, 44, 15., Louis A. Carpino et col., J. Am. Chem. Soc. 1957, 79, 4427; H. Yajima et col., Chem. Pharm. Bull. 1968, 16, 182; G. Smolinsky et col., J. Am. Chem. Soc. 1964, 86, 3085; Gary B. Schuster et col., J. Am. Chem. Soc. 1988, 110, 4297;

### Alkoxysilane :

Les esters boroniques contenant un ou plusieurs radicaux -X, -Xi, -R₈-Si(-O-alk₁)(-O-alk₂)(-O-alk₃), peuvent être obtenus par couplage d'esters boroniques contenant une ou plusieurs fonctions alcool, alcène terminal, acrylate, acrylamide, amine, thiol, maléimide ou acide carboxylique avec des alkoxysilanes contenant une fonction isocyanate, alcène terminal, acrylate, amine, époxyde, thiol.

Ces agents de couplages alkoxysilanes sont disponibles commercialement, à titre d'exemple non limitant de fournisseurs ont peut citer les sociétés Gelest, SiSiB silicones, Tokyo Chemical Industry ou Sigma Aldrich. Les conditions de couplage et les groupements fonctionnels complémentaires pour le couplage des esters boroniques avec les alkoxysilanes sont connus de l'homme du métier. A titre d'exemple non limitant de références, on peut citer la brochure commerciale de la société Gelest, "Gelest Silane Coupling Agents", http://www.gelest.com/handbooks-brochures/, ainsi que les revues de Craig J. Hawker et col., Chem. Rev. 2009, 109, 5620, Christopher N. Bowman et col., Chem. Soc. Rev. 2010, 39, 1355; Christopher N. Bowman et col., Chem. Mater. 2014, 26, 724; Timothy E. Long et col., Prog. Polym. Sci. 2006, 31, 487.

### Alkoxyamine :

Les esters boroniques contenant un ou plusieurs radicaux -X, -Xi, -R₉-O-N-(C₉H₁₇)-R₁₀, peuvent être préparés par réaction de condensation entre des acides boroniques et des diols 1,2- et/ou des diols 1,3- contenant une fonction alkoxyamine.

La réaction de condensation entre les acides boroniques et les diols 1,2- et/ou les diols 1,3-contenant une fonction alkoxyamine peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation. La réaction de condensation entre les acides boroniques et les diols 1,2- et/ou les diols 1,3- contenant une fonction alkoxyamine est préférentiellement effectuée en présence de piège à eau, comme du sulfate de magnésium ou du tamis moléculaire par exemple. La réaction de condensation entre les acides boroniques et les diols 1,2- et/ou les diols 1,3- contenant une fonction alkoxyamine est préférentiellement effectuée à température ambiante.

Les diols 1,2- et/ou 1,3- contenant une fonction alkoxyamine peuvent être synthétisés suivant des procédés connus de l'homme de l'art. A titre d'exemple non limitatif de synthèses de diols 1,2- et/ou 1,3- contenant une fonction alkoxyamine, ont peut citer: (a) l'addition radicalaire sur des oléfines contenant une fonction diol 1,2- et/ou une fonction diol 1,3- (protégée ou non sous forme de cétals ou d'acétals); (b) la réaction de complexes métalliques avec des alcènes terminaux contenant une fonction diol 1,2- et/ou une fonction diol 1,3- (protégée ou non sous forme de cétals ou d'acétals); (c) la réaction d'halogénoalkanes contenant une fonction diol 1,2- et/ou une fonction diol 1,3- (protégées ou non sous forme de cétals ou d'acétals) en présence de complexes métalliques; (d) la décomposition de composés azoïque contenant des fonctions diol 1,2- et/ou diol 1,3- (protégées ou non sous forme de cétals ou d'acétals). Ces différentes approches synthétiques sont présentées dans le schéma ci-dessous (illustrant le cas d'un diol 1,2- protégé par une fonction cétal) et sont adaptées des procédures décrites dans la revue de Julien Nicolas et col., Prog. Polym. Sci. 2013, 38, 63.

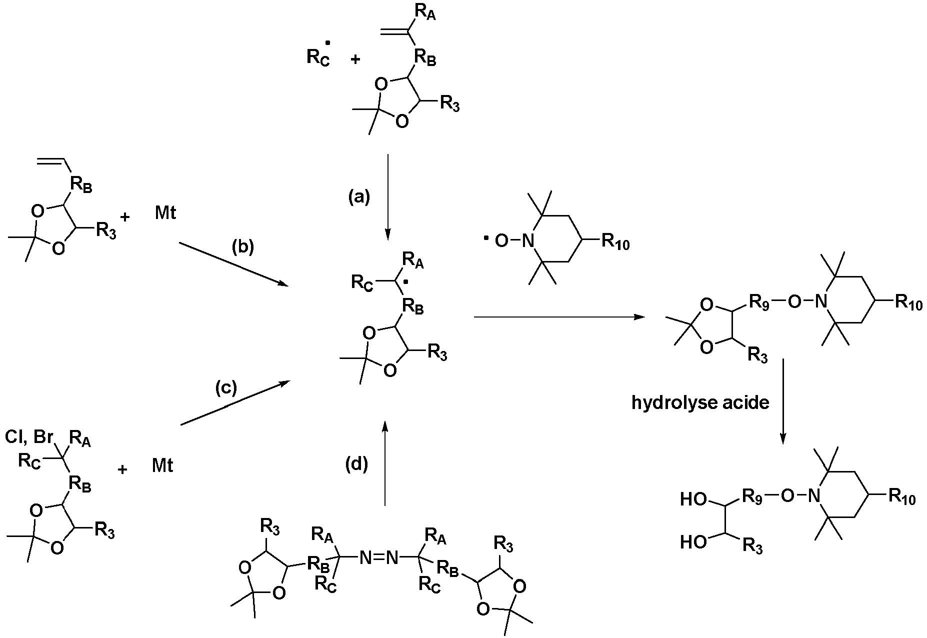

Les esters boroniques contenant un ou plusieurs radicaux -X, -Xi, -R₉-O-N-(C₉H₁₇)-R₁₀, peuvent également être préparés par décomposition radicalaire d'azidocarbonyles contenant des fonctions ester boronique en présence de radicaux nitroxydes ·O-N-(C₉H₁₇)-R₁₀, comme illustré dans le schéma ci-dessous avec des composés azidocarbonyles contenant deux fonctions dioxaborolane.

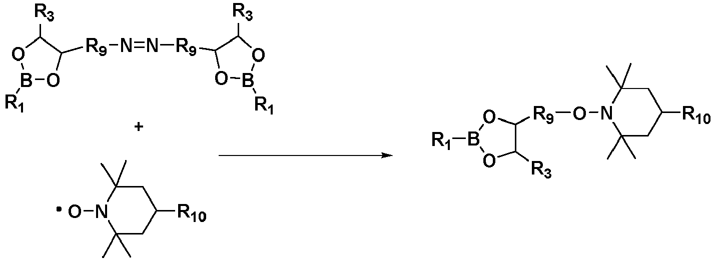

### Azodicarbonyle :

Les esters boroniques contenant une fonction azodicarbonyle peuvent être préparés par réaction de condensation entre des acides boroniques et des diols 1,2- et/ou des diols 1,3-contenant une fonction azodicarbonyle.

La réaction de condensation entre les acides boroniques et les diols 1,2- et/ou les diols 1,3-contenant une fonction azodicarbonyle peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation. La réaction de condensation entre les acides boroniques et les diols 1,2- et/ou les diols 1,3- contenant une fonction azodicarbonyle est préférentiellement effectuée en présence de piège à eau, comme du sulfate de magnésium ou du tamis moléculaire par exemple. La réaction de condensation entre les acides boroniques et les diols 1,2- et/ou les diols 1,3- contenant une fonction azodicarbonyle est préférentiellement effectuée à température ambiante.

Les diols 1,2- et/ou des diols 1,3-contenant une fonction azodicarbonyle peuvent être préparés suivant le schéma réactionnel présenté ci-dessous, illustré avec le cas d'un diol 1,2, et adapté du brevet "molecules having combinable groups" Nicolas Seeboth, Serguey Ivanov, Jean-Luc Couturier, Manuel Hidalgo, PCT/FR2011/051652, July 12 2011.

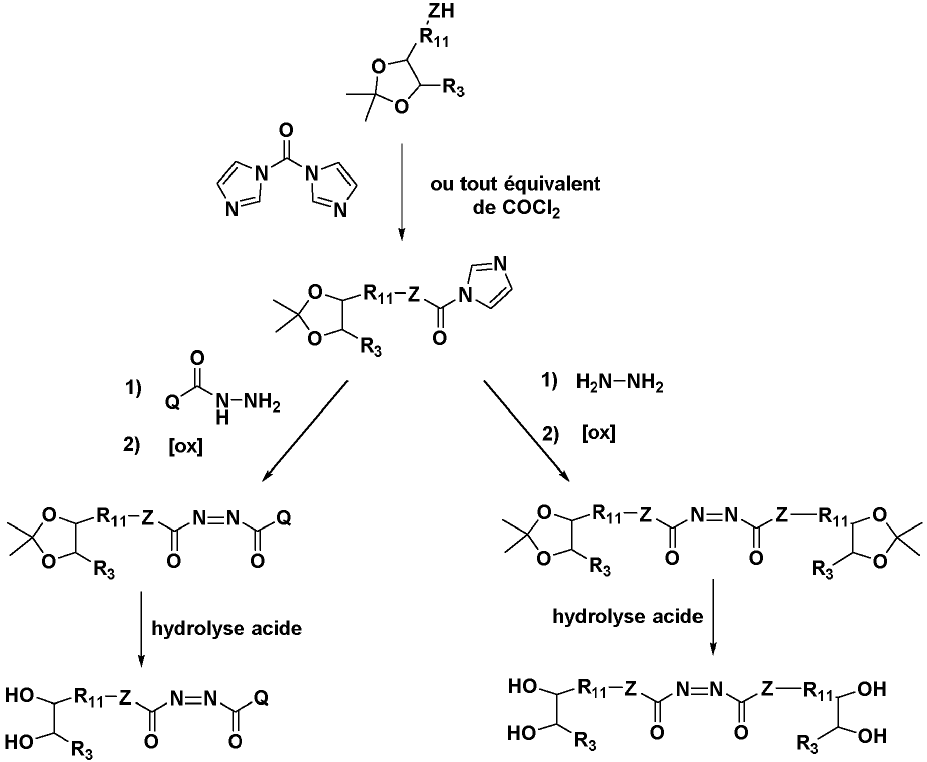

Les esters boroniques contenant une fonction azodicarbonyle peuvent également être préparés par amidification de dialkyl azodicarboxylates, comme illustré ci-dessous dans le d'un dioxaborolane et suivant une procédure adapté de "molecules having combinable groups" Nicolas Seeboth, Serguey Ivanov, Jean-Luc Couturier, Manuel Hidalgo, PCT/FR2011/051652, July 12 2011.

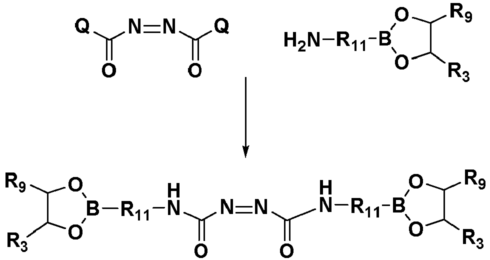

### Nitroxyde :

Les esters boroniques contenant un ou plusieurs radicaux -X, -Xi, dans lesquels le radical Y est une fonction nitroxyde peuvent être préparés par réaction de condensation entre des acides boroniques et des diols 1,2- et/ou des diols 1,3- contenant une fonction nitroxyde.

Les esters boroniques contenant un ou plusieurs radicaux -X, -Xi, dans lesquels le radical Y est une fonction nitroxyde peuvent être préparés par réaction de condensation entre des acides boroniques contenant une fonction nitroxyde et des diols 1,2- et/ou des diols 1,3-.

Les diols 1,2- et/ou 1,3- contenant une fonction nitroxyde peuvent être préparés, par exemple, par réaction de couplage entre le 4-hydroxy-TEMPO (numéro CAS: 2226-96-2) et l'épichlorohydrine, suivie d'une ouverture de la fonction époxyde par un anion hydroxyde.

Les diols 1,2- et/ou 1,3- contenant une fonction nitroxyde peuvent également être préparés par réaction de condensation entre le 4-carboxy-TEMPO (numéro CAS: 37149-18-1) et des diols 1,2- ou des diols 1,3- contenant une fonction amine primaire, les fonctions diol étant éventuellement protégées sous la forme d'un dioxolane.

La réaction de condensation entre les acides boroniques et les diols 1,2- et/ou les diols 1,3-contenant une fonction nitroxyde peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

Les acides boroniques contenant une fonction nitroxyde peuvent être préparés par réaction de condensation entre le 4-hydroxy-TEMPO (numéro CAS: 2226-96-2), ou le 4-amino-TEMPO (numéro CAS: 14691-88-4), et des acides boroniques contenant une fonction acide carboxylique, comme l'acide 4-carboxyphenylboronique (numéro CAS: 14047-29-1) ou l'acide 3-carboxyphenylboronique (numéro CAS: 25487-66-5) par exemple.

Les acides boroniques contenant une fonction nitroxyde peuvent également être préparés par réaction de condensation entre le 4-carboxy-TEMPO (numéro CAS: 37149-18-1) et des acides boroniques contenant une fonction hydroxyle, comme l'acide 3-(hydroxymethyl)phenylboronique (numéro CAS: 87199-15-3) ou l'acide 4-(hydroxymethyl)phenylboronique (numéro CAS: 59016-93-2) par exemple.

Les acides boroniques contenant une fonction nitroxyde peuvent également être préparés par réaction de condensation entre le 4-carboxy-TEMPO (numéro CAS: 37149-18-1) et des acides boroniques contenant une fonction amine, comme l'acide 3-aminophenylboronique monohydrate (numéro CAS: 206658-89-1) par exemple.

La réaction de condensation entre les acides boroniques contenant une fonction nitroxyde et les diols 1,2- et/ou les diols 1,3- peut être effectuée en présence de piège à eau, comme du sulfate de magnésium ou du tamis moléculaire par exemple, ou en utilisant un appareil de Dean-Stark qui permet d'éliminer par distillation l'eau formée au cours de la condensation.

### IV - UTILISATIONS

Les composés selon l'invention peuvent être utilisés pour fonctionnaliser des polymères.

En particulier, les inventeurs ont découvert une nouvelle réaction de métathèse d'esters boroniques et on décrit des compositions de polymères réticulés comprenant des fonctions esters boroniques permettant des réactions d'échange (demande FR15/57822, demande FR15/59955, non publiées). En particulier, les inventeurs ont décrit un procédé dans lequel un polymère est fonctionnalisé par ajout d'un additif comprenant une fonction ester boronique.

Les composés selon l'invention peuvent être utilisés en tant que tels additifs.

Ainsi, l'invention a également pour objet l'utilisation d'un composé selon l'invention pour fonctionnaliser un polymère par greffage ou par fonctionnalisation (cf WO2015/067531).

Le polymère peut être un polymère thermoplastique ou un polymère thermodurcissable. Le polymère peut être choisi parmi :
- les vinyliques, en particulier les polystyrènes, les poly(métha)acrylates, les poly(méth)acrylamides, les polydiènes tels que les polyisoprènes et les polybutadiènes, les polychlorures de vinyle, les polyfluorés, les poly(acétate de vinyle), la polyvinylpyrrolidone, le polyvinylcarbazole,
- les polyoléfines, en particulier polyéthylène et polypropylène,
- les polyoléfines insaturées,
- les polyamides,
- les polysaccharides,
- les polysiloxanes ou silicones,
- les polyesters.

Ces polymères peuvent être fonctionnalisés pour introduire des motifs ou fonctions permettant un greffage. Ces fonctions qui serviront à greffer les fonctions pendantes ester boronique peuvent être des fonctions qui ne sont pas impliquées dans la réaction de polymérisation ou peuvent être des fonctions qui sont impliquées dans la réaction de polymérisation mais qui restent non réagies en fin de polymérisation, soit du fait de la stœchiométrie/fonctionnalité du mélange de monomères, soit du fait d'un arrêt de la polymérisation avant la conversion complète de tous les fonctions polymérisables. De tels procédés sont connus de l'homme du métier et sont notamment utilisés dans la synthèse de polymères par polycondensation et par polyaddition. Par exemple, le polymère est obtenu par copolymérisation, par voie radicalaire ou par polycondensation, par polymérisation par coordination, ou par polyaddition ou par ouverture de cycle d'un monomère précurseur du polymère thermoplastique et d'un monomère portant le groupement latéral permettant ensuite le greffage de la molécule selon l'invention. De même, l'introduction des motifs ou fonctions permettant un greffage peut se faire par différents procédés connus de l'homme du métier (Charles E. Hoyle, Christopher N. Bowman, Angew. Chem. Int. Ed. 2010, 49, 1540-1573; Kemal Arda Günay, Patrick Theato, Harm-Anton Klok, Journal of Polymer Science Part A: Polymer Chemistry 2013, 51, 1-28; G. Moad, Prog. Polym. Sci. 1999, 24, 81-142; Elisa Passagliaa, Serena Coiai, Sylvain Augier, Prog. Polym. Sci. 2009, 34, 911-947; Charles E. Hoyle, Andrew B. Lowe, Christopher N. Bowman, Chem. Soc. Rev., 2010, 39, 1355-1387; Brian D. Mather, Kalpana Viswanathan , Kevin M. Miller, Timothy E. Long, Prog. Polym. Sci. 2006, 31, 487-531; T. C. Chung, Prog. Polym. Sci. 2002, 27, 39-85. Chulsung Bae, John F. Hartwig, Hoyong Chung, Nicole K. Harris, Karen A. Switek, Marc A. Hillmyer, Angew. Chem. Int. Ed. 2005, 44, 6410-6413).

La masse molaire moyenne en nombre, Mn, des polymères linéaires ou branchés varie avantageusement de 2000 g/mol à 2500000 g/mol, plus avantageusement de 5000 à 750000 g/mol et encore plus avantageusement de 10000 g/mol à 400000 g/mol.

La dispersité, D=Mw/Mn, des polymères linéaires ou branchés varie avantageusement de 1,01 à 15, plus avantageusement de 1,03 à 10 et encore plus avantageusement de 1,05 à 7,5.

L'invention a également pour objet un procédé de préparation d'une composition de polymères réticulés, ledit procédé comprend les étapes suivantes :
a. Choisir un polymère linéaire ou branché comprenant des fonctions permettant un greffage ou une fonctionnalisation,
b. Choisir une combinaison de molécules dont au moins une est choisie parmi les composés définis selon l'invention, la combinaison devant permettre le greffage/la fonctionnalisation et la création de liaisons pendantes échangeables et de points de réticulation échangeables par réactions de métathèse des esters boroniques ;
c. Mélanger, à l'état fondu ou en solution, ledit polymère et ladite combinaison pour obtenir ladite composition.

Le polymère est avantageusement tel que décrit précédemment.

Lors de l'étape b), on peut également ajouter les composés de formule (Ia), (Ib), A, B ou C décrits dans la demande FR15/59955.

Les composés selon l'invention peuvent être utilisés en tant qu'additif pour modifier le comportement, par exemple la rhéologie, d'un polymère par ajout à la composition comprenant un tel polymère d'un ou plusieurs composés selon l'invention. On peut également ajouter les composés de formule (Ia), (Ib), A, B ou C décrits dans la demande FR15/59955.

Dans une autre variante, les composés selon l'invention peuvent être utilisés en tant qu'agent de couplage à une molécule d'intérêt.

La nouvelle molécule, résultant de ce couplage, pourra alors être mise en œuvre dans un procédé de préparation d'une librairie de composés décrit dans la demande FR15/57821 non publiée.

Les inventeurs ont en effet découvert une nouvelle réaction de métathèse d'esters boroniques, rapide, qui peut être conduite à température ambiante, avec ou sans catalyseur, permettant d'accéder facilement à de nouveaux composés. La réaction est en outre avantageusement quantitative.

Schématiquement, la réaction de métathèse d'esters boroniques peut être représentée telle que suit : 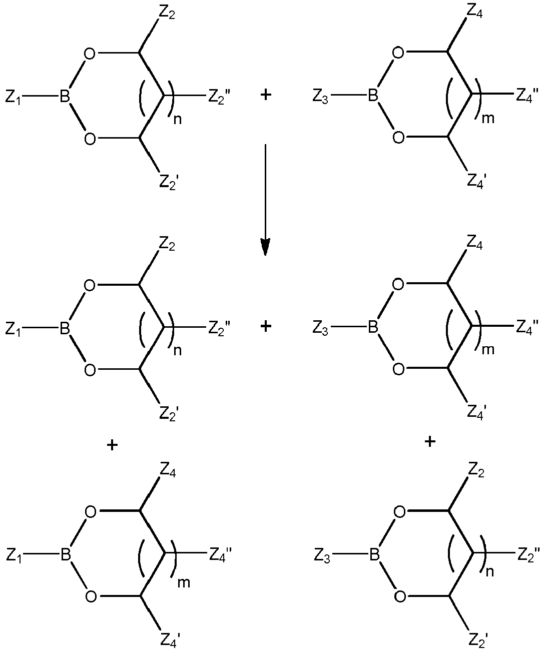 Où
n = 0 ou 1
m = 0 ou1
Z₁ et Z₃ sont différents et représentent chacun un radical hydrocarboné, l'atome de Z₁ et Z₃ lié au bore est un atome de carbone
Z₂, Z₂', Z₂ʺ, identiques ou différents, représentent chacun un atome d'hydrogène, un radical hydrocarboné, ou forment ensemble un cycle aliphatique ou aromatique
Z₄, Z₄', Z₄", identiques ou différents, représentent chacun un atome d'hydrogène, un radical hydrocarboné, ou forment ensemble un cycle aliphatique ou aromatique
Si n=m alors, au moins un des substituants Z₄, Z₄', Z₄" est différent des substituants Z₂, Z₂', Z₂"

Les molécules d'intérêt, à coupler, sont choisis en fonction des activités recherchées et de l'utilisation finale de la librairie.

Il peut en particulier être intéressant qu'au moins une des molécules comprenne un centre d'asymétrie. En particulier, la molécule d'intérêt peut être un composé chiral.

Les molécules d'intérêt peuvent par exemple être :
- des assemblages d'acides aminés, en particulier de peptides ou polypeptides, ou protéines;
- des enchaînements d'acides aminés, en particulier peptides, polypeptides, protéines.

Les molécules d'intérêt peuvent aussi être des molécules organiques de petites tailles.

### EXEMPLES

Les exemples suivant illustrent la synthèse des composés ester boronique de l'invention.

### Exemple 1 : Synthèse d'un ester boronique portant une fonction maléimide

Diol portant une fonction maléimide protégée sous forme de cycloadduit furane/maléimide (**1**)

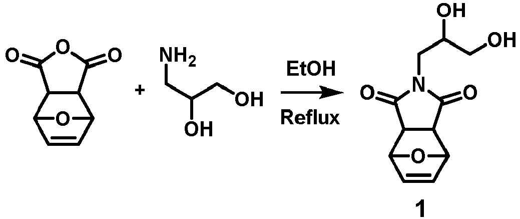

### Mode opératoire:

L'exo-3,6-epoxy-1,2,3,6-tetrahydrophthalic anhydride (12 g, 72 mmol) est dissous dans l'éthanol (150 mL) puis une solution éthanolique (25 mL) de 3-amino-1,2-propanediol 2 (6.6 g, 72 mmol) est ajoutée goutte à goutte au mélange. Le mélange réactionnel ainsi obtenu est agité au reflux de l'éthanol pendant 5 heures. Au cours de cette étape, le milieu réactionnel devient jaune-orangé. La solution est ensuite portée à une température de -5°C et les cristaux ainsi formés sont isolés par filtration puis séchés sous vide pour donner le produit cible 1 (masse = 8.35 g, rendement = 48 %).

Ester boronique portant une fonction maléimide

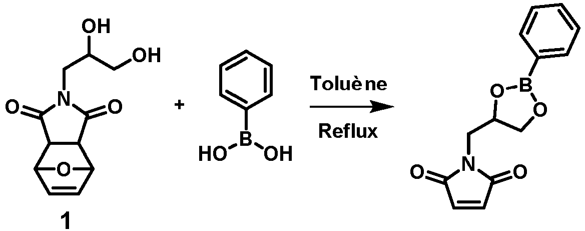

### Mode Opératoire:

Le diol portant une fonction maléimide protégée sous forme de cycloadduit furane/maléimide (**1**) (5.5 g, 23.1 mmol) et l'acide phénylboronique (2.8 g, 23.1 mmol) sont dissous dans du toluène (80 mL) et le mélange réactionnel est chauffé au reflux du toluène (température de consigne du bain d'huile 130°C) en utilisant un appareil de Dean-Stark pour éliminer l'eau formée au cours de la condensation. Après 6 heures de reflux, le mélange réactionnel est refroidi à température ambiante puis le solvant est éliminé sous vide. Le résidu ainsi obtenu est dissous dans l'éthanol puis le mélange est placé au congélateur à - 5°C. Les cristaux jaunes ainsi formés sont isolés par filtration puis séchés sous vide pour donner l'ester boronique portant une fonction maléimide cible (masse = 4.8 g, rendement = 81 %).

¹H NMR (DMSO-d6, 400 MHz): δ 7.66 (d, 2H, J = 8 Hz), 7.51 (t, 1H J = 7.2 Hz), 7.40 (t, 2H, J = 7.6 Hz), 7.07 (s, 2H), 4.75 (ddt, 1H, 3J2,3a = 8 Hz, 3J2,1 = 6 Hz, 3J2,3b = 5.6 Hz), 4.39 (dd, 1H, 2J3a,3b = 9.6 Hz, 3J3a,2 = 8 Hz), 4.11 (dd, 1H, 2J3b,3a = 9.6 Hz, 3J3b,2 5.6 Hz), 3.67 (d, 2H, 3J1,2 = 6 Hz). 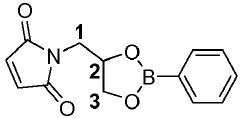 ¹³C NMR (DMSO-d6, 400 MHz): δ 170.9, 134.6, 134.4, 131.5, 127.8, 74.4, 68.5, 41.3
FT-IR (cm⁻¹): 3467, 3098, 3082, 3055, 3027, 2973, 2943, 2908, 1701, 1602, 1500, 1481, 1439, 1398, 1363, 1330, 1315, 1216, 1164, 1095, 1071, 1028, 1001, 980, 894, 828, 801, 765, 695, 658, 644

### Exemple 2 : Synthèse d'un ester boronique portant deux fonctions maléimide

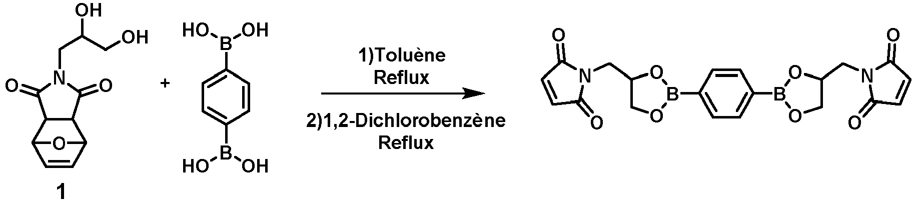

### Mode Opératoire:

Le diol portant une fonction maléimide protégée sous forme de cycloadduit furane/maléimide (1) (4 g, 16.7 mmol) et l'acide 1,4-benzènediboronique (1.38 g, 8.4 mmol) sont dissous dans du toluène (70 mL) et le mélange réactionnel est chauffé au reflux du toluène pendant 6 heures (température de consigne du bain d'huile 130°C) en utilisant un appareil de Dean-Stark pour éliminer l'eau formée au cours de la condensation. Au cours de cette période de chauffage, un précipité blanc ainsi qu'un résidu jaune/orangé collant aux parois du ballon en apparaissent. La solution ainsi que le précipité blanc sont séparés du résidu jaune/orangé, avant d'être concentré sous vide. Une analyse par RMN du proton dans le DMSO-d6 du produit brut indique une estérification complète mais une déprotection incomplète de la fonction maléimide. Le produit brut est redissous dans le 1,2-dichlorobenzène (50 mL) et chauffé à 140°C pendant 18 heures. Le solvant est ensuite éliminé sous vide pour donner l'ester boronique cible contenant deux fonction maléimide sous la forme d'un solide blanc cassé (masse = 2.5 g; rendement = 69.9%).

¹H NMR (DMSO-d6, 400 MHz): δ 7.65 (s, 4H,), 7.06 (s, 4H), 4.74 (ddt, 2H, 3J2,3a = 7.6 Hz, 3J2,3b = 6 Hz, 3J2,1 = 5.6 Hz,), 4.38 (t, 2H, J = 8.8 Hz), 4.1 (dd, 1H, 2J3b,3a = 9.6 Hz, 3J3b,2 = 6 Hz), 3.67 (d, 2H, 3J1,2 = 5.6 Hz). 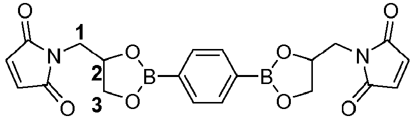 ¹³C NMR (DMSO-d6, 400 MHz): δ 170.9, 134.6, 132.1, 74.4, 68.5, 41.3
FT-IR (cm⁻¹): 3456, 3097, 2980, 2950, 2912, 1698, 1519, 1433, 1403, 1357, 1330, 1312, 1206, 1167, 1102, 1064, 1021, 893, 832, 693, 655, 642

### Exemple 3 : Synthèse d'un ester boronique portant une fonction thiol

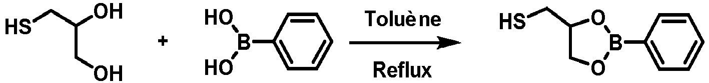

### Mode Opératoire:

Le thioglycérol (4.22 g, 39.0 mmol) et l'acide phénylboronique (5.0 g, 41.0 mmol) sont dissous dans du toluène (150 mL) et le mélange réactionnel est chauffé au reflux du toluène (température de consigne du bain d'huile 130°C) en utilisant un appareil de Dean-Stark pour éliminer l'eau formée au cours de la condensation. Après 3 heures de reflux, le mélange réactionnel est refroidi à température ambiante puis le solvant est éliminé sous vide. Le résidu ainsi obtenu est introduit dans du pentane puis le mélange est placé au congélateur à -18°C pendant une heure. Le mélange réactionnel est ensuite filtré, puis concentré sous vide pour donner l'ester boronique sous la forme d'une huile incolore (masse = 3.08 g; rendement = 40.7%).

¹H NMR (CDCl₃, 400 MHz): δ 7.82 (d, 2H, J = 8 Hz), 7.49 (t, 1H, J = 7.2 Hz), 7.39 (t, 2H, J = 7.6 Hz), 4.73 (ddt, 1H, ³J_{2,3a} = 8 Hz, ³J_{2,3b} = 6.4 Hz, ³J_{2,1} = 5.6 Hz), 4.48 (dd, 1H, ²J_{3a,3b} = 9.2 Hz, ³J_{3a,2} = 8 Hz), 4.17 (dd, 1H, ²J_{3b,3a} = 9.2 Hz, ³J_{3b,2} = 6.4 Hz), 2.80 (dd, 2H, J = 8.8 Hz, ³J_{1,2} = 5.6 Hz), 1.48 (t, 1H, SH, J = 8.8 Hz) 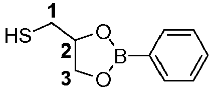 ¹³C NMR (CDCl₃, 400 MHz): δ 134.9, 131.6, 127.9, 69.8, 29.7
FT-IR (cm⁻¹): 3079, 3054, 3027, 2966, 2903, 2578, 1602, 1499, 1477, 1440, 1396, 1367, 1319, 1239, 1157, 1093, 1028, 984, 700, 644.

### Exemple 4 : Synthèse d'un ester boronique portant deux fonctions thiol

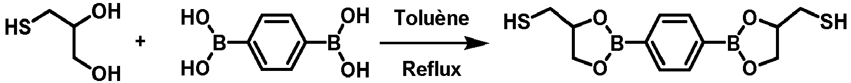

### Mode Opératoire:

Le thioglycérol (1.24 g, 11.5 mmol) et l'acide 1,4-benzènediboronique (1.0 g, 6.03 mmol) sont dissous dans du toluène (50 mL) et le mélange réactionnel est chauffé au reflux du toluène (température de consigne du bain d'huile 130°C) en utilisant un appareil de Dean-Stark pour éliminer l'eau formée au cours de la condensation. Après 3 heures de reflux, le mélange réactionnel est refroidi à température ambiante puis le solvant est éliminé sous vide pour donner l'ester boronique cible sous la forme d'un solide blanc (masse = 0.84 g; rendement = 45%).

1H NMR (CDCl₃, 400 MHz): δ 7.83 (s, 4H), 4.74 (ddt, 2H, 3J2,3a = 9.2 Hz, 3J2,3b = 6.8 Hz, 3J2,1 = 5.2 Hz), 4.48 (dd, 2H, 2J3a,3b = 9.2 Hz, 3J3a,2 = 8 Hz), 4.17 (dd, 2H, 2J3b,3a = 9.2 Hz, 3J3b,2 = 6.4 Hz), 2.81 (dd, 4H, J = 8.4 Hz, 3J1,2 = 5.2 Hz), 1.48 (t, 1H, SH, J = 8.4 Hz) 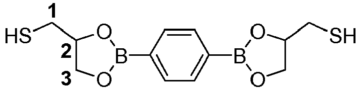 ¹³C NMR (CDC13, 400 MHz) : δ 134.1, 77.6, 69.8, 29.7
FT-IR (cm⁻¹): 3072, 3035, 2961, 2906, 2578, 1515, 1477, 1402, 1385, 1352, 1316, 1215, 1099, 1021, 952, 867, 837, 656

Les exemples 5 et 6 illustrent la fonctionnalisation de polymères avec des composés ester boronique de l'invention contenant des fonctions maléimide.

### Exemple 5 : Greffage de polyéthylène haute densité (HDPE) par un ester boronique portant une fonction maléimide (molécule décrite dans l'exemple 1)

L'exemple suivant illustre la possibilité de greffer par extrusion réactive des fonctions ester boronique sur un polyéthylène haute densité.

3.28 g de polyéthylène haute densité (Sigma Aldrich référence 427985), 0.21 g d'ester boronique portant une fonction maléimide (molécule décrite dans l'exemple 1) et 13 microlitre de peroxyde de di-tert-butyle (Numéro CAS: 110-05-4) sont mélangés à température ambiante dans une bécher au moyen d'une spatule.

Le mélange ainsi obtenu est introduit dans une extrudeuse bivis DSM micro 5cc. L'extrusion est réalisée à 200°C avec une vitesse de rotation des vis de 100 tours par min, et un temps de circulation de 10 minutes.

Le greffage des fonctions ester boronique est confirmé par spectroscopie infrarouge à transformée de Fourier.

Pour ce faire, le polymère obtenu à l'étape précédente est dissout dans du 1,2 dichlorobenzène en chauffant à 150°C jusqu'à obtention d'une solution homogène. Le polymère est ensuite isolé par précipitation dans l'acétone, puis filtration et séchage sous vide jusqu'à ce que sa masse demeure constante. Cette étape permet d'éliminer les esters boroniques portant une fonction maléimide qui n'auraient pas été greffés lors de l'extrusion réactive.

Le polymère est ensuite analysé par spectroscopie infrarouge à transformée de Fourier. Cette technique confirme le greffage des fonctions ester boronique, notamment via la présence d'une bande aux alentours de 1690-1740 cm⁻¹, caractéristique de la fonction carbonyle des groupement maléimide de l'ester boronique.

### Exemple 6: Greffage et réticulation de polyéthylène haute densité (HDPE) par un ester boronique portant deux fonctions maléimides (molécule décrite dans l'exemple 2)

L'exemple suivant illustre la possibilité de greffer des fonctions ester boronique et de réticuler par extrusion réactive un polyéthylène haute densité.

2.84 g de polyéthylène haute densité (Sigma Aldrich référence 547999), 0.121 g d'ester boronique portant deux fonctions maléimide (molécule décrite dans l'exemple 2) et 0.01 g de peroxyde de dicumyle (Numéro CAS: 80-43-3) sont mélangés à température ambiante dans une bécher au moyen d'une spatule.

Le mélange ainsi obtenu est introduit dans une extrudeuse bivis DSM micro 5cc. L'extrusion est réalisée à 200°C avec une vitesse de rotation des vis de 100 tours par min, et un temps de circulation de 5 minutes.

Le greffage des fonctions ester boronique et la réticulation du polyéthylène sont confirmés par analyse thermomécanique dynamique (DMA, fréquence 1 Hz , amplitude de déformation maximale 1%, chauffage 3 °C/min) en suivant les variations du module de stockage E' avec la température. Le polyéthylène haute densité greffé et réticulé par un ester boronique portant deux fonctions maléimides (molécule décrite dans l'exemple 2) présente un module de stockage E' compris entre 4 GPa et 50 MPa entre -50°C et 100°C, et compris entre 2 MPa et 0.4 MPa entre 150°C et 250°C. Comparativement, le polyéthylène haute densité de Sigma Aldrich (référence 547999) présente également un module de stockage E' compris entre 4 GPa et 50 MPa entre -50°C et 100°C. Toutefois, le module de stockage E' du polyéthylène haute densité de Sigma Aldrich (référence 547999) chute en dessous de 2 Pa au dessus de 140°C. Cette valeur correspond à un écoulement du matériau sous son propre poids et ne permet pas une analyse du matériau par DMA au delà de 140°C.

### Exemple 7 : Synthèse d'un ester boronique portant une fonction alcène terminale

Diol portant une fonction alcène terminale, **A1**

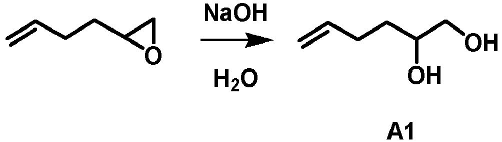

### Mode opératoire:

Le 1,2-epoxy-5-hexène (3.00 g, 30.6 mmol, 1 eq.) est ajouté à une solution aqueuse d'hydroxyde de sodium (61.0 mL, 2M, 4 eq.) et le mélange réactionnel est chauffé à 50 °C pendant 24h. Une fois le mélange réactionnel revenu à température ambiante, la réaction est neutralisée par ajout d'une solution aqueuse d'acide chlorhydrique (1M). Le mélange réactionnel est extrait avec de l'acétate d'éthyle. Les phases organiques sont regroupées, lavée à l'eau avant d'être séchées sur sulfate de magnésium. Le solvant est retiré sous vide puis le produit est purifié par chromatographie sur colonne de silice en utilisant un mélange acétate d'éthyle/hexane 50 vol%/50 vol% comme éluant. On obtient ainsi le diol portant une fonction alcène terminale, **A1,** sous la forme d'un liquide incolore (1.60 g, rendement = 46%).
**¹H NMR** (CDCl₃, 400 MHz): δ (ppm): 5.83 (m, 1H), 5.01 (m, 2H), 3.76-3.68 (m, 1H), 3.66-3.6 (m, 1H), 3.47-3.40 (m, 1H), 2.79 (d, 1H, *J =* 4.40 Hz), 2.72 (t, 1H, *J* = 5.67 Hz), 2.27-2.06 (m, 2H), 1.60-1.45 (m, 2H)
**¹³C NMR** (CDCl3, 100 MHz): δ (ppm): 138.04, 114.99, 71.70, 66.61, 32.07, 29.74.

Ester boronique portant une fonction alcène terminale, A2

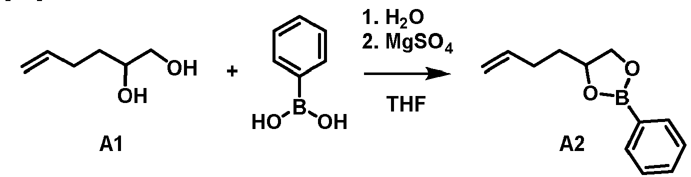

### Mode Opératoire:

Le diol portant une fonction alcène terminale **A1** (1.60 g, 13.77 mmol, 1 eq.) est dissous dans 10 mL de tétrahydrofurane (THF). L'acide phénylboronique (1.76 g, 14.46 mmol, 1.05 eq.) est ajouté au milieu réactionnel suivi de 0.5 mL d'eau. Le mélange réactionnel est agité 20 minutes à température ambiante avant que ne soit introduit du sulfate de magnésium (*ca.* 5g). Le mélange réactionnel est ensuite agité 16h à température ambiante, avant d'être filtré. Le solvant est ensuite évaporé sous vide pour donner l'ester boronique portant une fonction alcène terminale, A2, sous la forme d'un liquide incolore (2.60 g, 94%).

**¹H NMR** (CDCl₃, 400 MHz): δ (ppm): 7.80 (m, 2H), 7.50-7.45 (m, 1H), 7.41-7.35 (m, 2H), 5.86 (m, 1H), 5.12-4.98 (m, 2H), 4.65-4.55 (m, 1H), 4.44 (dd, 1H, *J* = 8.9 Hz, *J* = 7.8 Hz), 3.97 (dd, 1H, *J* = 8.9 Hz, *J* = 7.0 Hz), 2.35-2.15 (m, 2H), 1.90-1.65 (m, 2H)
**¹³C NMR** (CDC13, 100 MHz): δ (ppm): 137.53, 134.78, 131.37, 127.76, 115.19, 76.85, 71.07, 35.31, 29.23.

### Exemple 8 : Synthèse d'un ester boronique portant une fonction azoture

Exemple de schéma réactionnel permettant de préparer un ester boronique portant une fonction azoture

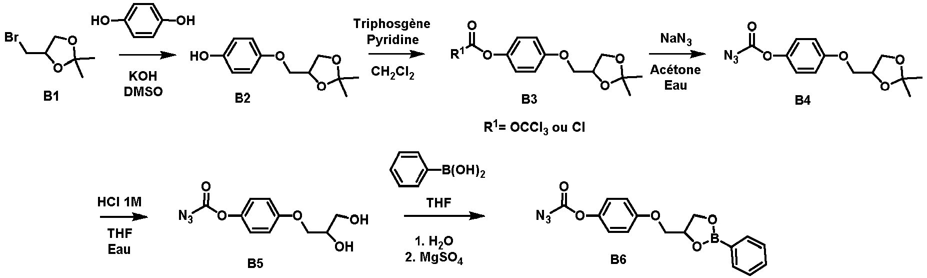

### Synthèse du composé B1

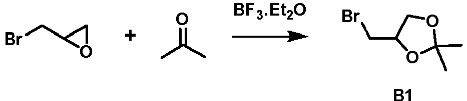

### Mode Opératoire:

10 gouttes de BF₃.Et₂O sont ajoutées à 50 mL d'acétone anhydre à température ambiante. L'épibromohydrine (20.0 g, 146 mmol) est ensuite ajoutée gouttes à gouttes au milieu réactionnel à température ambiante, puis le milieu réactionnel est maintenu sous agitation à température ambiante pendant 15 heures. Le composé **B1** est ensuite isolé par distillation sous vide. On obtient ainsi 23.0 g (rendement = 82 %) d'un liquide incolore.

**¹H NMR** (CDCl3, 400 MHz): δ (ppm): 4.33 (m, 1H), 4.11 (ddd, 1H, J = 8.7 Hz, J = 6.1 Hz, J = 0.6 Hz), 3.85 (dd, 1H, J = 8.7 Hz, J = 5.1 Hz), 3.40 (ddd, 1H, J = 10.0 Hz, J = 4.7 Hz, J = 0.6 Hz), 3.29 (dd, 1H, J = 10.0 Hz, J = 8.1 Hz), 1.42 (s, 3H), 1.33 (s, 3H).

### Synthèse du composé B2

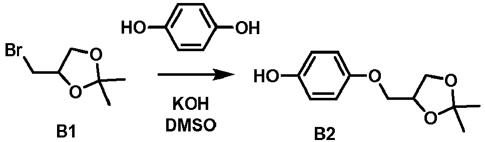

### Mode Opératoire:

KOH (40.27 g, 717.7 mmol, 20 eq.) est introduit dans une solution d'hydroquinone (11.85 g, 107.7 mmol, 3 eq.) dans 150 mL de diméthylsulfoxyde (DMSO). Le composé **B1** (7.00 g, 35.89 mmol, 1 eq.) est ensuite ajouté gouttes à gouttes à température ambiante au mélange réactionnel. Après 3 jours d'agitation à température ambiante, la réaction est neutralisée par ajout de bicarbonate d'ammonium. De l'eau est ajoutée au mélange réactionnel qui est ensuite extrait au chloroforme. Les phases organiques sont rassemblées, lavées à l'eau avant d'être séchées sur MgSO₄. Le solvant est évaporé sous vide et le brut réactionnel est purifié par chromatographie sur colonne de silice en utilisant le chloroforme puis l'éther comme éluants. On obtient ainsi le composé **B2** (0.94 g, rendement = 12%) sous la forme d'un liquide incolore.

**¹H NMR** (DMSO-*d₆*, 400 MHz): δ (ppm): 8.91 (s, 1H), 6.76 (m, 2H), 6.66 (m, 2H), 4.34 (m, 1H), 4.06 (dd, 1H, *J* = 8.3 Hz, *J* = 6.6 Hz), 3.87 (m, 2H), 3.71 (dd, 1H, *J* = 8.3 Hz, *J* = 6.3 Hz), 1.34 (s, 3H), 1.29 (s, 3H).

### Synthèse du composé B3

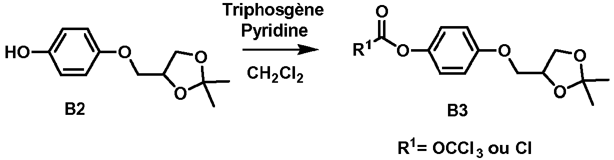

### Mode Opératoire:

Une solution de **B2** (1.06 g, 4.72 mmol, 1eq.) dans 2.5 mL de dichlorométhane (DCM) est ajoutée gouttes à gouttes à 0°C à une solution de triphosgène (0.50 g, 1.69 mmol, 0.36 eq.) dans 5 mL de DCM. Une solution de pyridine (0.37 g, 4.70 mmol, 1 eq.) dans 2.5 mL de DCM est ensuite ajoutée gouttes à gouttes à 0°C au mélange réactionnel. Une fois revenu à température ambiante, le mélange réactionnel est agité 20 h supplémentaires, toujours à température ambiante, tout en réalisant un suivi de la réaction par chromatographie sur couche mince. Le solvant est évaporé sous vide pour donner le composé **B3** qui est conservé sous atmosphère inerte avant d'être utilisé tel quel pour préparer le composé **B4**.

**¹H NMR** (DMSO-*d₆*, 400 MHz): δ (ppm): 6.74 (m, 2H), 6.68 (m, 2H), 4.34 (m, 2H), 4.06 (dd, 1H, *J*= 8.3 Hz, *J* = 6.6 Hz), 3.86 (m, 2H), 3.71 (dd, 2H, *J* = 8.3 Hz, *J* = 6.4 Hz), 1.34 (s, 3H), 1.29 (s, 3H).

### Synthèse du composé B4

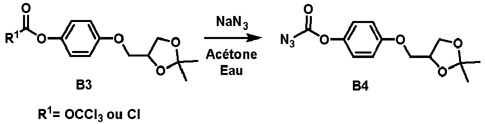

### Mode Opératoire:

Une solution du composé **B3** (1.35 g, 4.72 mmol, 1 eq.) dans 10 mL d'acétone est ajoutée gouttes à gouttes à 0°C à une solution d'azoture de sodium (0.46 g, 7.12 mmol, 1.5 eq.) dans 5 mL d'eau. Une fois revenu à température ambiante, le mélange réactionnel est agité 16 h supplémentaires. Le mélange réactionnel est ensuite extrait à l'acétate d'éthyle. Les phases organiques sont rassemblées, lavées à l'eau puis séchées sur MgSO₄. Le solvant est évaporé sous vide et le brut réactionnel est purifié par chromatographie sur colonne de silice en utilisant l'éther diéthylique comme éluant. On obtient ainsi le composé **B4** (0.60 g, rendement = 43%) sous la forme d'un liquide incolore.

**¹H NMR** (CDCl₃, 400 MHz): δ (ppm): 7.08 (m, 2H), 6.91 (m, 2H), 4.47 (m, 1H), 4.16 (dd, 1H, *J* = 8.5 Hz, *J* = 6.4 Hz), 4.04 (dd, 1H, *J* = 9.4 Hz, *J* = 5.4 Hz), 3.92 (dd, 1H, *J* = 9.4 Hz, *J* = 5.8 Hz), 3.89 (dd, 1H, *J* = 8.5Hz, *J* = 5.8 Hz), 1.46 (s, 3H), 1.40 (s, 3H).
**¹³C NMR** (CDCl₃, 100 MHz): δ (ppm): 156.74, 156.59, 144.47, 121.77, 115.23, 109.81, 73.88, 69.22, 66.73, 26.75, 25.31.

### Synthèse du composé B5

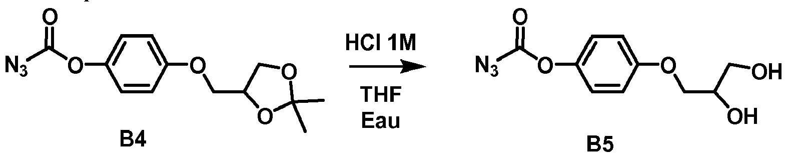

### Mode Opératoire:

Le composé **B4** (250 mg, 0.85 mmol) est solubilisé dans 10 mL de THF à température ambiante puis 10 mL d'une solution aqueuse d'acide chlorhydrique à 1M sont ajoutés gouttes à gouttes. Le mélange réactionnel est agité 48 h à température ambiante avant d'être extrait au DCM. Les phases organiques sont rassemblées, séchées sur MgSO₄, puis le solvant est évaporé sous vide pour donner le composé **B5** (190 mg, rendement = 88 %) sous la forme d'un solide blanc.

**¹H NMR** (DMSO-*d₆*, 400 MHz): δ (ppm): 7.18 (m, 2H), 6.98 (m, 2H), 4.95 (d, 1H, *J* = 5.1 Hz), 4.66 (t, 1H, *J* = 5.7Hz), 4.00 (dd, 1H, *J* = 9.8 Hz, *J* = 4.1 Hz), 3.86 (dd, 1H, *J* = 9.8 Hz, *J* =6.1 Hz), 3.79 (m, 1H), 3.44 (t, 2H, *J* = 5.7 Hz).
**¹³C NMR** (DMSO-*d₆*, 100 MHz): δ (ppm): 156.85, 155.91, 143.67, 122.00, 115.04, 69.94, 69.79, 62.54, 39.43.

### Synthèse de l'ester boronique portant une fonction azoture, B6

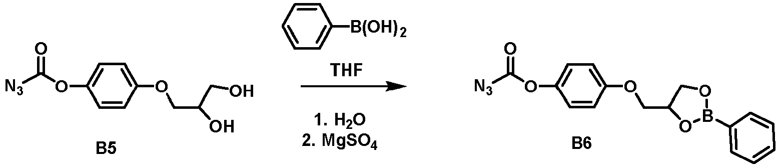

### Mode Opératoire:

Le composé **B5** (0.51 g, 2.01 mmol, 1eq.) est dissous dans 5 mL de THF. L'acide phénylboronique (257 mg, 2.11 mmol, 1.05 eq.), puis 0.5 mL d'eau, sont ajoutés au mélange réactionnel qui est ensuite laissé sous agitation à température ambiante 20 min. Du MgSO₄ (728 mg, 3eq.) est ajouté au milieu réactionnel qui est maintenu sous agitation à température ambiante 16 heures supplémentaires. Le milieu réactionnel est filtré, puis le solvant est élimé sous vide pour donner l'ester boronique portant une fonction azoture **B6** (0.58 g, rendement = 85%) sous la forme d'un solide blanc.

**¹H NMR** (CDCl₃, 400 MHz): δ (ppm): 7.84 (m, 2H), 7.50 (m, 1H), 7.40 (m, 2H), 7.09 (m,2H), 6.93 (m, 2H), 4.93 (m, 1H), 4.52 (dd, 1H, *J* = 9.2 Hz, *J* = 8.1 Hz), 4.32 (dd, 1H, *J* = 9.2 Hz, *J*= 6.3 Hz), 4.15 (dd, 1H, *J* = 9.8 Hz, *J* = 4.6 Hz), 4.09 (dd, 1H, *J* = 9.8 Hz, *J* = 5.2 Hz).
**¹³C NMR** (CDCl₃, 100 MHz): δ (ppm): 156.68, 156.57, 144.58, 134.88, 131.62, 127.95, 127.83, 121.82, 115.36, 75.22, 70.00, 68.24.

### Exemple 9 : Synthèse d'un ester boronique portant une fonction nitroxyde

Exemple de schéma réactionnel permettant de préparer un ester boronique portant une fonction nitroxyde

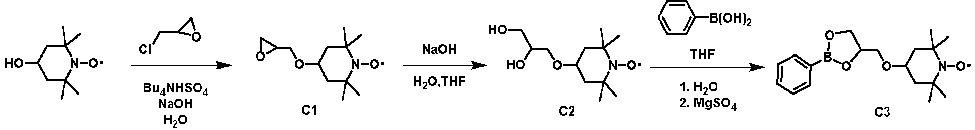

### Synthèse du composé C1

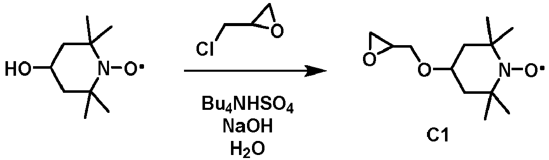

### Mode Opératoire:

L'épichlorohydrine (20.68 g, 223.5 mmol, 5.5 eq.) est ajoutée goutes à goutes à température ambiante à une solution aqueuse d'hydroxyde de sodium (35 mL, 50%). L'hydrogénosulfate de tétrabutylammonium (0.69 g, 2.0 mmol, 0.05 eq.) est ajouté avant que le 4-hydroxy-TEMPO (7.00 g, 40.6 mmol, 1 eq.) ne soit introduit dans le mélange réactionnel placé sous forte agitation. Le milieu réactionnel est agité 24 heures supplémentaires à température ambiante avant d'être extrait avec de l'éther diéthylique. Les phases organiques sont combinées, lavées avec de la saumure, séchées sur MgSO₄, filtrées puis concentrées sous vide. Le brut réactionnel est ensuite purifié par chromatographie sur colonne de silice en utilisant un mélange DCM/MeOH 95/5 vol/vol comme éluant. Le composé **C1** (7.13 g, rendement = 77%) est ainsi obtenu sous la forme d'une huile rouge.

**¹H NMR** (CDCl₃ en présence de phénylhydrazine, 400 MHz): δ (ppm): 7.19-7.13 (m), 6.76-6.70 (m), 3.65 (dd, 1H, *J* = 11.1 Hz, *J* = 3.1 Hz), 3.57 (tt, 1H, *J* = 11.1 Hz, *J* = 4.1 Hz), 3.33 (dd, 1H, *J* = 11.1 Hz, *J* = 5.8 Hz), 3.05 (m, 1H), 2.71 (dd, 1H, *J* = 5.0 Hz, *J* = 4.1 Hz), 2.53 (dd, 1H, *J* = 5.0 Hz, *J* = 2.7 Hz), 1.86 (m, 2H), 1.40 (m, 2H), 1.14 (s, 6H), 1.08 (s, 6H)
**¹³C NMR** (CDCl₃ en présence de phénylhydrazine, 100 MHz): δ (ppm): 151.04, 129.11, 128.23, 119.36, 112.05, 71.10, 68.87, 59.46, 50.99, 44.38, 31.79, 20.60.

### Synthèse du composé C2

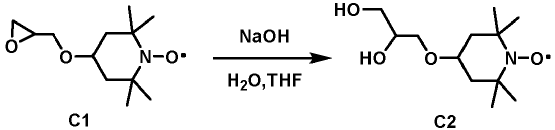

### Mode Opératoire:

Une solution de composé **C1** (3.50 g, 15.33 mmol, 1.0 eq.) dans 5 mL de THF est ajoutée à une solution aqueuse d'hydroxyde de sodium (30.0 mL, 2M, 4.0 eq.). Le mélange réactionnel est chauffé à 50°C sous agitation pendant 24h. Après retour du milieu réactionnel à température ambiante, la réaction est neutralisée par ajout d'une solution aqueuse d'acide chlorhydrique 1M. Le mélange réactionnel est extrait au dichlorométhane. Les phases organiques sont regroupées, lavées à l'eau, séchées sur MgSO₄ puis filtrées. Le solvant est évaporé sous vide et le brut réactionnel est purifié par chromatographie sur colonne de silice en utilisant un mélange CDCl₃/MeOH 95/5 vol/vol comme éluant. Le composé **C2** (2.05 g, rendement = 54%) est ainsi obtenu sous la forme d'une huile rouge.

**¹H NMR** (CDCl₃ en présence de phénylhydrazine, 400 MHz): δ (ppm): 7.16-7.11 (m), 6.75-6.69 (m), 3.74 (s, 1H), 3.60 (dd, 1H, *J* = 11.5 Hz, *J* = 3.5 Hz), 3.55-3.49 (m, 2H), 3.45-3.40 (m, 2H), 1.90-1.80 (m, 2H), 1.45-1.35 (m, 2H), 1.13 (s, 6H), 1.06 (s, 6H).
**¹³C NMR** (CDCl₃ en présence de phénylhydrazine, 100 MHz): δ (ppm): 124.08, 66.89, 66.75, 65.85, 65.28, 56.39, 39.64, 27.13, 16.81, 16.78.

### Synthèse de l' ester boronique portant une fonction nitroxyde, C3

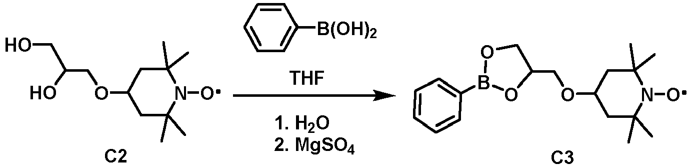

### Mode Opératoire:

Le composé **C2** (0.34 g, 1.38 mmol, 1 eq.) est dissous dans 5 mL de THF. L'acide phénylboronique (177 mg, 1.45 mmol, 1.05 eq.), puis 0.5 mL d'eau, sont ajoutés au mélange réactionnel qui est ensuite laissé sous agitation à température ambiante 20 min. Du MgSO₄ (498 mg, 3eq.) est ajouté au milieu réactionnel qui est maintenu sous agitation à température ambiante 16 heures supplémentaires. Le milieu réactionnel est filtré, puis le solvant est élimé sous vide pour donner l'ester boronique portant une fonction nitroxyde **C3** (0.39 g, rendement = 85%) sous la forme d'une huile rouge.

**¹H NMR** (CDCl₃, en présence de phénylhydrazine 400 MHz): δ (ppm): 7.80-7.70 (m, 2H), 7.41-7.35 (m, 1H), 7.31-7.25 (m, 2H), 4.64-4.55 (m, 1H), 4.30 (dd, 1H, *J* = 9.1 Hz, *J* = 8.2 Hz), 4.07 (dd, 1H, *J* = 9.1 Hz, *J =* 6.4 Hz), 3.62-3.52 (m, 2H), 3.47 (dd, 1H, *J* = 10.2 Hz, *J =* 5.1 Hz), 1.95-1.75 (m, 2H), 1.50-1.35 (m, 2H), 1.20-1.00 (m, 12H).
**¹³C NMR** (CDCl₃, en présence de phénylhydrazine 100 MHz): δ (ppm): 156.03, 134.79, 131.50, 129.50, 128.28, 127.78, 120.20, 115.40, 76.23, 71.19, 70.17, 68.30, 62.64, 43.01, 21.70.

Les exemples 10 et 11 illustrent la fonctionnalisation de polymères avec des composés ester boronique de l'invention contenant des fonctions nitroxyde.

### Exemple 10 : Greffage de polybutadiène par un ester boronique portant une fonction nitroxide (molécule C3 décrite dans l'exemple 9)

L'exemple suivant illustre la possibilité de greffer par extrusion réactive des fonctions ester boronique sur un polybutadiène.

Le polybutadiène (Arlanxeo, référence buna CB24, 96% cis, 87.7 % en masse du mélange total), l'ester boronique portant une fonction nitroxyde (molécule **C3** décrite dans l'exemple 9, 8.4 % en masse du mélange total) et le peroxyde de lauryle (Numéro CAS: 105-74-8, 3.9 % en masse du mélange total) sont mélangés à température ambiante dans une bécher au moyen d'une spatule.

3g du mélange ainsi obtenu sont introduits dans une extrudeuse bivis DSM micro 5cc. L'extrusion est réalisée à 110°C avec une vitesse de rotation des vis de 100 tours par min, et un temps de circulation de 10 minutes. L'extrudât ainsi obtenu est dissous dans du dichlorométhane anhydre puis précipité dans du méthanol anhydre afin d'éliminer l'ester boronique portant une fonction nitroxide **C3** qui n'aurait pas été greffé chimiquement sur le polybutadiène. Le polymère ainsi obtenu est séché sous vide une nuit avant d'être analysé par spectroscopie infrarouge à transformée de Fourier. Cette analyse confirme le greffage des fonctions ester boronique, notamment via la présence d'une bande à 1097cm⁻¹, caractéristique de l'ester boronique portant une fonction nitroxide **C3**.

### Exemple 11 : Greffage de polyéthylène haute densité (HDPE) par un ester boronique portant une fonction nitroxyde (molécule C3 décrite dans l'exemple 9)

L'exemple suivant illustre la possibilité de greffer par extrusion réactive des fonctions ester boronique sur un polyéthylène.

Le polyéthylène haute densité (Sigma Aldrich référence 427985, 89.8 % en masse du mélange total), l'ester boronique portant une fonction nitroxyde (molécule **C3** décrite dans l'exemple 9, 7.7 % en masse du mélange total) et le peroxyde de dicumyle (Numéro CAS: 80-43-3, 2.5 % en masse du mélange total) sont mélangés à température ambiante dans une bécher au moyen d'une spatule.

3g du mélange ainsi obtenu sont introduits dans une extrudeuse bivis DSM micro 5cc. L'extrusion est réalisée à 170°C avec une vitesse de rotation des vis de 100 tours par min, et un temps de circulation de 10 minutes. L'extrudât ainsi obtenu est dissous à chaud dans de l'ortho-dichlorobenzène puis précipité dans de l'acétone anhydre afin d'éliminer l'ester boronique portant une fonction nitroxide **C3** qui n'aurait pas été greffé chimiquement sur le polyéthylène haute densité. Le polymère ainsi obtenu est séché sous vide une nuit avant d'être analysé par spectroscopie infrarouge à transformée de Fourier. Cette analyse confirme le greffage des fonctions ester boronique, notamment via la présence d'une bande à 1097cm⁻¹, caractéristique de l'ester boronique portant une fonction nitroxide **C3**.

L'exemple 12 illustre la fonctionnalisation du polyisoprène avec des composés ester boronique de l'invention contenant des fonctions azoture.

### Exemple 12 : Greffage de polyisoprène par un ester boronique portant une fonction azoture (molécule B6 décrite dans l'exemple 8)

L'exemple suivant illustre la possibilité de greffer par extrusion réactive des fonctions ester boronique sur un polyisoprène.

Le polyisoprène (Zeon, référence IR2200, 97.6 % en masse du mélange total) et l'ester boronique portant une fonction azoture (molécule **B6** décrite dans l'exemple 8, 2.4 % en masse du mélange total) sont mélangés à température ambiante dans une bécher au moyen d'une spatule.

3g du mélange ainsi obtenu sont introduits dans une extrudeuse bivis DSM micro 5cc. L'extrusion est réalisée à 120°C avec une vitesse de rotation des vis de 100 tours par min, et un temps de circulation de 20 minutes. L'extrudât ainsi obtenu est dissous dans du chloroforme anhydre puis précipité dans du méthanol anhydre afin d'éliminer l'ester boronique portant une fonction azoture **B6** qui n'aurait pas été greffé chimiquement sur le polyisoprène. Le polymère ainsi obtenu est séché sous vide une nuit avant d'être analysé par RMN du proton. Cette analyse confirme le greffage des fonctions ester boronique, notamment via la présence de pics entre 6.80 et 7.90 ppm, caractéristiques des deux cycles aromatiques de l'ester boronique portant une fonction azoture, **B6**, ainsi que de pics entre 4.0 et 4.6 ppm, caractéristiques de la fonction dioxaborolane de l'ester boronique portant une fonction azoture, **B6**.

L'exemple 13 illustre la fonctionnalisation de polydiméthylsiloxane contenant des fonctions thiol avec des composés ester boronique de l'invention contenant des fonctions alcène.

### Exemple 13 : Greffage du copolymère poly[(mercaptopropyl)methylsiloxane]dimethylsiloxane par un ester boronique portant une fonction alcène (molécule A2 décrite dans l'exemple 7)

L'exemple suivant illustre la possibilité de greffer par irradiation lumineuse des fonctions ester boronique sur un polydiméthylsiloxane contenant des fonctions thiol.

Le polydiméthylsiloxane contenant des fonctions thiol (poly[(mercaptopropyl)methylsiloxane] dimethylsiloxane, Gelest, référence SMS-142, 73.7 % en masse du mélange total), l'ester boronique portant une fonction alcène (molécule **A2** décrite dans l'exemple 7, 25.4 % en masse du mélange total) et la 2,2-diméthoxy-2-phenylacetophénone (Numéro CAS: 24650-42-8, 0.9 % en masse du mélange total) sont mélangés à température ambiante dans une bécher au moyen d'une spatule.

Ce mélange est ensuite étalé dans une boîte de pétri afin d'obtenir un film d'une épaisseur comprise entre 1 et 3 mm. Ce film est ensuite placé sous irradiation UV (365 nm, 15 mW.cm⁻²) pendant 5 minutes à température ambiante.

Le polymère ainsi obtenu est ensuite analysé par RMN du proton. Cette analyse confirme le greffage des fonctions ester boronique, notamment via la disparition complète des pics compris entre 4.90 et 5.90 ppm, correspondant à la fonction alcène de l'ester boronique portant une fonction alcène, **A2**, et la présence des pics entre 7.0 et 8.0 ppm, caractéristiques du cycle aromatique de l'ester boronique portant une fonction alcène, **A2**, ainsi que de pics entre 3.9 et 4.7 ppm, caractéristiques de la fonction dioxaborolane de l'ester boronique portant une fonction alcène, **A2**.

L'exemple 14 suivant illustre la fonctionnalisation de polyéthylène haute densité avec des composés ester boronique de l'invention contenant des fonctions maléimide.

### Exemple 14 : Greffage de polyéthylène haute densité (HDPE) par un ester boronique portant une fonction maléimide (molécule décrite dans l'exemple 1)

L'exemple suivant illustre la possibilité de greffer par extrusion réactive des fonctions ester boronique sur un polyéthylène haute densité.

Le polyéthylène haute densité (Sigma Aldrich référence 427985, 95.95 % en masse du mélange total), l'ester boronique portant une fonction maléimide (molécule décrite dans l'exemple 1, 4.0 % en masse du mélange total) et le peroxyde de dicumyle (Numéro CAS: 80-43-3, 0.05 % en masse du mélange total) sont mélangés à température ambiante dans une bécher au moyen d'une spatule.

3g du mélange ainsi obtenu sont introduits dans une extrudeuse bivis DSM micro 5cc. L'extrusion est réalisée à 170°C avec une vitesse de rotation des vis de 100 tours par min, et un temps de circulation de 8 minutes.

Le greffage des fonctions ester boronique est confirmé par spectroscopie infrarouge à transformée de Fourier.

Pour ce faire, le polymère obtenu à l'étape précédente est dissout dans du 1,2 dichlorobenzène en chauffant à 150°C jusqu'à obtention d'une solution homogène. Le polymère est ensuite isolé par précipitation dans l'acétone anhydre, puis filtration et séchage sous vide jusqu'à ce que sa masse demeure constante. Cette étape permet d'éliminer les esters boroniques portant une fonction maléimide qui n'auraient pas été greffés lors de l'extrusion réactive.

Le polymère est ensuite analysé par spectroscopie infrarouge à transformée de Fourier. Cette analyse confirme le greffage des fonctions ester boronique, notamment via la présence d'une bande aux alentours de 1690-1740 cm⁻¹, caractéristique de la fonction carbonyle des groupement maléimide de l'ester boronique.

L'exemple 15 suivant illustre la fonctionnalisation de polybutadiène avec des composés ester boronique de l'invention contenant des fonctions thiol.

### Exemple 15 : Greffage du polybutadiène par un ester boronique portant une fonction thiol (molécule décrite dans l'exemple 3)

L'exemple suivant illustre la possibilité de greffer des fonctions ester boronique sur un polybutadiène contenant majoritairement des unités de répétition obtenues par addition-1,2.

Le polybutadiène (Sigma-Aldrich, référence 466867, environ 90% d'unité de répétition vinyle-1,2, 0.5 g, 7.57 mmol), l'ester boronique portant une fonction thiol (molécule décrite dans l'exemple 3)

(0,147 g, 0.7 mmol) et l'AIBN (0,004 g, 0.0034 mmol) sont dissous dans 3 mL d'anisole. Le mélange réactionnel est placé sous atmosphère d'argon en faisant buller de l'argon pendant 30 min à température ambiante. Le milieu réactionnel est ensuite chauffé à 100 °C pendant 45 min tout en étant maintenu sous atmosphère d'argon. Une fois le mélange réactionnel revenu à température ambiante, le polymère est précipité dans le méthanol anhydre afin d'éliminer l'ester boronique portant une fonction thiol (molécule décrite dans l'exemple 3) qui n'aurait pas été greffé chimiquement sur le polybutadiène. Le polymère ainsi obtenu est séché sous vide une nuit avant d'être analysé par RMN du proton. Cette analyse confirme le greffage des fonctions ester boronique, notamment via la présence des pics entre 7.0 et 8.0 ppm, caractéristiques du cycle aromatique de l'ester boronique portant une fonction thiol (molécule décrite dans l'exemple 3), ainsi que de pics entre 3.9 et 4.7 ppm, caractéristiques de la fonction dioxaborolane de l'ester boronique portant une fonction thiol (molécule décrite dans l'exemple 3).

### Exemple 16 : Synthèse d'un ester boronique portant une fonction maléimide Diol,1-3 portant une fonction maléimide protégée sous forme de cycloadduit furane/maléimide (D1)

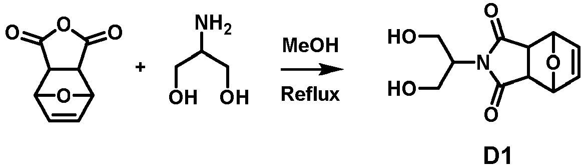

### Mode opératoire:

L'exo-3,6-epoxy-1,2,3,6-tetrahydrophthalic anhydride (1.82 g, 11 mmol) et le sérinol (1 g, 11 mol) sont dissous dans 50 mL de méthanol. Le mélange réactionnel ainsi obtenu est agité au reflux du méthanol pendant 48 heures au cours desquelles une petite quantité d'un précipité orange se forme. Une fois le mélange réactionnel revenu à température ambiante, le précipité orange est éliminé par filtration puis le solvant est évaporé sous vide pour donner le composé D1 sous la forme d'un liquide incolore. La structure du composé D1 est confirmée par RMN ¹H et ce produit est utilisé tel quel pour préparer le composé **D2**.

### Ester boronique portant une fonction maléimide (D2)

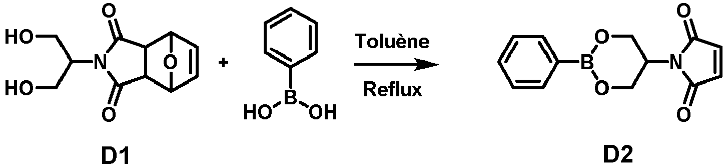

### Mode Opératoire:

Le diol portant une fonction maléimide protégée sous forme de cycloadduit furane/maléimide (D**1**) (2.63 g, 11 mmol) et l'acide phénylboronique (1.34 g, 23.1 mmol) sont dissous dans 40 mL de toluène et le mélange réactionnel est chauffé au reflux du toluène (température de consigne du bain d'huile 130°C) en utilisant un appareil de Dean-Stark pour éliminer l'eau formée au cours de la condensation. Après 7 heures de reflux, le mélange réactionnel est refroidi à température ambiante, décanté pour éliminer le solide jaune/orange qui s'est formé pendant les 7 heures de reflux, puis le solvant est éliminé sous vide. Le résidu ainsi obtenu est dissous dans l'éthanol puis le mélange est placé au congélateur à -5°C. Les cristaux blancs ainsi formés sont isolés par filtration puis séchés sous vide pour donner l'ester boronique portant une fonction maléimide cible **D2** (masse = 1.03 g, rendement = 35 % sur les deux étapes de synthèses de **D1** et **D2**).

¹H NMR (CDCl₃, 400 MHz): δ 7.79 (m, 2H), 7.40 (m, 3H), 6.73 (s, 2H), 4.58 (m, 3H), 4.14 (m, 2H).

## Revendications

1. Composé de formule (I) 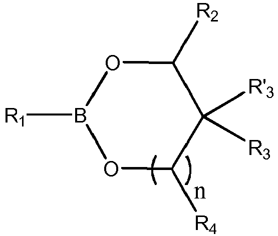
n = 0 ou 1
R₁ est lié de manière covalente à l'atome de bore par un atome de carbone et représente un groupement hydrocarboné, substitué ou non, pouvant comprendre un ou des hétéroatomes ou halogènes, en particulier pouvant être substitué par au moins un radical de formule (I') 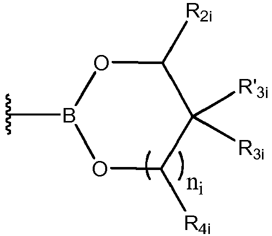
nᵢ = 0 ou 1
R₂, R₂ᵢ, R₃, R'₃, R₃ᵢ, R'₃ᵢ, R₄, R₄ᵢ, identiques ou différents, représentent un atome d'hydrogène ou un radical hydrocarboné, substitué ou non, pouvant comprendre un ou des hétéroatomes ou halogènes, ou forment ensemble, deux à deux, un cycle aliphatique ou aromatique
R₂, R₂ᵢ, R₃, R'₃, R₃ᵢ, R'₃ᵢ, R₄, R₄ᵢ ne sont pas substitués par un radical de formule (I') R₁ peut représenter un radical de formule -X, lié de manière covalente à l'atome de bore par un atome de carbone
Lorsque R₁ représente un radical de formule -X, aucun ou un de R₂, R₃, R'₃ ou R₄ représente un radical de formule -X
Lorsque R₁ ne représente pas un radical de formule -X, un de R₂, R₃, R'₃ ou R₄ représente un radical de formule -X
R'₃ = H lorsque n=0 ou lorsque R₂ ou R₄ représente un radical de formule -X
Un de R₂ᵢ, R₃ᵢ, R'₃ᵢ ou R₄ᵢ représente un radical de formule ―Xᵢ
R'₃ᵢ = H lorsque nᵢ=0 ou lorsque R₂ᵢ ou R₄, représente un radical de formule ―Xᵢ
X, Xᵢ sont choisis parmi :
- -(CH₂)ₘ-CH(R₅)-Y où Y est un radical maléimide, thiol, -NH₂, acrylamide, méthacrylamide, alcène terminal, m est un entier allant de 0 à 12, R₅ est un radical hydrocarboné, substitué ou non, pouvant comprendre un ou des hétéroatomes ou halogènes ;
- -(CH₂)ₘ-R₆-Y où Y est un radical maléimide, thiol, -NH₂, acrylamide, méthacrylamide, alcène terminal, m est un entier allant de 0 à 12, R₆ est un radical hydrocarboné, substitué au moins par Y, pouvant comprendre un ou des hétéroatomes ou halogènes ;
- -(CH₂)ᵣ-Y, où Y est un radical maléimide, thiol, -NH₂, acrylamide, méthacrylamide, alcène terminal, r est un entier allant de 1 à 12 ; 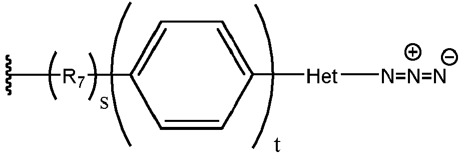 avec Het = -O-CO- ou - 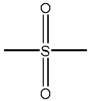 et R₇ est un radical hydrocarboné, substitué ou non, pouvant comprendre un ou des hétéroatomes ou halogènes, s vaut 0 ou 1, t vaut 0 ou 1, s+t = 1 ou 2, préférentiellement s+t=1 ; 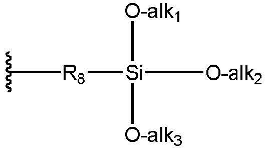 avec alk₁, alk₂, alk₃ représentant chacun, indépendamment les uns des autres, un alkyle, linéaire ou ramifié, en C₁-C₄ et R₈ est un radical hydrocarboné, substitué ou non, pouvant comprendre un ou des hétéroatomes ou halogènes 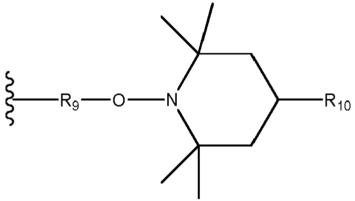 avec R₉ est un radical hydrocarboné, substitué ou non, pouvant comprendre un ou des hétéroatomes ou halogènes et R₁₀ est un atome d'hydrogène, ou un radical hydroxyle, ou un radical hydrocarboné, substitué ou non, pouvant comprendre un ou des hétéroatomes ou halogènes ; 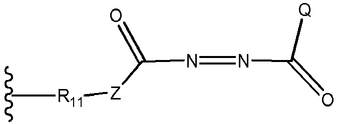 la double liaison est de configuration *cis* ou *trans*, avec R₁₁ est un radical hydrocarboné, substitué ou non, pouvant comprendre un ou des hétéroatomes ou halogènes, Z est un groupe divalent choisi parmi -O-, -S-, -NH-, Q est un radical alcoxy en C₁-C₆ ou 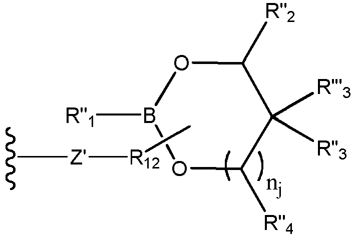 avec Z' est un groupe divalent choisi parmi -O-, -S-, -NH-, un de Rʺ₂, R‴₃, Rʺ₃, Rʺ₄, Rʺ₁ est manquant en fonction du lieu de substitution, R₁₂ est un radical hydrocarboné, substitué ou non, pouvant comprendre un ou des hétéroatomes ou halogènes, Rʺ₁ est lié de manière covalente à l'atome de bore par un atome de carbone et représente un groupement hydrocarboné, substitué ou non, pouvant comprendre un ou des hétéroatomes ou halogènes, Rʺ₂, Rʺ₃, R‴₃, Rʺ₄, identiques ou différents, représentent un atome d'hydrogène ou un radical hydrocarboné, substitué ou non, pouvant comprendre un ou des hétéroatomes ou halogènes, ou forment ensemble, deux à deux, un cycle aliphatique ou aromatique, Rʺ₁ est lié de manière covalente à l'atome de bore par un atome de carbone et représente un groupement hydrocarboné, substitué ou non, pouvant comprendre un ou des hétéroatomes ou halogènes ; 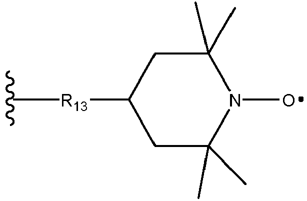 avec R₁₃ est un radical hydrocarboné, substitué ou non,
X et Xᵢ portant chacun la même fonction terminale Y, azoture, alkoxysilane, alkoxyamine, azodicarbonyle ou nitroxyde ; en particulier X et Xi sont identiques
Et R₁ ne peut représenter X que lorsque X répond aux définitions suivantes : 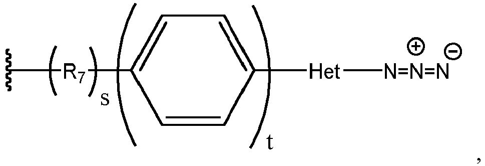
avec R₇, s, t et Het étant tels que définis précédemment ; ou 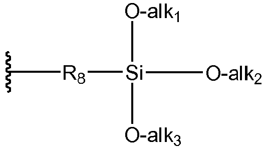
avec alk₁, alk₂, alk₃ et R₈ étant tels que définis précédemment ; ou 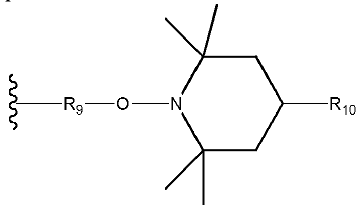
avec R₉ et R₁₀ étant tels que définis précédemment ; ou 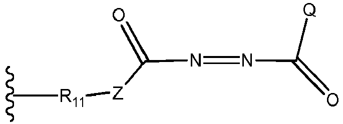
avec R₁₁, Z et Q étant tels que définis précédemment ; 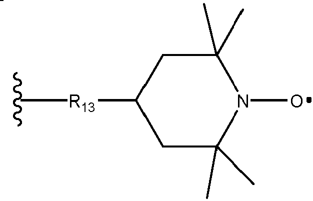
avec R₁₃ étant tel que défini précédemment.

2. Composé selon la revendication précédente, **caractérisé en ce que** le radical R₁ ne représente pas X et R₁ représente un groupe alkyle, aryle, aralkyle, alkyle-aryle ou cycloalkyle , chacun de ces groupes peut également comprendre des hétéroatomes tels que O, N, S, ou Si, avantageusement le radical R₁ représente un cycle benzénique, un cycle naphtalénique, un groupe arylaliphatique composé de deux cycles benzéniques reliés par un groupe alcanediyle en C₁-C₆, un cycle pyridine, un cycle pyrimidine, un cycle triazine, non substitué ou substitué de 1 à 3 fois, plus avantageusement un cycle benzénique non substitué.

3. Composé selon l'une quelconque des revendications précédentes, **caractérisé en ce que** le radical R₁ est substitué par des groupes fonctionnels, tels que des fonctions ester ou amide ou (méth)acrylate ou styrène ou un composé de formule (I'), plus préférentiellement par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en C₁-C₅₀.

4. Composé selon l'une quelconque des revendications précédentes, **caractérisé en ce que** le radical R₁ est interrompu par des fonctions ester, amide, éther, thioéther, amine secondaire ou tertiaire, carbonate, uréthane, carbamide, anhydride.

5. Composé selon la revendication 1, **caractérisé en ce que** le radical R₁ représente X et X répond aux définitions suivantes 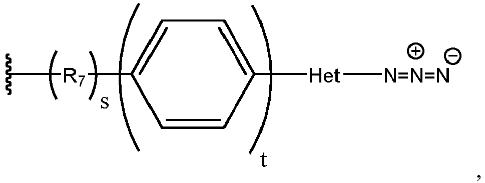
avec R₇, s, t et Het étant tels que définis à la revendication 1 ; ou 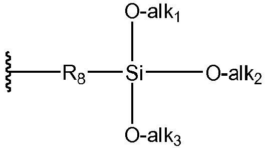
avec alk₁, alk₂, alk₃ et R₈ étant tels que définis à la revendication 1 ; ou 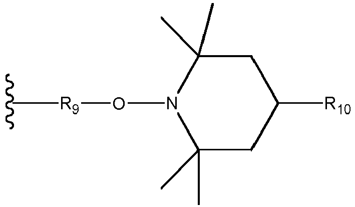
avec R₉ et R₁₀ étant tels que définis à la revendication 1 ; ou 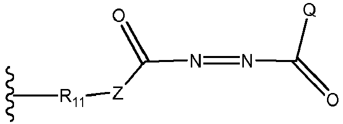
avec R₁₁, Z et Q étant tels que définis à la revendication 1, la double liaison pouvant être de configuration *cis* ou *trans* ; ou 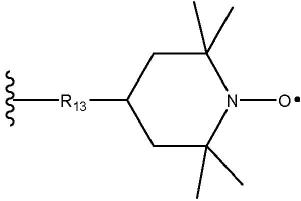
avec R₁₃ étant tel que défini précédemment.

6. Composé selon l'une quelconque des revendications précédentes, **caractérisé en ce que** lorsqu'il ne représente pas X ou Xᵢ, R₂, R₂ᵢ, R'₃, R'₃ᵢ, R₄, R₄ᵢ représentent H.

7. Composé selon l'une quelconque des revendications précédentes, **caractérisé en ce que** lorsqu'ils ne représentent pas X ou Xᵢ ,R₃, R₃ᵢ, identiques ou différents, représentent H ou -CH₃.

8. Composé selon l'une quelconque des revendications précédentes, **caractérisé en ce que** R₅ représente H ou un radical hydrocarboné non substitué, avantageusement H.

9. Composé selon l'une quelconque des revendications précédentes, **caractérisé en ce que** R₆ représente un groupe (hétéro)alcanediyle, (hétéro)alcènediyle, (hétéro)aryle, (hétéro)cycloalkyle, avantageusement un groupe alcanediyle en C₁-C₆.

10. Composé selon l'une quelconque des revendications précédentes, **caractérisé en ce que** r varie de 1 à 4, avantageusement r=1 ou r=4.

11. Composé selon l'une quelconque des revendications précédentes, **caractérisé en ce que** m varie de 0 à 4, avantageusement m = 0.

12. Composé selon la revendication 1, **caractérisé en ce qu'**il est choisi parmi : 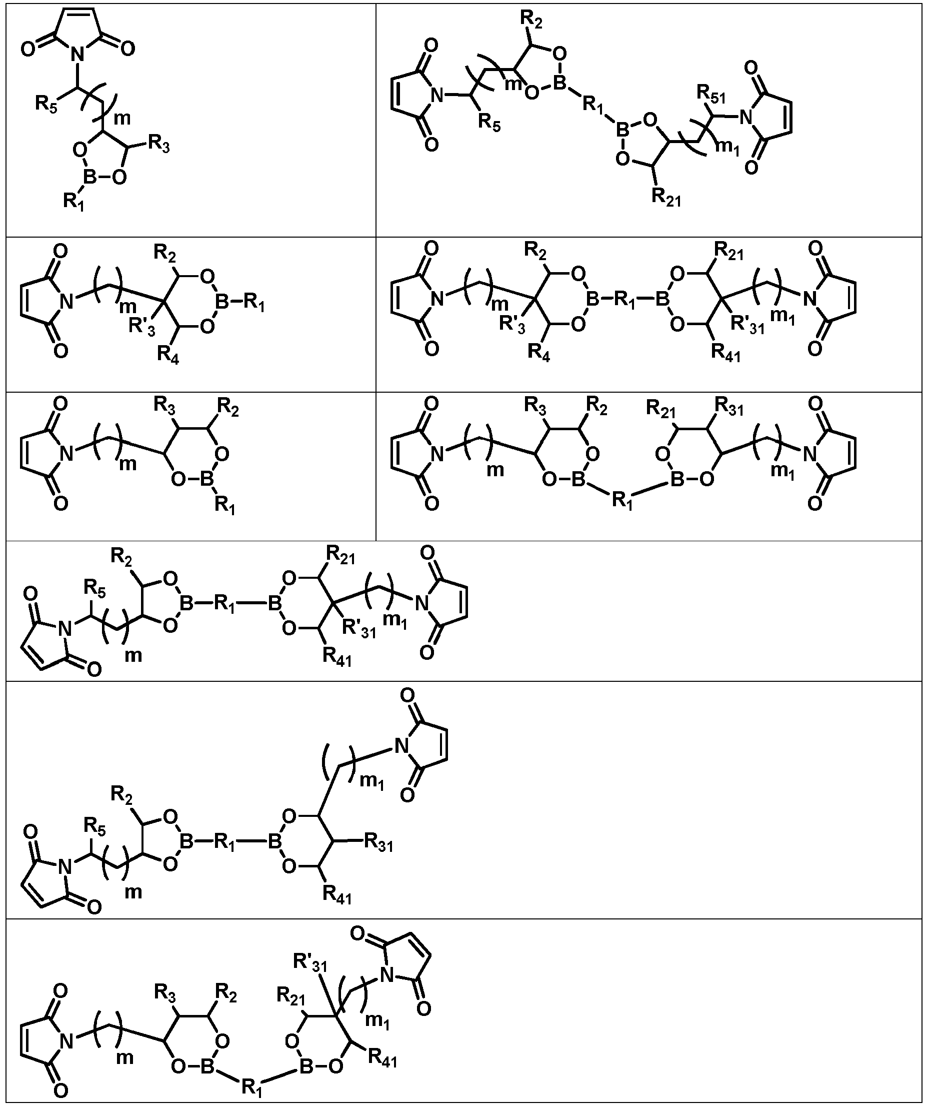 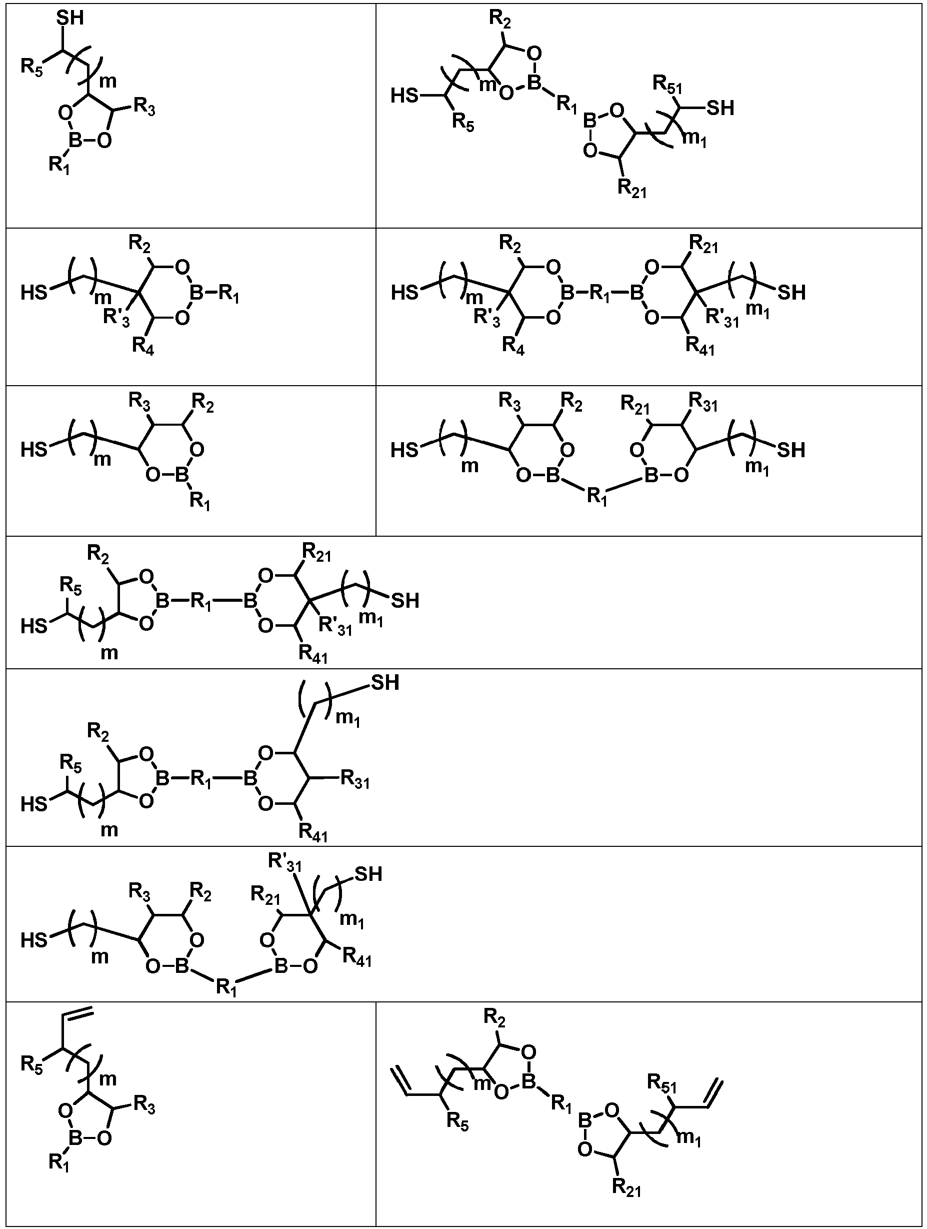 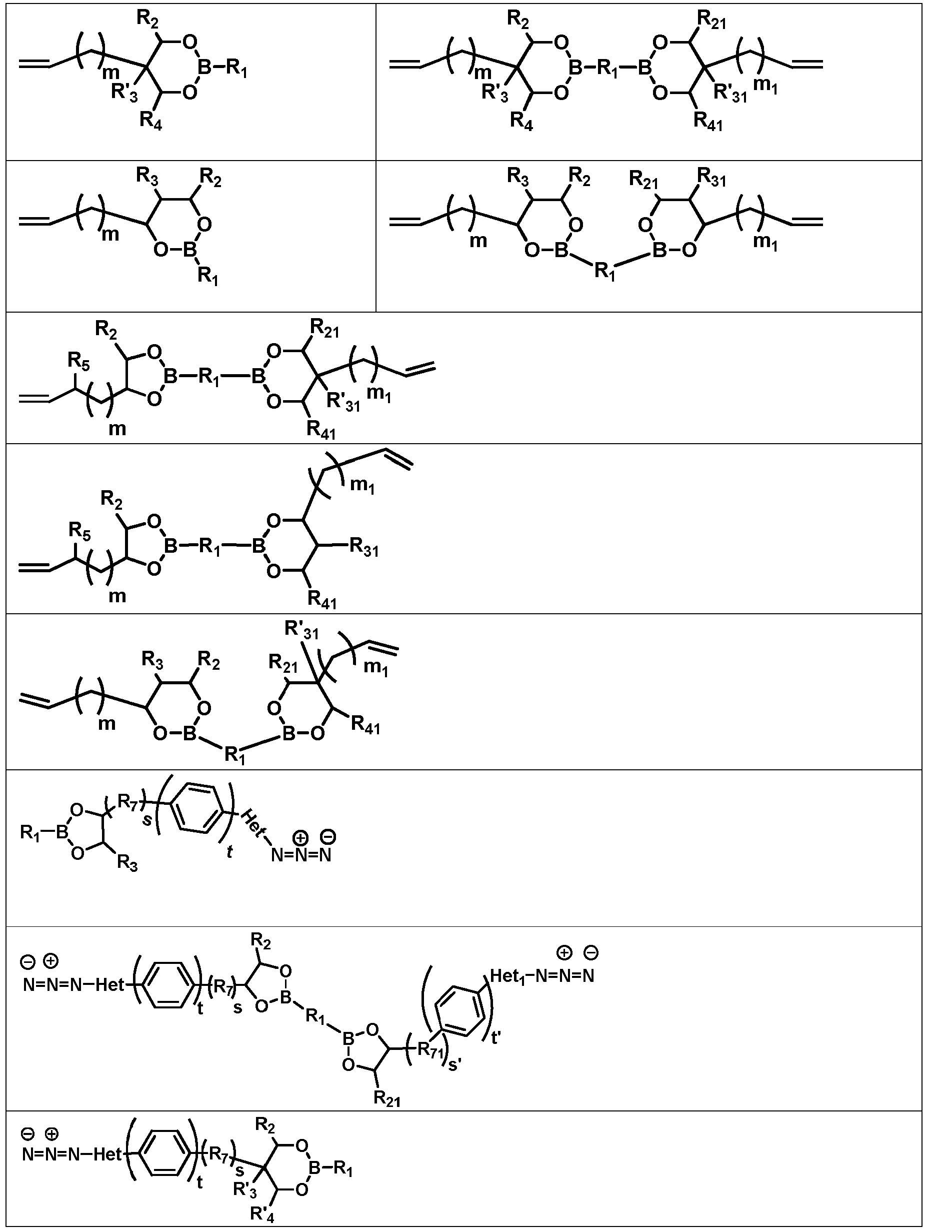 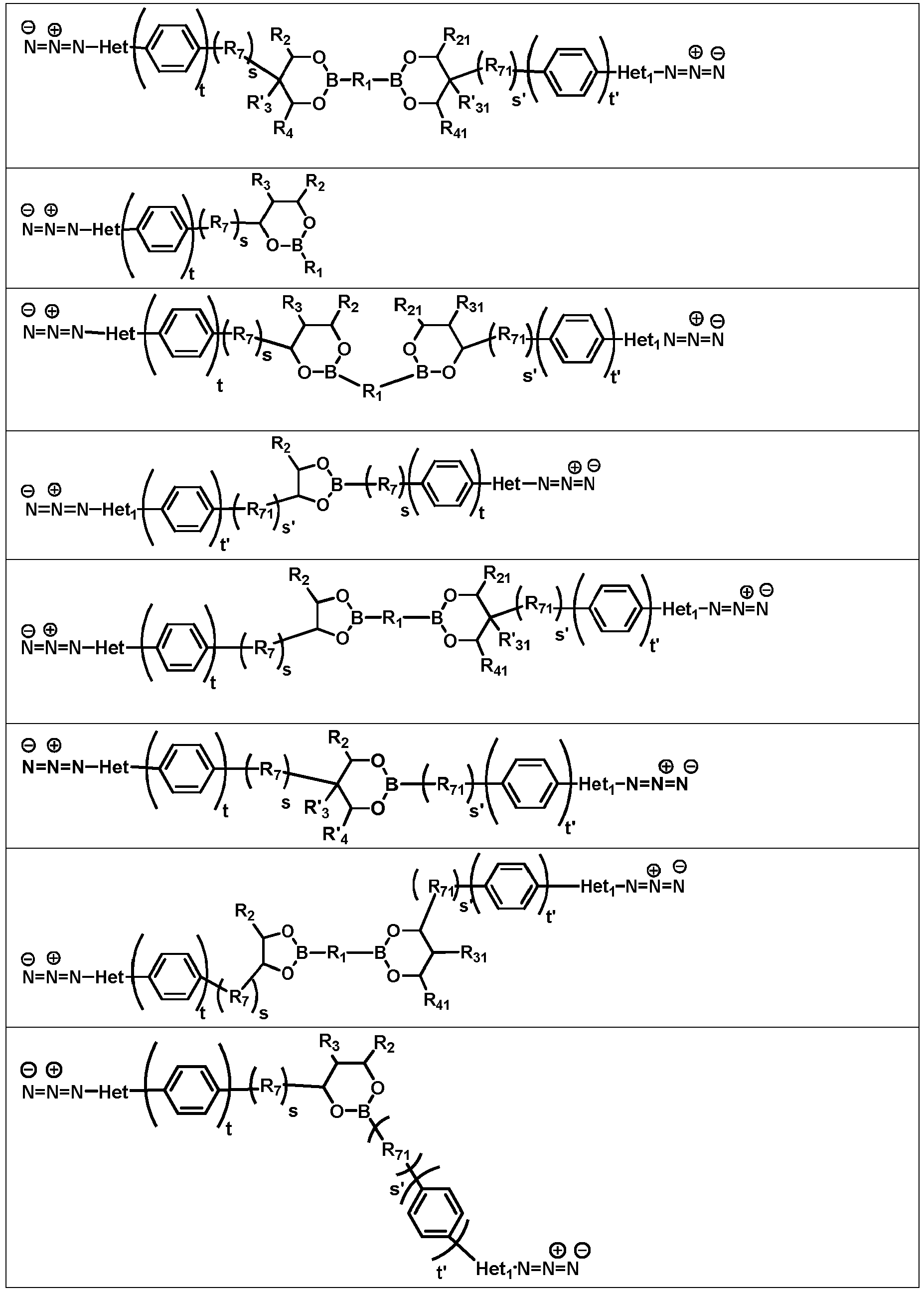 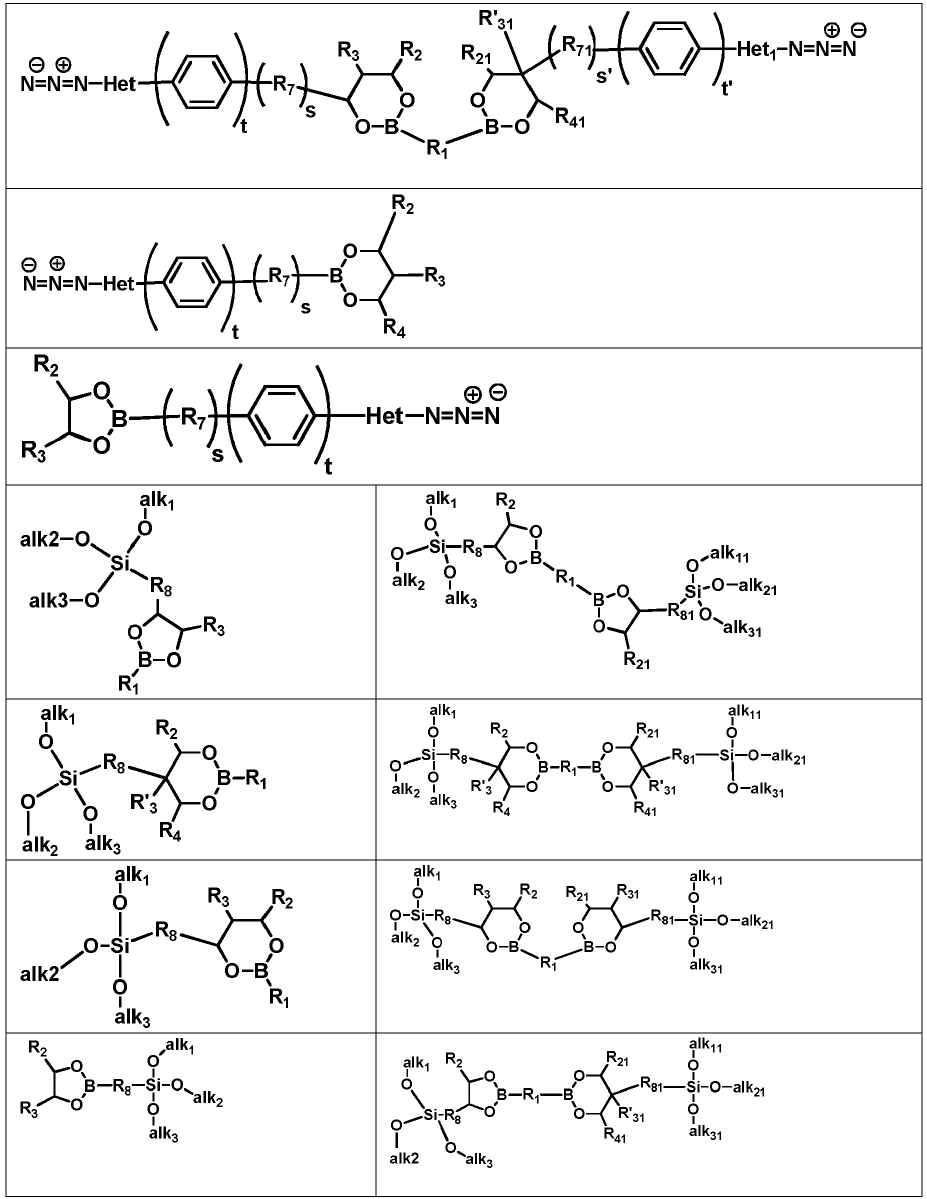 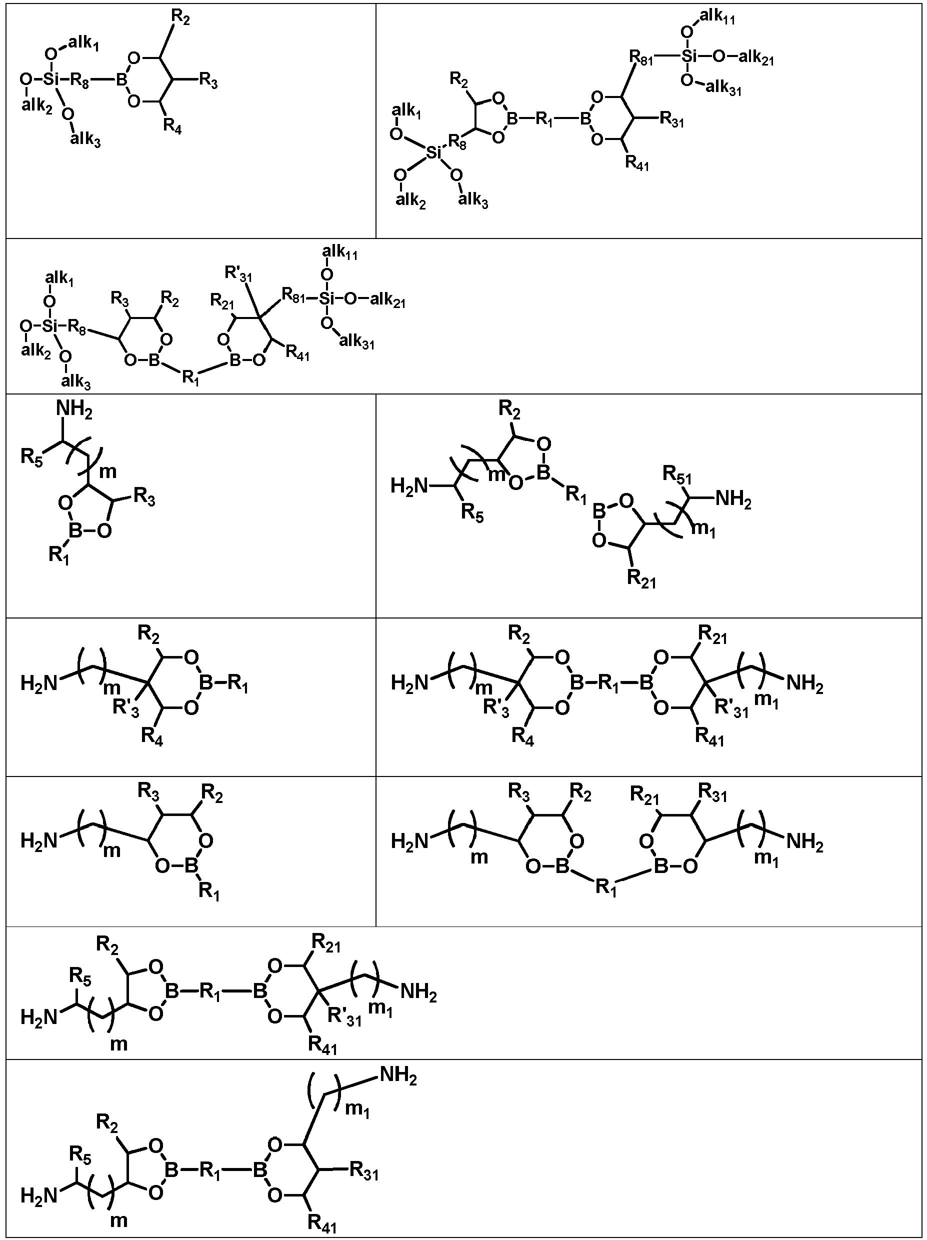 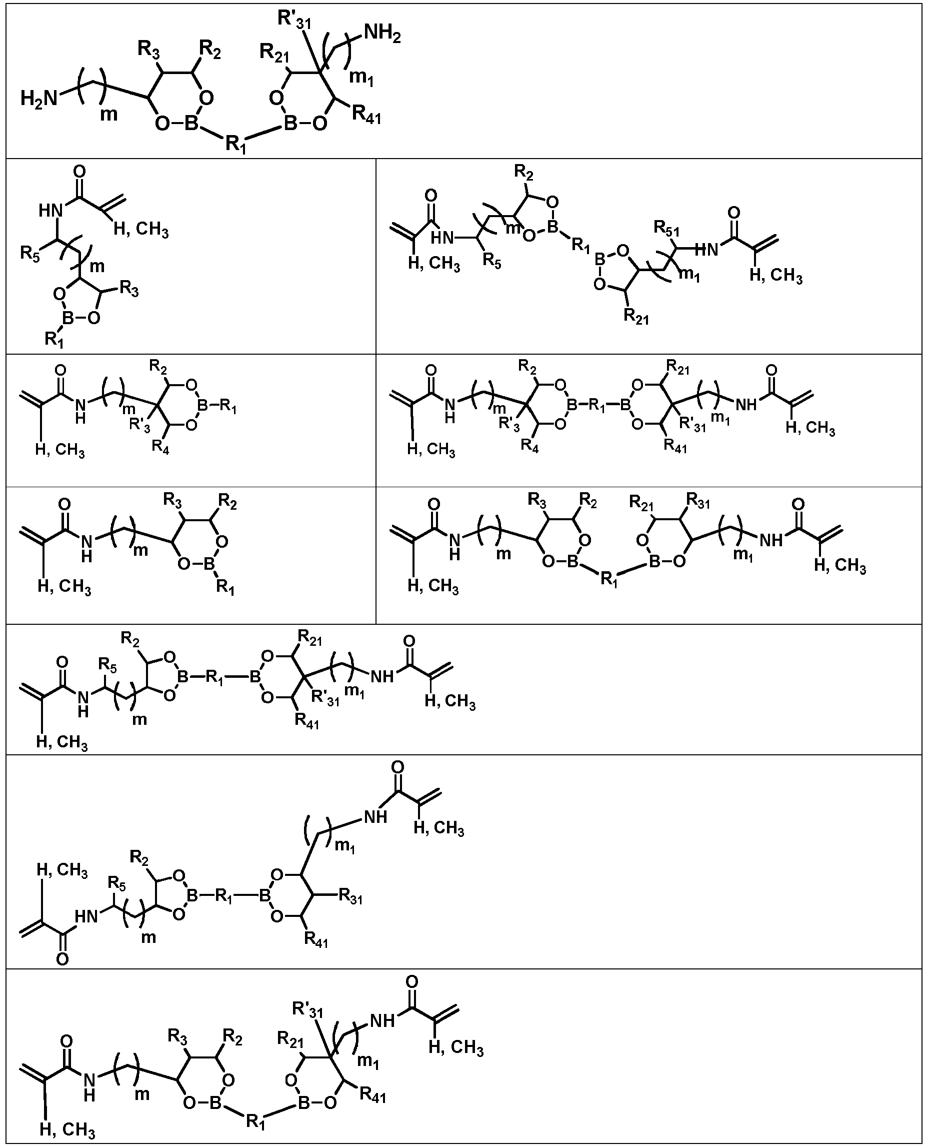 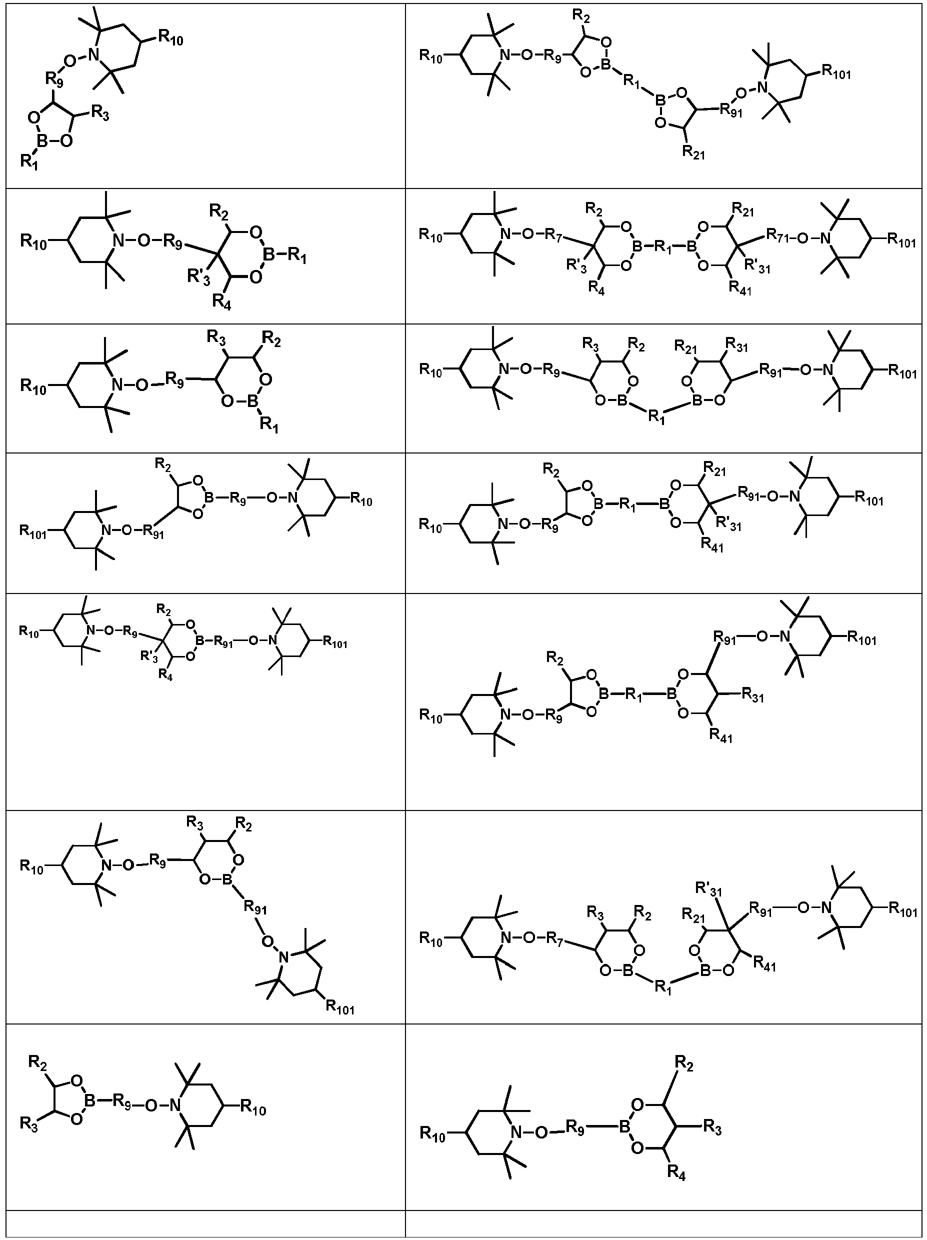 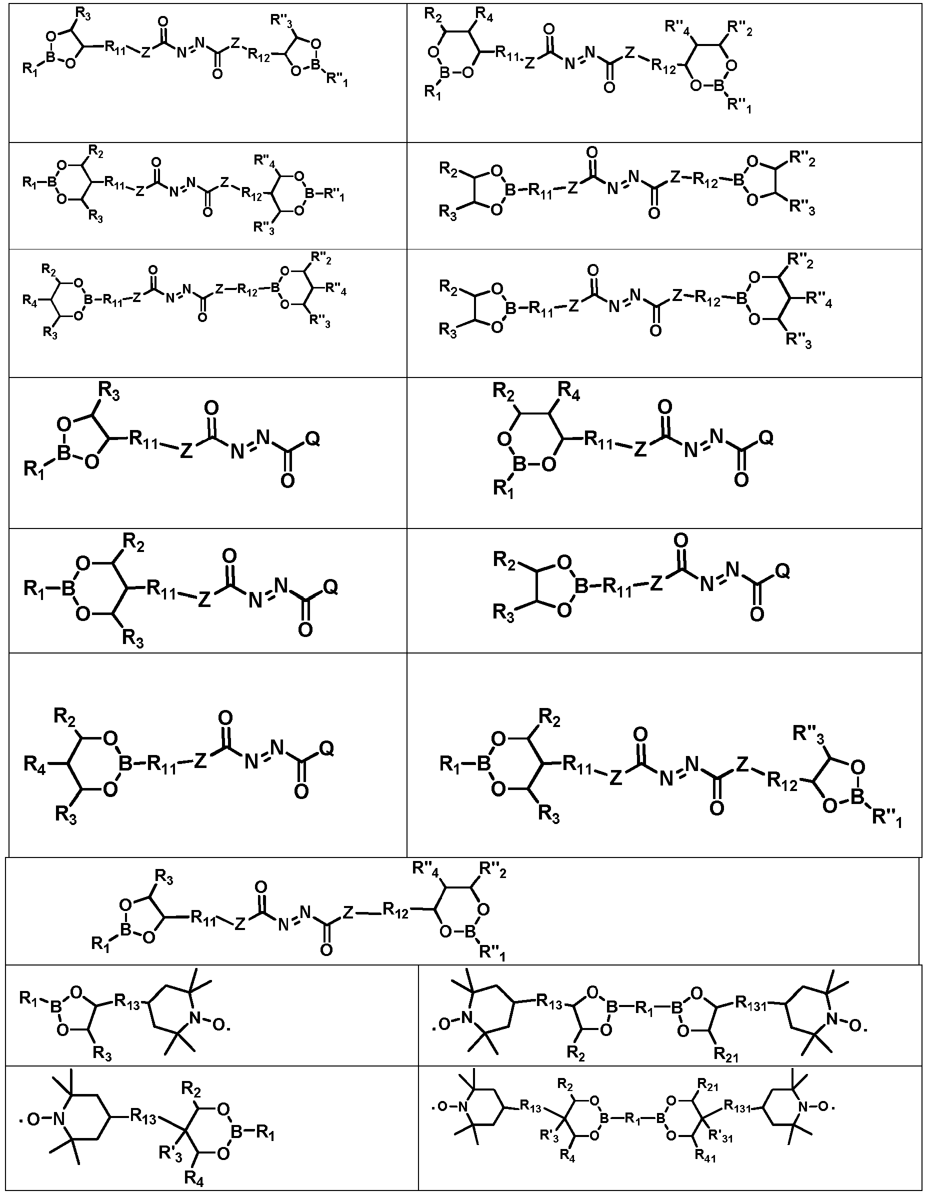 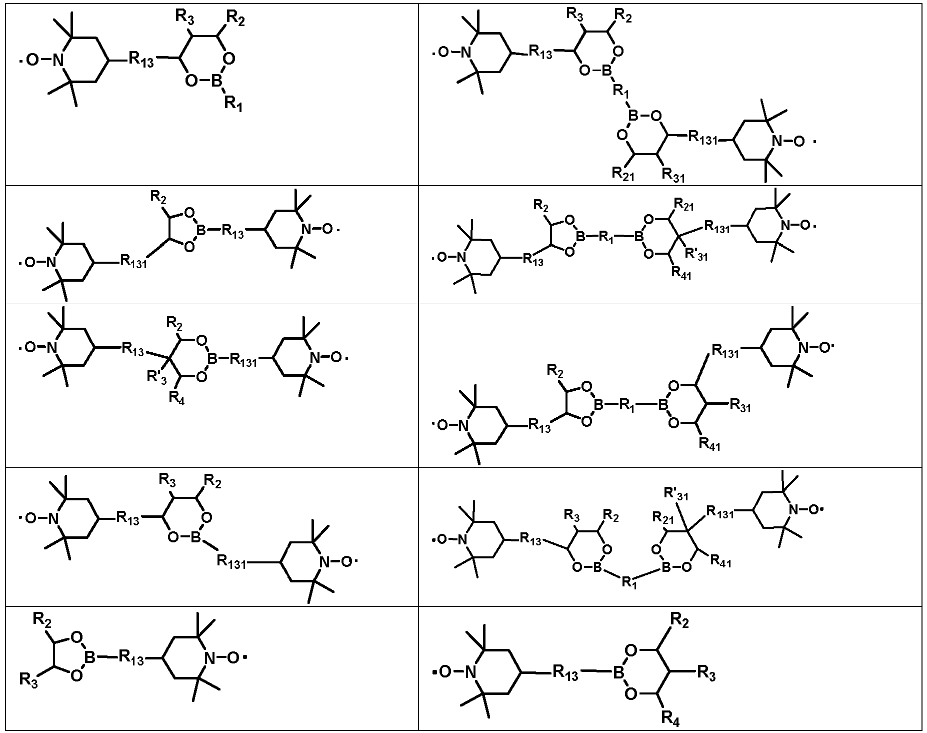
m, R₁, R₂, R₂₁, R₃, R'₃, R₃₁, R'₃₁, R₄, P₄₁, R₅, R₆, R₇, R₈, R₉, R₁₀, R₁₁, R₁₂, R₁₃, Rʺ₂, Rʺ₃, Rʺ₄, Het, alk₁, alk₂, alk₃, s, t, ayant la même définition que selon l'une quelconque des revendications précédentes avec i=1
s' vaut 0 ou 1, t' vaut 0 ou 1, s'+t' = 1 ou 2, préférentiellement s'+t'=1
Q est un radical alcoxy en C₁-C₆
R₅₁ répond à la même définition que celle donnée pour R₅ dans l'une quelconque des revendications précédentes
R₆₁ répond à la même définition que celle donnée pour R₆ dans l'une quelconque des revendications précédentes
R₇₁ répond à la même définition que celle donnée pour R₇ dans l'une quelconque des revendications précédentes
R₈₁ répond à la même définition que celle donnée pour R₈ dans l'une quelconque des revendications précédentes
R₉₁ répond à la même définition que celle donnée pour R₉ dans l'une quelconque des revendications précédentes
R₁₀₁ répond à la même définition que celle donnée pour R₁₀ dans l'une quelconque des revendications précédentes
R₁₃₁ répond à la même définition que celle donnée pour R₁₃ dans l'une quelconque des revendications précédentes
Het₁, Het₂, identiques ou différents, répondent à la même définition que celle donnée pour Het dans l'une quelconque des revendications précédentes
alk₁₁, alk₂₁, alk₃₁ identiques ou différents, répondent à la même définition que celle donnée pour alk₁, alk₂, alk₃ dans l'une quelconque des revendications précédentes
m₁ répond à la même définition que celle donnée pour m dans l'une quelconque des revendications précédentes

13. Utilisation d'un composé selon l'une quelconque des revendications précédentes, pour fonctionnaliser un polymère.

14. Procédé de préparation d'une composition de polymères réticulés, ledit procédé comprend les étapes suivantes :
a. Choisir un polymère linéaire ou branché comprenant des fonctions permettant un greffage ou une fonctionnalisation,
b. Choisir une combinaison de molécules dont au moins une est choisie parmi les composés définis selon l'une quelconque des revendications 1 à 12, la combinaison devant permettre le greffage/ la fonctionnalisation et la création de liaisons pendantes échangeables et de points de réticulation échangeables par réactions de métathèse des esters boroniques ;
c. Mélanger, à l'état fondu ou en solution, ledit polymère et ladite combinaison pour obtenir ladite composition.

15. Utilisation d'un composé selon l'une quelconque des revendications 1 à 12, en tant qu'agent de couplage à une molécule d'intérêt.

## Patentansprüche

1. Verbindung mit der Formel (I) 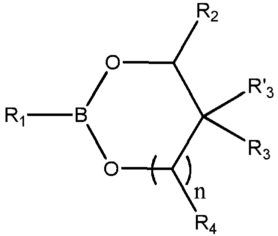
n = 0 oder 1
R₁ ist kovalent mit dem Boratom durch ein Kohlenstoffatom verbunden und stellt eine substituierte oder nicht substituierte kohlenwasserstoffhaltige Gruppierung dar, die ein oder mehrere Heteroatom(e) oder Halogen(e) umfassen kann, insbesondere durch wenigstens ein Radikal der Formel (I') substituiert sein kann 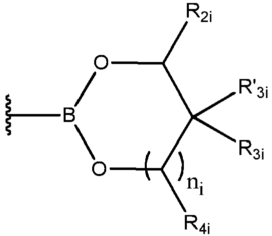
nᵢ = 0 oder 1
R₂, R₂ᵢ, R₃, R'₃, R₃ᵢ, R'₃ᵢ, R₄, R₄ᵢ, die identisch oder unterschiedlich sind, stellen ein Wasserstoffatom oder ein substituiertes oder nicht substituiertes, mit Kohlenwasserstoff angereichertes Radikal dar, das ein oder mehrere Heteroatom(e) oder Halogen(e) umfassen kann oder die zusammen, jeweils zu zweit, einen aliphatischen oder aromatischen Zyklus bilden
R₂, R₂ᵢ, R₃, R'₃, R₃ᵢ, R'₃ᵢ, R₄, R₄ᵢ nicht durch ein Radikal der Formel (I') substituiert sind
R₁ kann ein Radikal mit der Formel -X, darstellen, das kovalent mit dem Boratom durch ein Kohlenstoffatom verbunden ist
Wenn R₁ ein Radikal der Formel -X darstellt, stellt kein oder ein R₂, R₃, R'₃ oder R₄ ein Radikal mit der Formel -X dar
Wenn R₁ kein Radikal der Formel -X darstellt, stellt ein R₂, R₃, R'₃ oder R₄ ein Radikal mit der Formel -X dar
R'₃ = H wenn n=0 oder wenn R₂ oder R₄ ein Radikal mit der Formel -X darstellt
Eines von R₂ᵢ, R₃ᵢ, R'₃ᵢ oder R₄ᵢ stellt ein Radikal mit der Formel ―Xᵢ dar
R'₃ᵢ = H wenn nᵢ=0 oder wenn R₂ᵢ oder R₄ᵢ ein Radikal mit der Formel ―Xᵢ darstellt
X, Xᵢ ausgewählt sind aus :
- -(CH₂)ₘ-CH(R₅)-Y wobei Y ein Maleimid-Radikal, Thiol, -NH₂, Acrylamid, Methacrylamid, Alkenendung ist, m eine ganze Zahl ist, die von 0 bis 12 reicht, R₅ ein substituiertes oder nicht substituiertes, mit Kohlenwasserstoff angereichertes Radikal ist, das ein oder mehrere Heteroatom(e) oder Halogen(e) umfassen kann;
- -(CH₂)ₘ-R₆-Y ist, wobei Y ein Maleimid-Radikal, Thiol, -NH₂, Acrylamid, Methacrylamid, Alkenendung ist, m eine ganze Zahl ist, die von 0 bis 12 reicht, R₆ ein wenigstens mit Y substituiertes oder nicht substituiertes, mit Wasserstoff angereichertes Radikal ist, das ein oder mehrere Heteroatom(e) oder Halogen(e) umfassen kann;
- -(CH₂)ᵣ-Y ist, wobei Y ein Maleimid-Radikal, Thiol, -NH₂, Acrylamid, Methacrylamid, eine Alkenendung ist, r eine ganze Zahl ist, die von 1 bis 12 reicht; 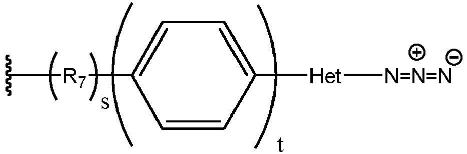 wobei Het = -O-CO- oder - 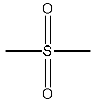 und R₇ ein substituiertes oder nicht substituiertes, mit Kohlenwasserstoff angereichertes Radikal ist, das ein oder mehrere Heteroatome(e) oder Halogen(e) umfassen kann, s 0 oder 1 wert ist, t 0 oder 1 wert ist, s+t = 1 oder 2, bevorzugt s+t=1; 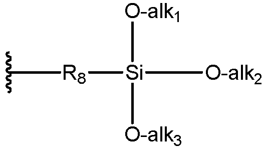 wobei Alk₁, Alk₂, Alk₃ jeweils unabhängig voneinander ein lineares oder verzweigtes Alkyl in C₁-C₄ darstellt und R₈ ein substituiertes oder nicht substituiertes, mit Kohlenwasserstoff angereichertes Radikal darstellt, das ein oder mehrere Heteroatome(e) oder Halogen(e) umfassen kann 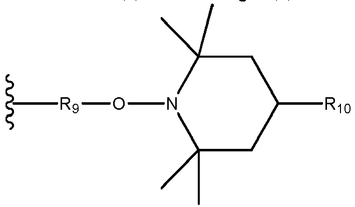 wobei R₉ ein substituiertes oder nicht substituiertes, mit Kohlenwasserstoff angereichertes Radikal ist, das ein oder mehrere Heteroatom(e) oder Halogen(e) umfasst, und R₁₀ ein Wasserstoffatom oder ein Hydroxylradikal oder substituiertes oder nicht substituiertes, mit Kohlenwasserstoff angereichertes Radikal ist, das ein oder mehrere Heteroatom(e) oder Halogen(e) umfassen kann; 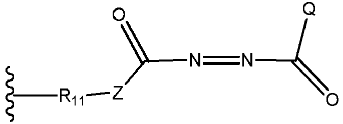 die doppelte Verbindung die Ausgestaltung *cis* oder *trans* aufweist, wobei R₁₁ ein substituiertes oder nicht substituiertes, mit Kohlenwasserstoff angereichertes Radikal ist, das ein oder mehrere Heteroatom(e) oder Halogen(e) umfassen kann, Z eine divalente Gruppe ist, die ausgewählt ist aus -O-, -S-, - NH-, Q ein Alkoxy-Radikal in C₁-C₆ ist oder 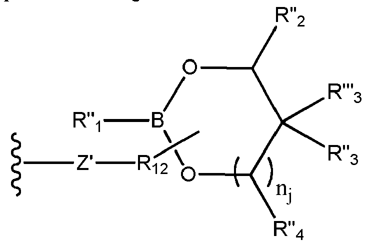 wobei Z' eine divalente Gruppe ist, die ausgewählt ist aus -O-, -S-, -NH-, ein de Rʺ₂, R‴₃, Rʺ₃, Rʺ₄, Rʺ₁ in Abhängigkeit von dem Substitutionsort fehlt, R₁₂ ein substituiertes oder nicht substituiertes, mit Kohlenwasserstoff angereichertes Radikal ist, das ein oder mehrere Heteroatom(e) oder Halogen(e) umfassen kann, Rʺ₁ kovalent mit dem Boratom durch ein Kohlenstoffatom verbunden ist und eine substituierte oder nicht substituierte, mit Kohlenwasserstoff angereicherte Gruppierung darstellt, die ein oder mehrere Heteroatom(e) oder Halogen(e) umfassen kann, Rʺ₂, Rʺ₃, R‴₃, Rʺ₄, die identisch oder unterschiedlich sind, ein substituiertes oder nicht substituiertes Wasserstoffatom oder ein substituiertes oder nicht substituiertes, mit Kohlenwasserstoff angereichertes Radikal darstellen, das ein oder mehrere Heteroatom(e) oder Halogen(e) umfassen kann, oder die zusammen, jeweils zu zweit, einen aliphatischen oder aromatischen Zyklus bilden, Rʺ₁ kovalent mit dem Boratom durch ein Kohlenstoffatom verbunden ist und eine substituierte oder nicht substituierte, mit Kohlenwasserstoff angereicherte Gruppierung darstellt, die ein oder mehrere Heteroatom(e) oder Halogen(e) umfassen kann; 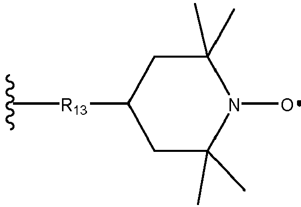 wobei R₁₃ ein substituiertes oder nicht substituiertes, mit Kohlenwasserstoff angereichertes Radikal ist,
X und Xᵢ jeweils dieselbe Endfunktion Y, Azid, Alkoxysilan, Alkoxyamin, Azodicarbonyl oder Nitroxyd tragen; insbesondere sind X und Xi identisch
Und R₁ X nur darstellen kann, wenn X den folgenden Definitionen genügt:
- 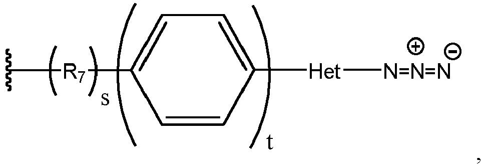 wobei R₇, s, t und Het wie zuvor definiert sind oder
- 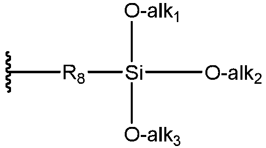 wobei Alk₁, Alk₂, Alk₃ und R₈ wie zuvor definiert sind; oder
- 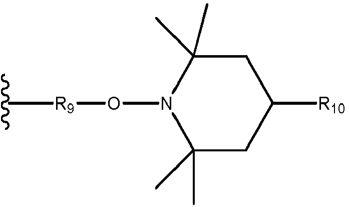 wobei R₉ und R₁₀ wie zuvor definiert sind; oder
- 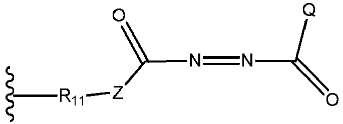 wobei R₁₁, Z und Q wie zuvor definiert sind;
- 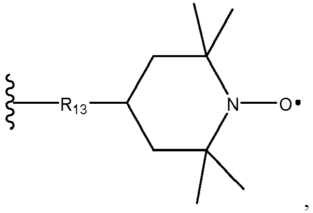 wobei R₁₃, wie zuvor definiert ist.

2. Verbindung gemäß dem voranstehenden Anspruch, **dadurch gekennzeichnet, dass** das Radikal R₁ X nicht darstellt und R₁ eine Alkyl-, Aryl-, Aralkyl-, Alkyl-Aryl- oder Cycloalkyl-Gruppe darstellt, wobei jede dieser Gruppen ebenfalls Heteroatome, wie z. B. O, N, S oder Si, umfassen kann, das Radikal R₁ vorteilhaft einen Benzolzyklus, einen Naphtalenzyklus, eine arylaliphatische Gruppe, die aus zwei Benzolzyklen gebildet ist, die in C₁-C₆ durch eine Alcanediyl-Gruppe verbunden sind, einen Pyridinzyklus, einen Pyrimidinzyklus, einen 1 bis 3 Mal substituierten oder nicht substituierten Triazinzyklus, vorteilhafter einen nicht substituierten Benzolzyklus darstellt.

3. Verbindung gemäß irgendeinem der voranstehenden Ansprüche, **dadurch gekennzeichnet, dass** das Radikal R₁ durch funktionale Gruppen substituiert ist, wie z. B. Ester- oder Amid- oder (Meth)Acrylat- oder Styrol-Gruppen oder einer Verbindung der Formel (I'), weiter bevorzugt durch ein Halogen, eine -Rz-, -OH-, -NHRz-, -NRzR'z-, -C(O)-OH-, -C(O)-NRzR'z-, -C(O)-O-Rz, -O-C(O)-Rz, -O-C(O)-O-Rz, -O-C(O)-N(H)-Rz, -N(H)-C(O)-O-Rz-, -O-Rz, -S-Rz-, - C(O)-N(H)-Rz-, -N(H)-C(O)-Rz-Gruppierung, wobei Rz, R'z, die identisch oder unterschiedlich sind, ein Alkyl in C₁-C₅₀ darstellen.

4. Verbindung gemäß einem der voranstehenden Ansprüche, **dadurch gekennzeichnet, dass** das Radikal R₁ durch Ester-, Amid-, Äther-, Thioäther-, sekundäre oder tertiäre Amin-, Carbonat-, Urethan- Karbamid-, Anhydridfunktionen unterbrochen ist.

5. Verbindung gemäß Anspruch 1, **dadurch gekennzeichnet, dass** das Radikal R₁ X darstellt und X den folgenden Definitionen entspricht 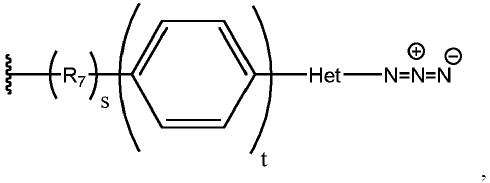
wobei R₇, s, t und Het wie in Anspruch 1 definiert sind; oder 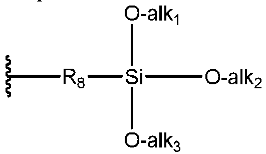
wobei Alk₁, Alk₂, Alk₃ und R₈ wie in Anspruch 1 definiert sind; oder 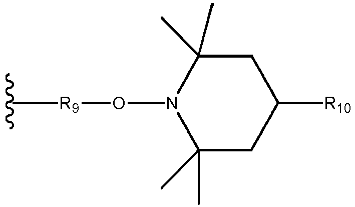
wobei R₉ und R₁₀ wie in Anspruch 1definiert sind; oder 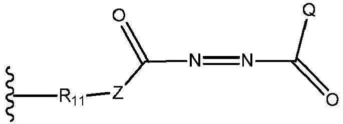
wobei R₁₁, Z und Q wie in Anspruch 1 definiert sind, wobei die doppelte Verbindung eine Ausgestaltung *cis* oder *trans* sein kann; oder 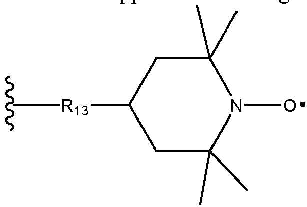
wobei R₁₃ wie zuvor definiert ist

6. Verbindung gemäß irgendeinem der voranstehenden Ansprüche, **dadurch gekennzeichnet, dass**, wenn sie nicht X oder Xᵢ, R₂, R₂ᵢ, R'₃, R'₃ᵢ, R₄, R₄ᵢ darstellt, H darstellt.

7. Verbindung gemäß irgendeinem der voranstehenden Ansprüche, **dadurch gekennzeichnet, dass**, wenn sie nicht X oder Xᵢ, R₃, R₃ᵢ, die identisch oder unterschiedlich sind, darstellt, -CH₃ darstellt.

8. Verbindung gemäß irgendeinem der voranstehenden Ansprüche, **dadurch gekennzeichnet, dass** R₅ H oder ein nicht substituiertes, mit Kohlenwasserstoff angereichertes Radikal, vorteilhaft H, darstellt.

9. Verbindung gemäß irgendeinem der voranstehenden Ansprüche, **dadurch gekennzeichnet, dass** R₆ eine (Hetero)alcanediyl-, (Hetero)alcenediyl-, (Hetero)aryl-, (Hetero)cycloalkyl-Gruppe, vorteilhaft eine Alcanediyl-Gruppe in C₁-C₆darstellt.

10. Verbindung gemäß irgendeinem der voranstehenden Ansprüche, **dadurch gekennzeichnet, dass** r von 1 bis 4 variiert; vorteilhaft r=1 oder r=4 ist.

11. Verbindung gemäß irgendeinem der voranstehenden Ansprüche, **dadurch gekennzeichnet, dass** m von 0 bis 4 variiert; vorteilhaft m=0 ist.

12. Verbindung gemäß Anspruch, **dadurch gekennzeichnet, dass** sie ausgewählt ist aus: 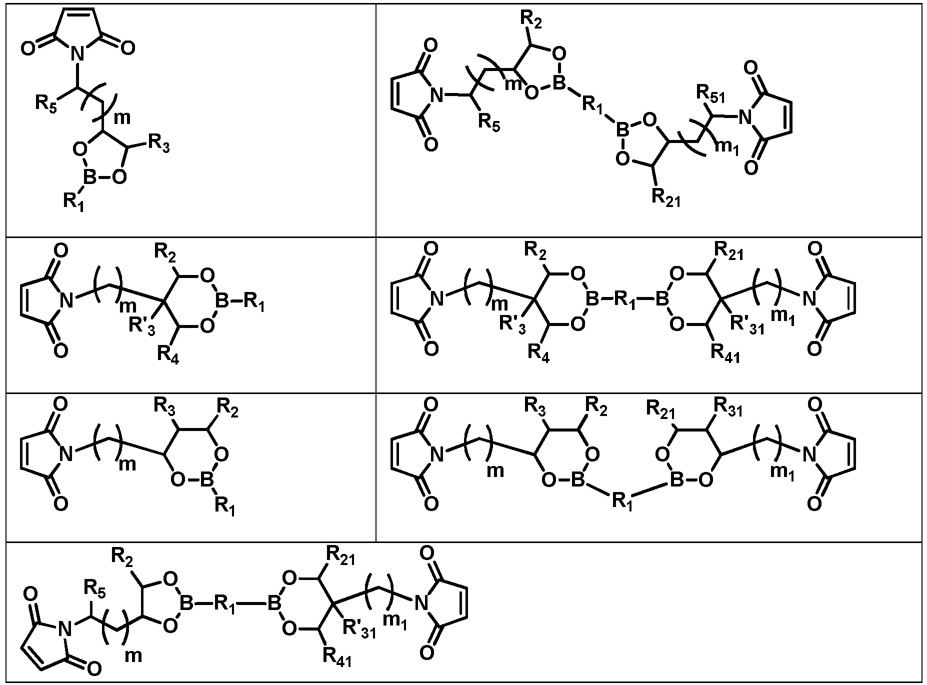 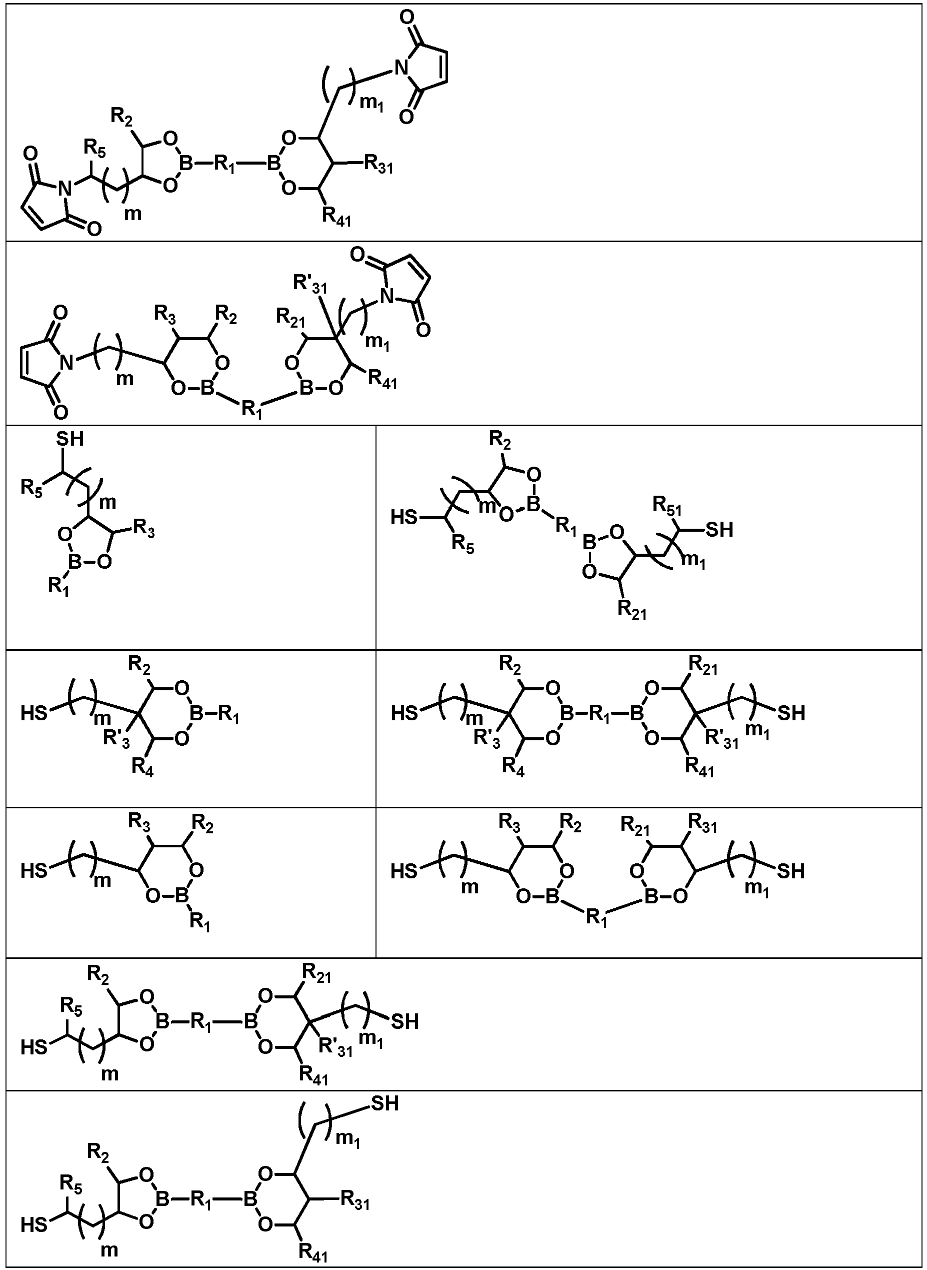 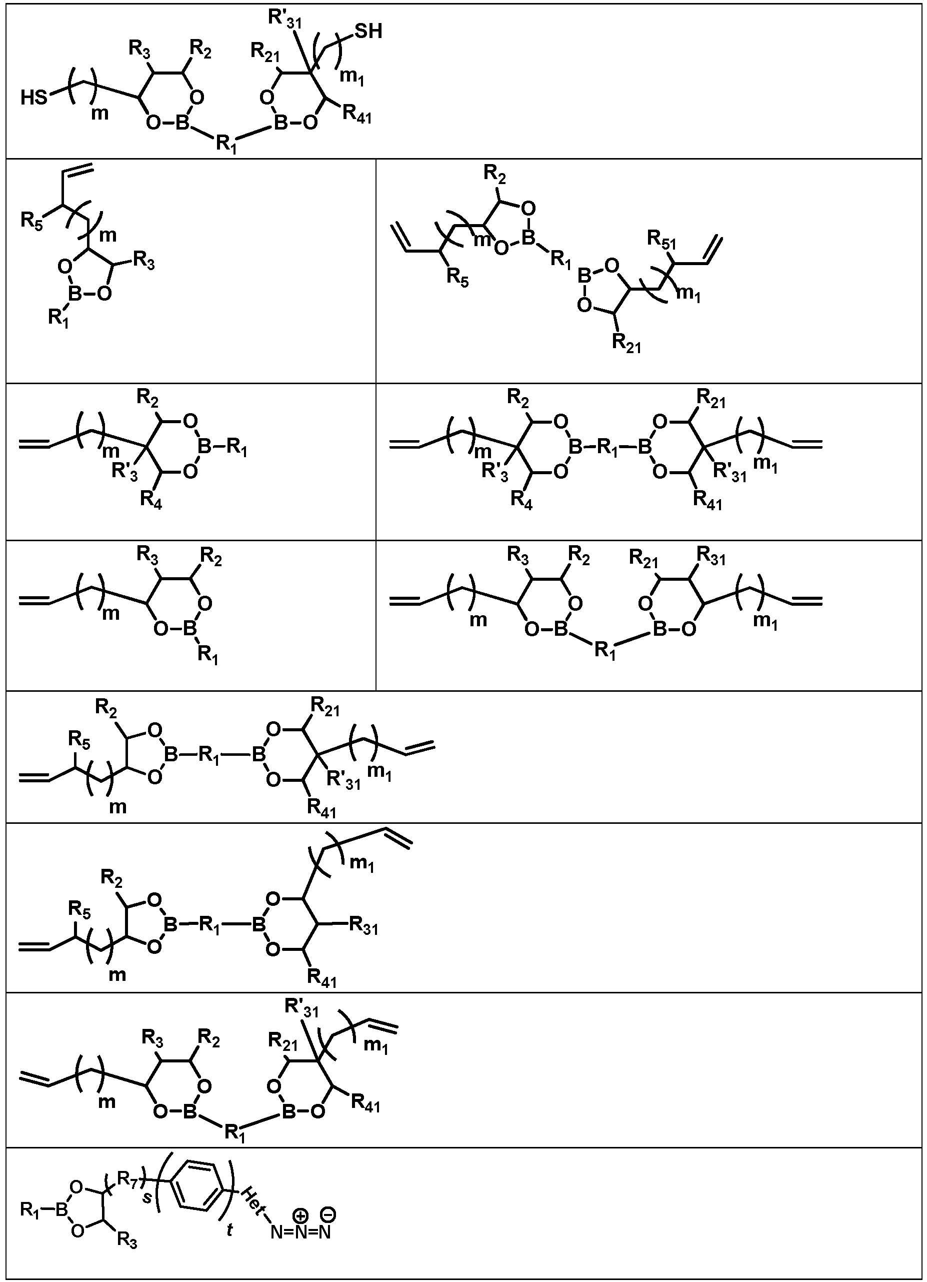 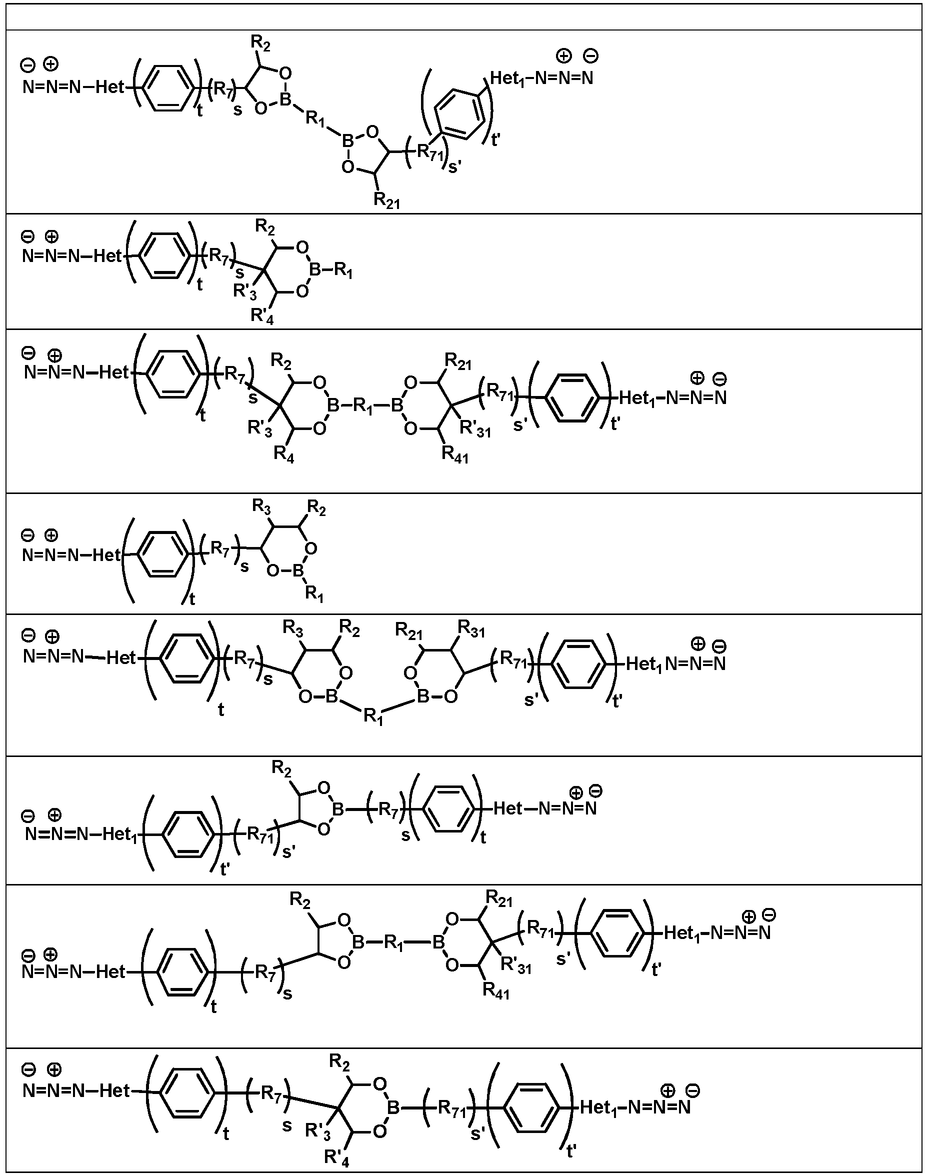 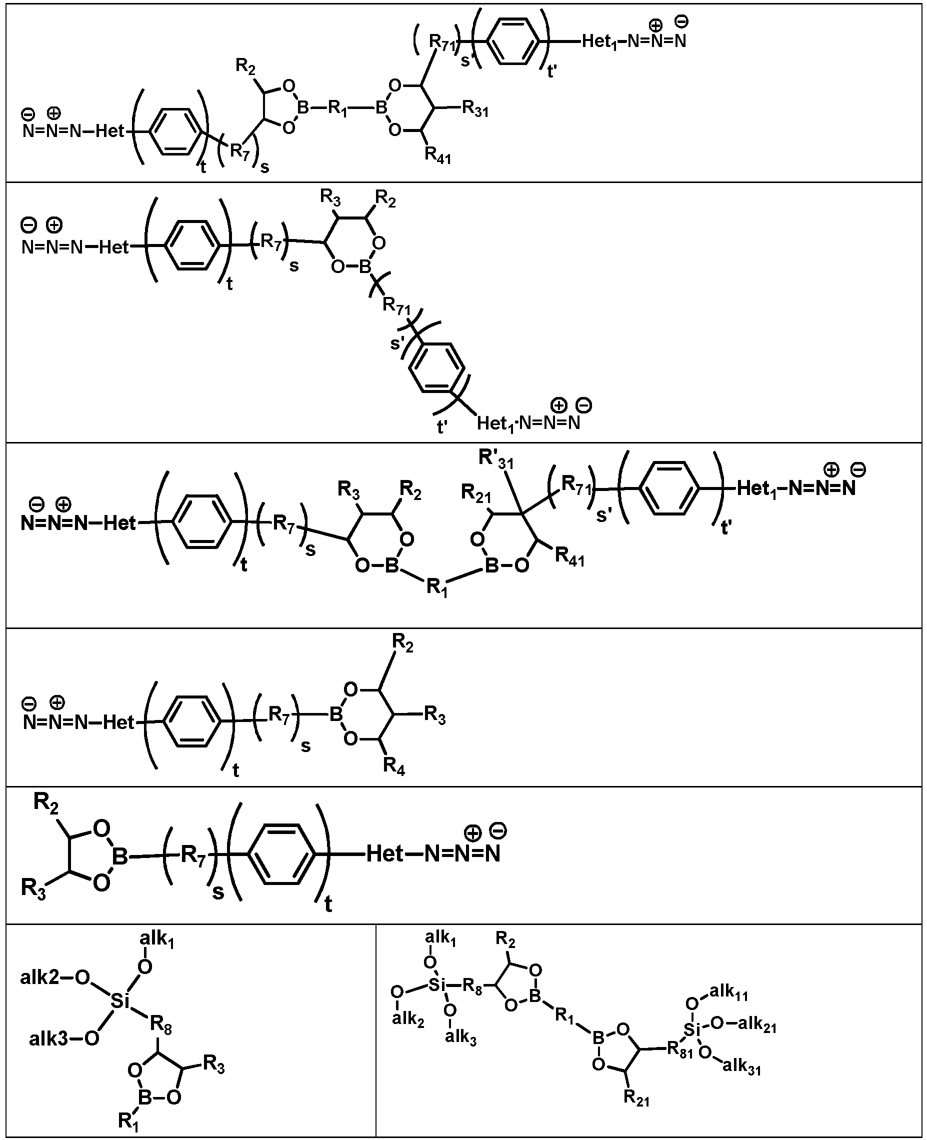 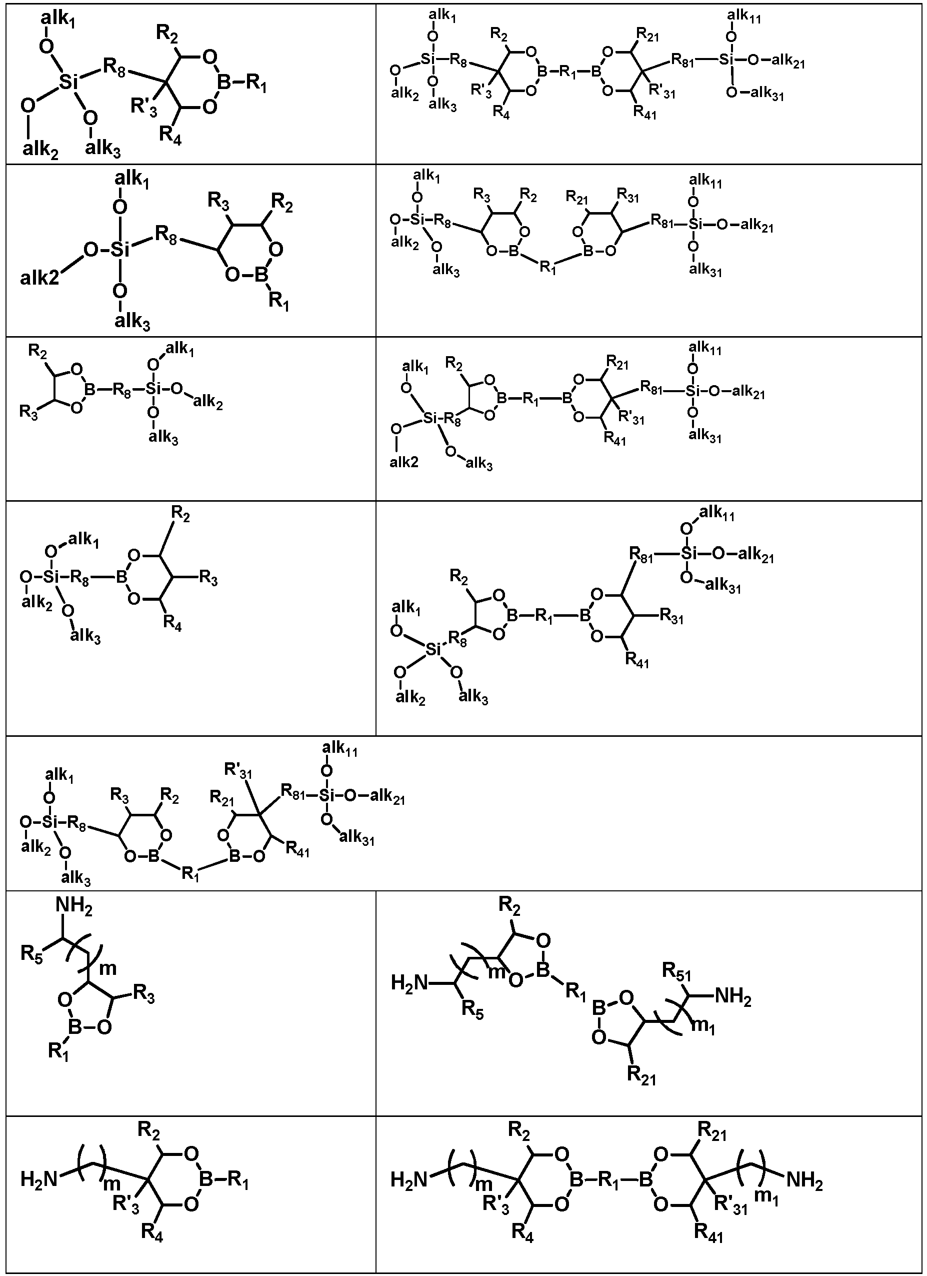 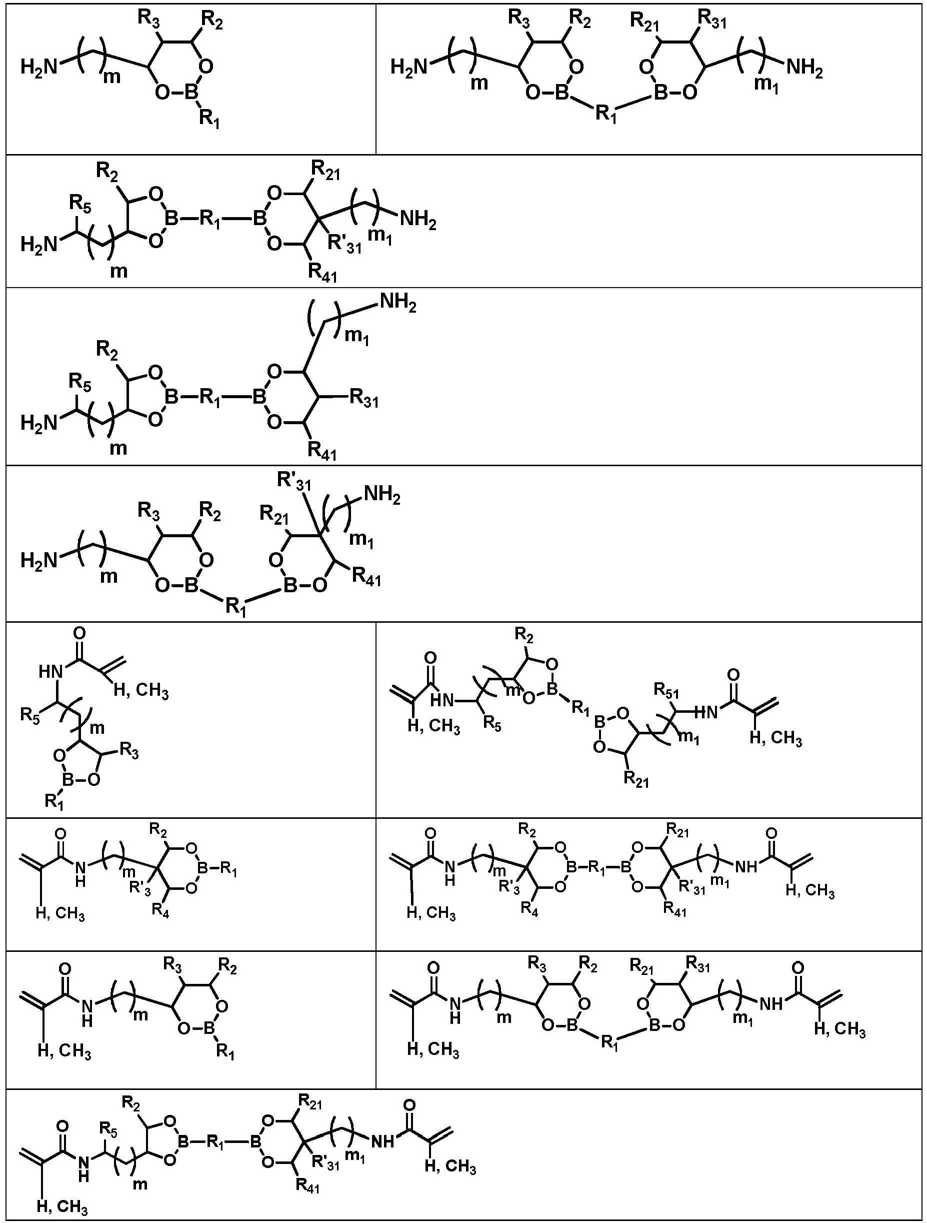 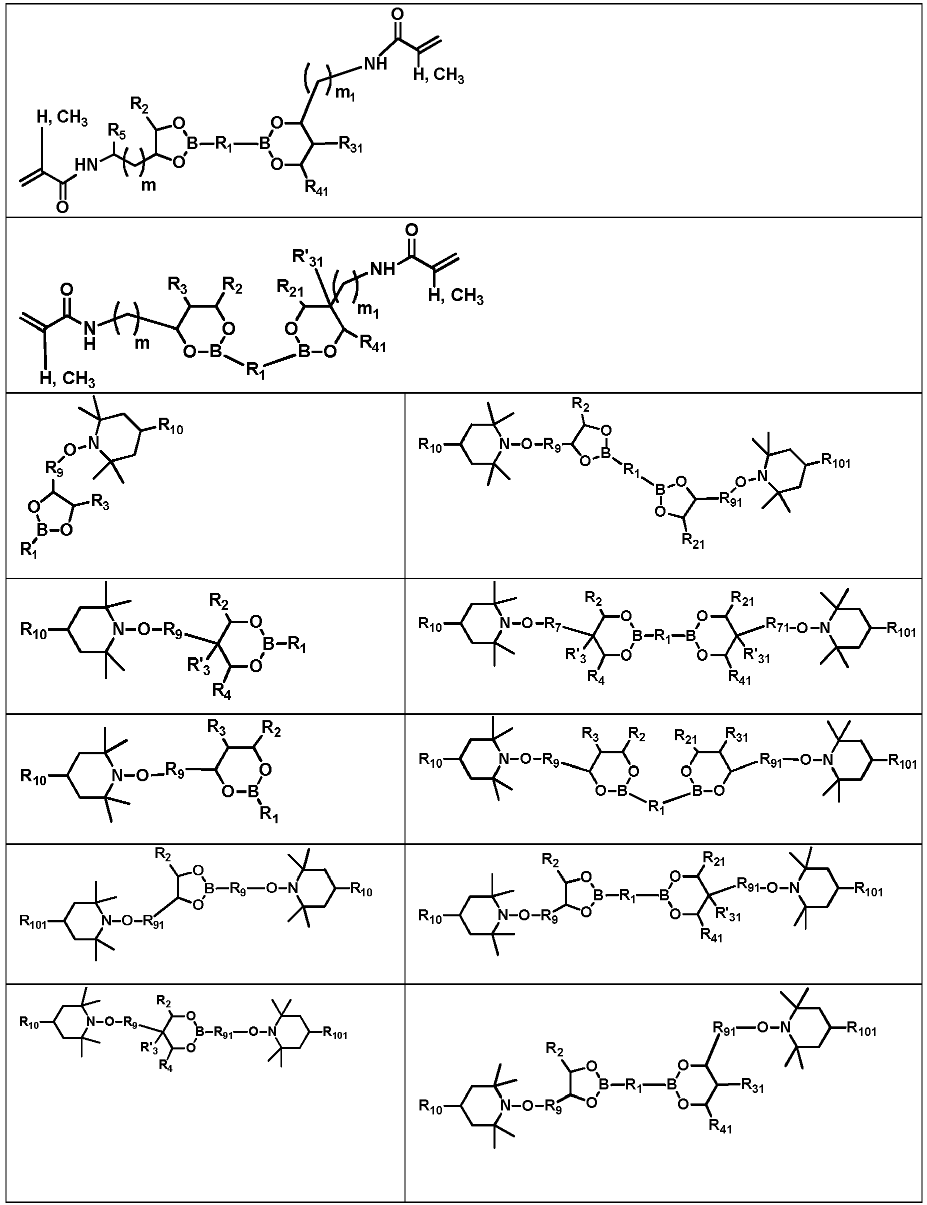 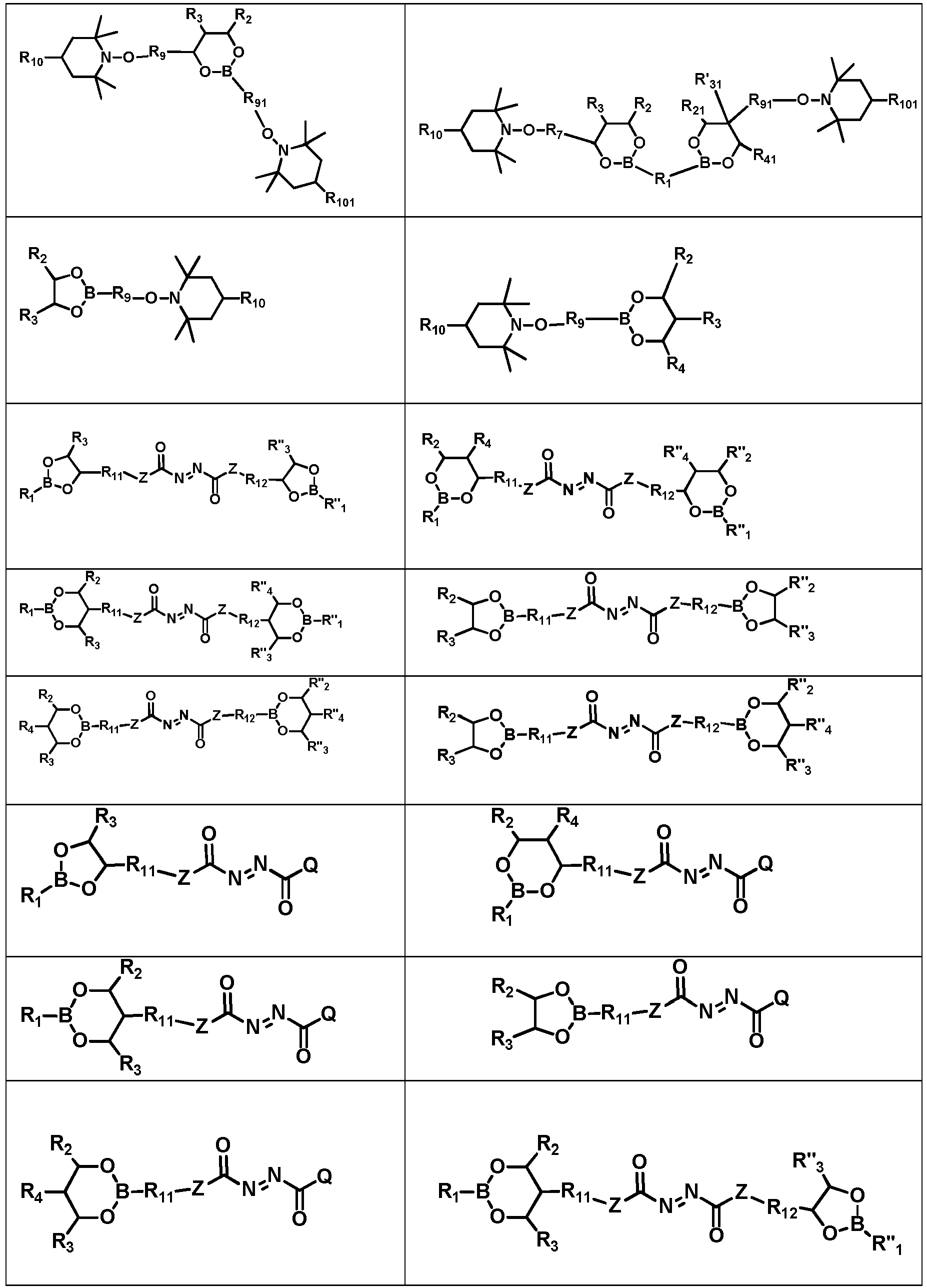 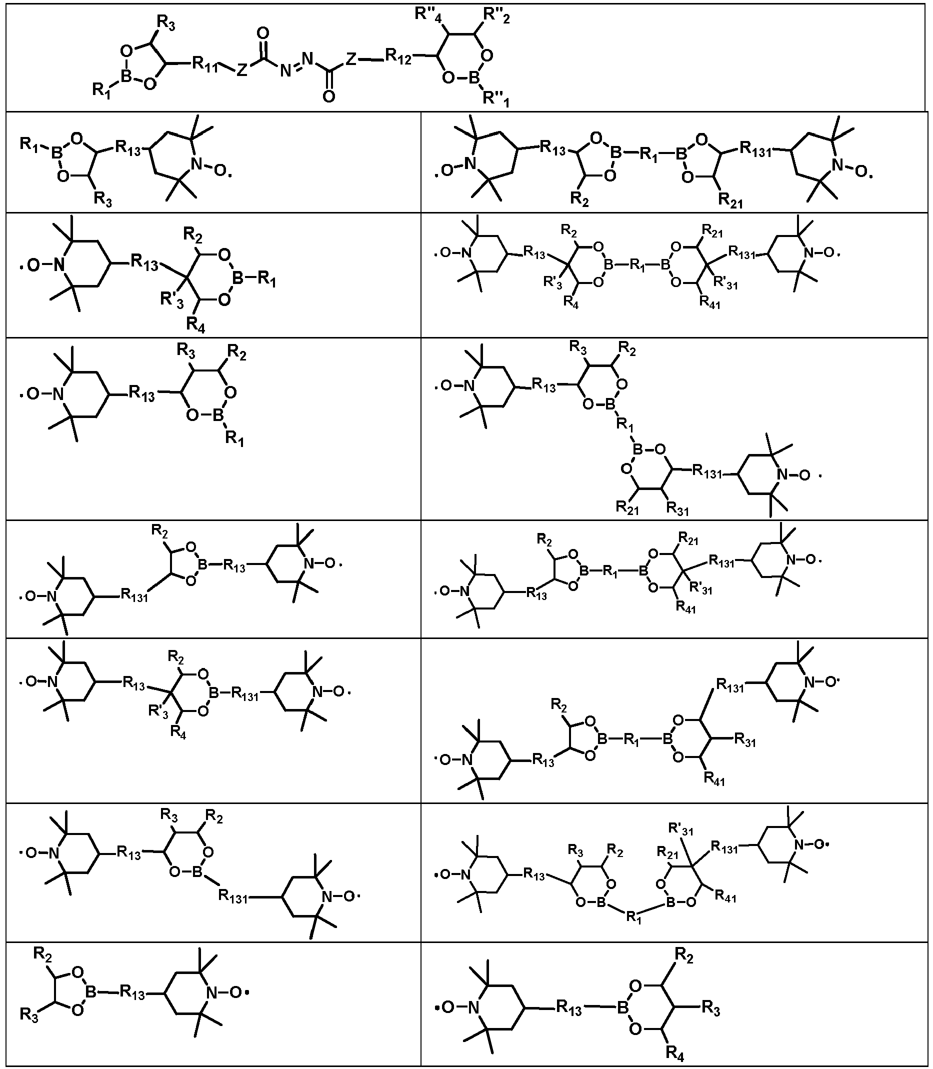
m, R₁, R₂, R₂₁, R₃, R'₃, R₃₁, R'₃₁, R₄, R₄₁, R₅, R₆, R₇, R₈, R₉, R₁₀, R₁₁, R₁₂, R₁₃, Rʺ₂, Rʺ₃, Rʺ₄,
Het, Alk₁, Alk₂, Alk₃, s, t, die dieselbe Definition wie gemäß irgendeinem der voranstehenden Ansprüche aufweisen, wobei i=1
S' 0 oder 1 wert ist, t' 0 oder 1 wert ist, s'+t' = 1 oder 2 ist, bevorzugt s'+t'=1 ist
Q ein Alkoxy-Radikal in C₁-C₆ ist
R₅₁ derselben Definition entspricht wie der, die für R₅ in irgendeinem der voranstehenden Ansprüchen angegeben ist
R₆₁ derselben Definition entspricht wie der, die für R₆ in irgendeinem der voranstehenden Ansprüchen angegeben ist
R₇₁ derselben Definition entspricht wie der, die für R₇ in irgendeinem der voranstehenden Ansprüchen angegeben ist
R₈₁ derselben Definition entspricht wie der, die für R₈ in irgendeinem der voranstehenden Ansprüchen angegeben ist
R₉₁ derselben Definition entspricht wie der, die für R₉ in irgendeinem der voranstehenden Ansprüchen angegeben ist
R₁₀₁ derselben Definition entspricht wie der, die für R₁₀ in irgendeinem der voranstehenden Ansprüchen angegeben ist
R₁₃₁ derselben Definition entspricht wie der, die für R₁₃ in irgendeinem der voranstehenden Ansprüchen angegeben ist
Het₁, Het₂, die identisch oder unterschiedlich sind, derselben Definition entsprechen wie der, die für Het in irgendeinem der voranstehenden Ansprüche angegeben ist
Alk₁₁, Alk₂₁, die identisch oder unterschiedlich sind, entsprechen derselben Definition wie der, die für Alk₁, Alk₂, Alk₃ in irgendeinem der voranstehenden Ansprüche angegeben ist
m₁ entspricht derselben Definition wie der, die für m in irgendeinem der voranstehenden Ansprüchen angegeben ist

13. Verwendung einer Verbindung gemäß irgendeinem der voranstehenden Ansprüche zum Funktionalisieren eines Polymers.

14. Zubereitungsverfahren einer Zusammensetzung aus vernetzten Polymeren, wobei das genannte Verfahren die folgenden Schritte umfasst:
a. Auswählen eines linearen oder verzweigten Polymers, umfassend Funktionen, die ein Pfropfen oder eine Funktionalsierung ermöglichen,
b. Auswählen einer Kombination von Molekülen, von denen wenigstens eines aus den Verbindungen ausgewählt ist, die gemäß irgendeinem der Ansprüche 1 bis 12 definiert sind, wobei die Kombination das Pfropfen / die Funktionalisierung und das Herstellen von austauschbaren schwebenden Verbindungen und austauschbaren Vernetzungspunkten per Metathesereaktionen der Borester zulasssen soll;
c. Im geschmolzenen Zustand oder in einer Lösung vermischen des genannten Polymers und der genannten Kombination, um die genannte Zusammensetzung zu erhalten.

15. Verwendung einer Verbindung gemäß irgendeinem der Ansprüche 1 bis 12, als Kopplungsmittel an ein Molekül von Interesse.

## Claims

1. A compound of the formula (I) 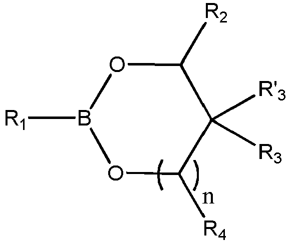
with n = 0 or 1,
R₁ is covalently linked to the boron atom by a carbon atom and represents a substituted or unsubstituted hydrocarbon radical which may include one or more heteroatoms or halogens, in particular which may be substituted by at least one radical of the formula (I'), 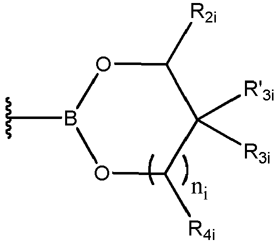
with nᵢ = 0 or 1
R₂, R₂ᵢ, R₃, R'₃, R₃ᵢ, R'₃ᵢ, R₄, R₄ᵢ, identical or different, represent a hydrogen atom or a substituted or unsubstituted hydrocarbon radical which may include one or more heteroatoms or halogens, or together form, pairwise, an aliphatic or aromatic ring,
R₂, R₂ᵢ, R₃, R'₃, R₃ᵢ, R'₃ᵢ, R₄, R₄ᵢ are not substituted by a radical of the formula (I'),
R₁ may represent a radical of the formula -X, covalently linked to the boron atom by a carbon atom
when R₁ represents a radical of the formula -X, none or one of R₂, R₃, R'₃ or R₄ represents a radical of the formula -X
when R₁ does not represent a radical of the formula -X, one of R₂, R₃, R'₃ or R₄ represents a radical of the formula -X
R'₃ = H when n=0 or when R₂ or R₄ represents a radical of the formula -X
One of R₂ᵢ, R₃ᵢ, R'₃ᵢ or R₄ᵢ represents a radical of the formula -Xi
R'₃ᵢ = H when nᵢ=0 or when R₂ᵢ or R₄ᵢ represents a radical of the formula -Xᵢ
X, Xᵢ are selected from:
- -(CH₂)ₘ-CH(R₅)-Y where Y is a maleimide, thiol, ―NH₂, acrylamide, methacrylamide or terminal alkene radical, m is an integer ranging from 0 to 12, R₅ is a substituted or unsubstituted hydrocarbon radical which may include one or more heteroatoms or halogens;
- ―(CH₂)ₘ―R₆―Y where Y is a maleimide, thiol, ―NH₂, acrylamide, methacrylamide or terminal alkene radical, m is an integer ranging from 0 to 12, R₆ is a hydrocarbon radical, substituted at least by Y, which may include one or more heteroatoms or halogens;
- ―(CH₂)ᵣ―Y, where Y is a maleimide, thiol, ―NH₂, acrylamide, methacrylamide or terminal alkene radical r is an integer ranging from 1 to 12; 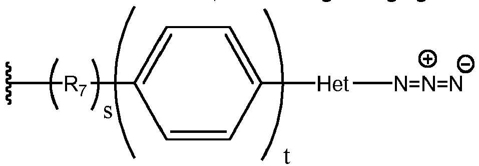 - with Het = ―O―CO― or ― 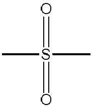
- and R₇ is a substituted or unsubstituted hydrocarbon radical which may include one or more heteroatoms or halogens, s is 0 or 1, t is 0 or 1, s+t = 1 or 2, preferentially, s+t = 1; 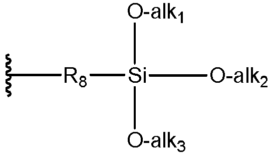 with alk₁, alk₂, alk₃ each independently representing a linear or branched C₁-C₄ alkyl and R₈ is a substituted or unsubstituted hydrocarbon radical which may include one or more heteroatoms or halogens; 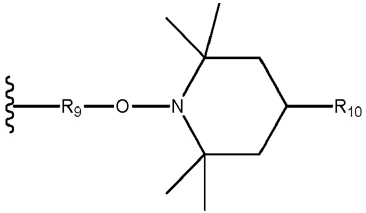 with R₉ is a substituted or unsubstituted hydrocarbon radical which may include one or more heteroatoms or halogens and R₁₀ is a hydrogen atom, or a hydroxyl radical, or a substituted or unsubstituted hydrocarbon radical which may include one or more heteroatoms or halogens; 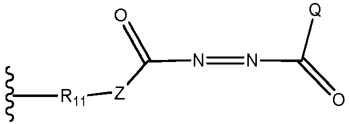 the double bond is of *cis* or *trans* configuration, with R₁₁ is a substituted or unsubstituted hydrocarbon radical which may include one or more heteroatoms or halogens, Z is a divalent group selected from -O-, -S-, or -NH-, Q is a C₁-C₆ alkoxy radical or 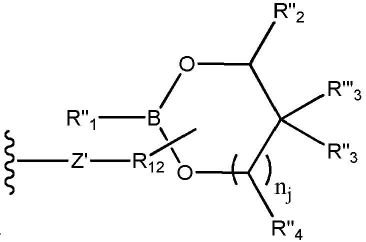 with Z' is a divalent group selected from -O-, -S-, or -NH-, one of R"₂, R'₃, R"₃, R"₄, R"₁ is missing depending on the substitution site, R₁₂ is a substituted or unsubstituted hydrocarbon radical which may include one or more heteroatoms or halogens, R"₁ is covalently linked to the boron atom by a carbon atom and represents a substituted or unsubstituted hydrocarbon group which may include one or more heteroatoms or halogens, R"₂, R"₃, R'"₃, R"₄, identical or different, represent a hydrogen atom or a substituted or unsubstituted hydrocarbon radical which may include one or more heteroatoms or halogens, or together form, pairwise, an aliphatic or aromatic ring, R"₁ is covalently linked to the boron atom by a carbon atom and represents a substituted or unsubstituted hydrocarbon group which may include one or more heteroatoms or halogens; 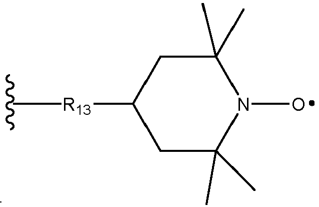 with R₁₃ is a substituted or unsubstituted hydrocarbon radical,
X and Xᵢ each having the same Y, azide, alkoxysilane, alkoxyamine, azodicarbonyl and nitroxide terminal function; in particular X and Xᵢ are identical
And R₁ may only represent X when X meets the following definitions: 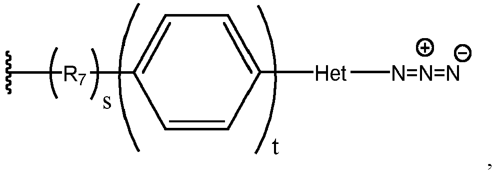
with R₇, s, t and Het being as previously defined; or 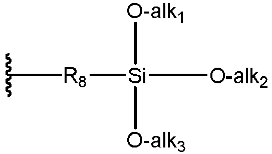
with alk₁, alk₂, alk₃ and R₈ being as previously defined; or 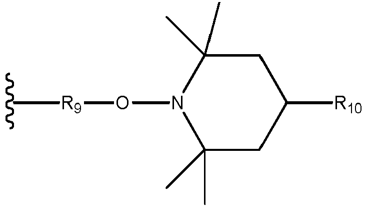
with R₉ and R₁₀ being as previously defined; or 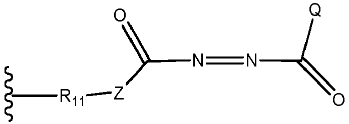
with R₁₁, Z and Q being as previously defined; 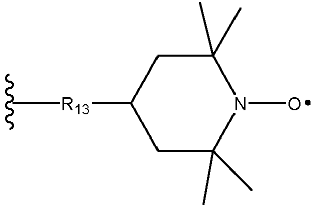
with R₁₃ being as previously defined.

2. The compound according to the preceding claim, **characterized in that** the radical R₁ does not represent X and R₁ represents an alkyl, aryl, aralkyl, alkyl-aryl or cycloalkyl group, each of these groups may also comprise heteroatoms such as O, N, S or Si, advantageously the radical R₁ represents a benzene ring, a naphthalene ring, an arylaliphatic group composed of two benzene rings linked by a C₁-C₆ alkanediyl group, a pyridine ring, a pyrimidine ring and a triazine ring, said ring being unsubstituted or substituted from 1 to 3 times, more advantageously an unsubstituted benzene ring.

3. The compound according to according to any one of the preceding claims, **characterized in that** the radical R₁ is substituted by functional groups selected from ester, amide, (meth)acrylate and styrene functions, or a compound of the formula (I'), more preferably by a halogen, an -Rz, -OH, -NHRz, -NRzR'z, -C(O)-OH, -C(O)-NRzR'z, ―C(O)―O―Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, or -N(H)-C(O)-Rz group with Rz, R'z, identical or different, representing a C₁-C₅₀ alkyl radical.

4. The compound according to any one of the preceding claims, **characterized in that** the radical R₁ is interrupted by ester, amide, ether, thioether, secondary or tertiary amine, carbonate, urethane, carbamide or anhydride functions.

5. The compound according to claim 1, **characterized in that** the radical R₁ represents X and X meets the following definitions 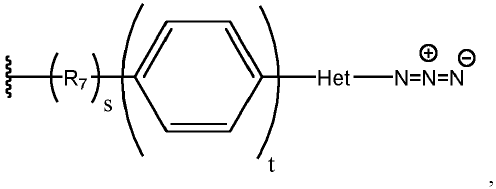
with R₇, s, t and Het being as defined in claim 1; or 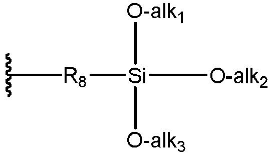
with alk₁, alk₂, alk₃ and R₈ being as defined in claim 1; or 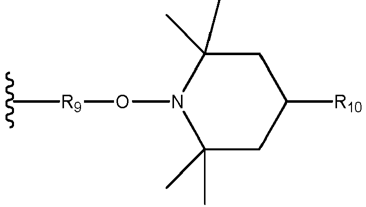
with R₉ and R₁₀ being as defined in claim 1; or 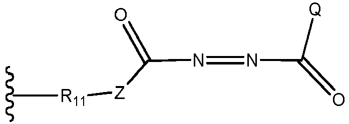
with R₁₁, Z and Q being as defined in claim 1, the double bond being of *cis* or *trans* configuration; or 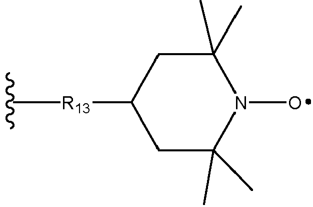
with R₁₃ being as previously defined.

6. The compound according to any one of the preceding claims, **characterized in that** when not representing X or Xᵢ, R₂, R₂ᵢ, R'₃, R'₃ᵢ, R₄, R₄ᵢ represent H.

7. The compound according to any one of the preceding claims, **characterized in that** when not representing X or Xᵢ, R₃, R₃ᵢ, identical or different, represent H, or ―CH₃.

8. The compound according to any one of the preceding claims, **characterized in that** R₅ represents H or an unsubstituted hydrocarbon radical, advantageously H.

9. The compound according to any one of the preceding claims, **characterized in that** R₆ represents a (hetero)alkanediyl, a (hetero)alkenediyl, a (hetero)aryl or a (hetero)cycloalkyl group, advantageously a C₁-C₆ alkanediyl group.

10. The compound according to any one of the preceding claims, **characterized in that** r ranges from 1 to 4, advantageously r=1 or r=4.

11. The compound according to any one of the preceding claims, **characterized in that** m ranges from 0 to 4, advantageously m=0.

12. The compound according to claim 1, **characterized in that** it is selected from: 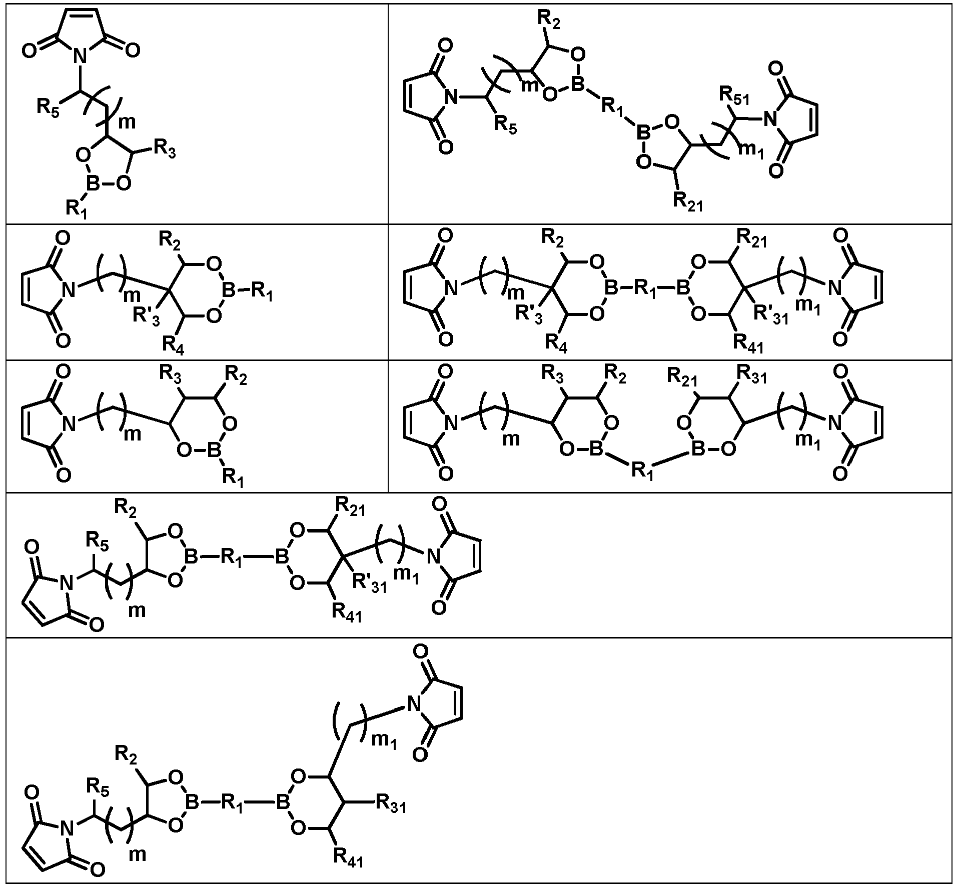 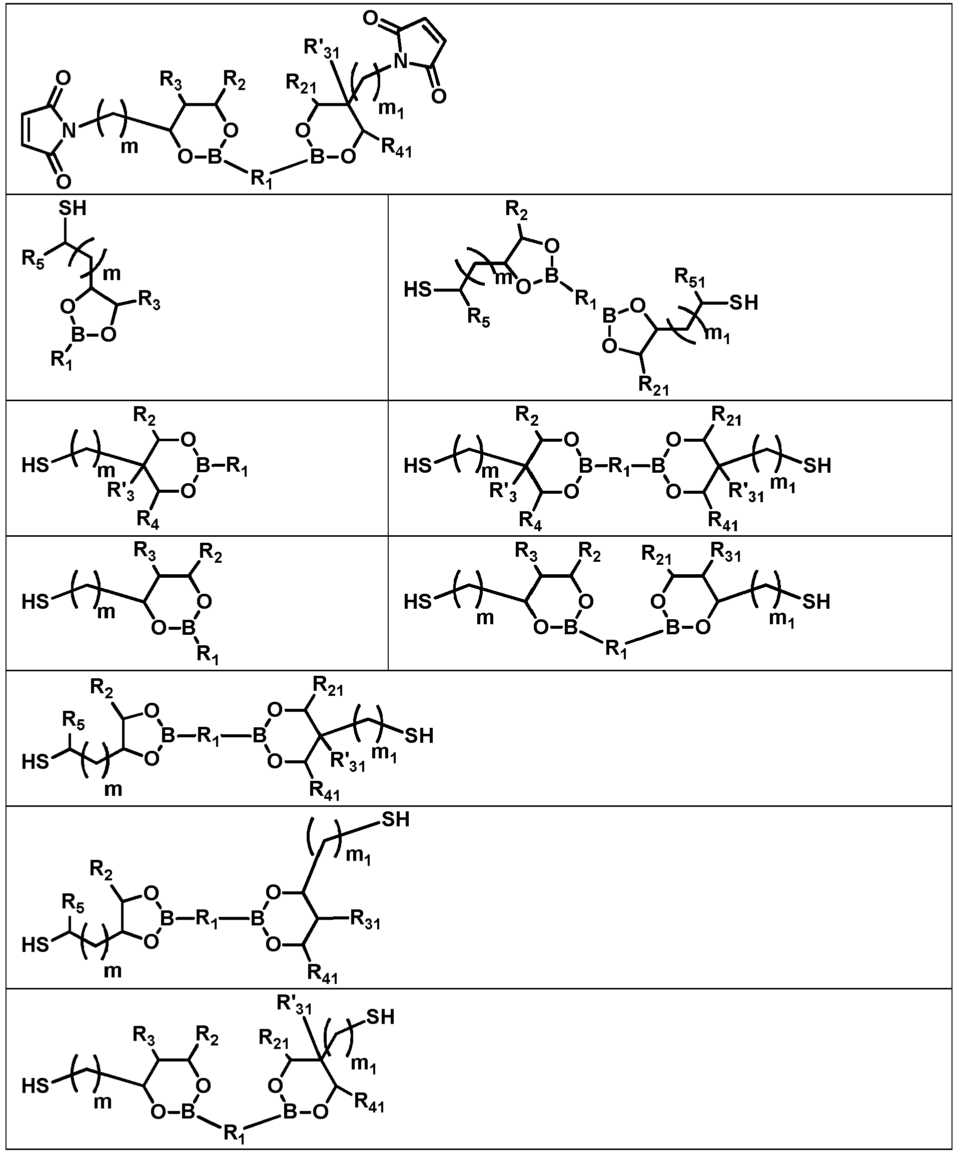 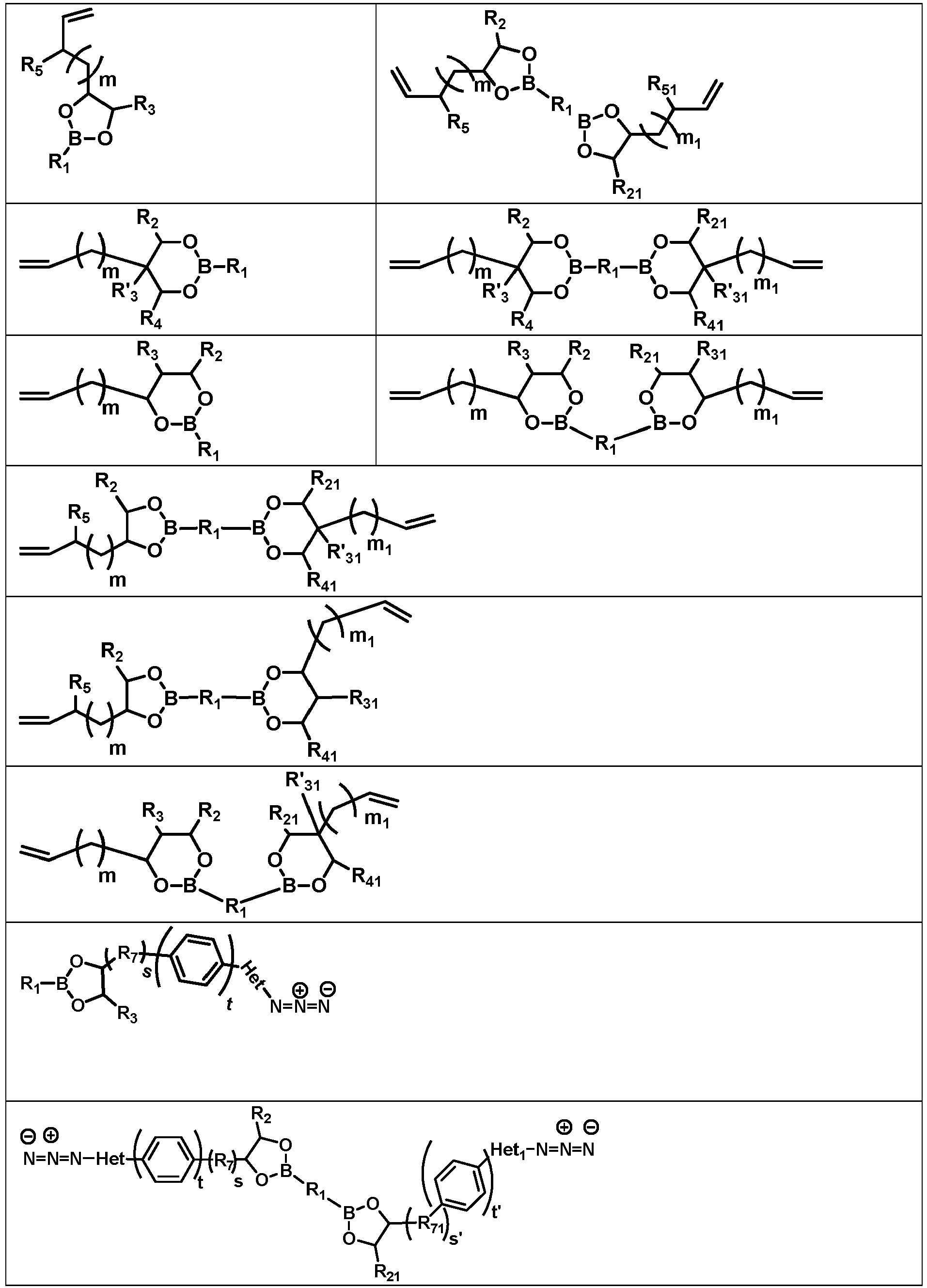 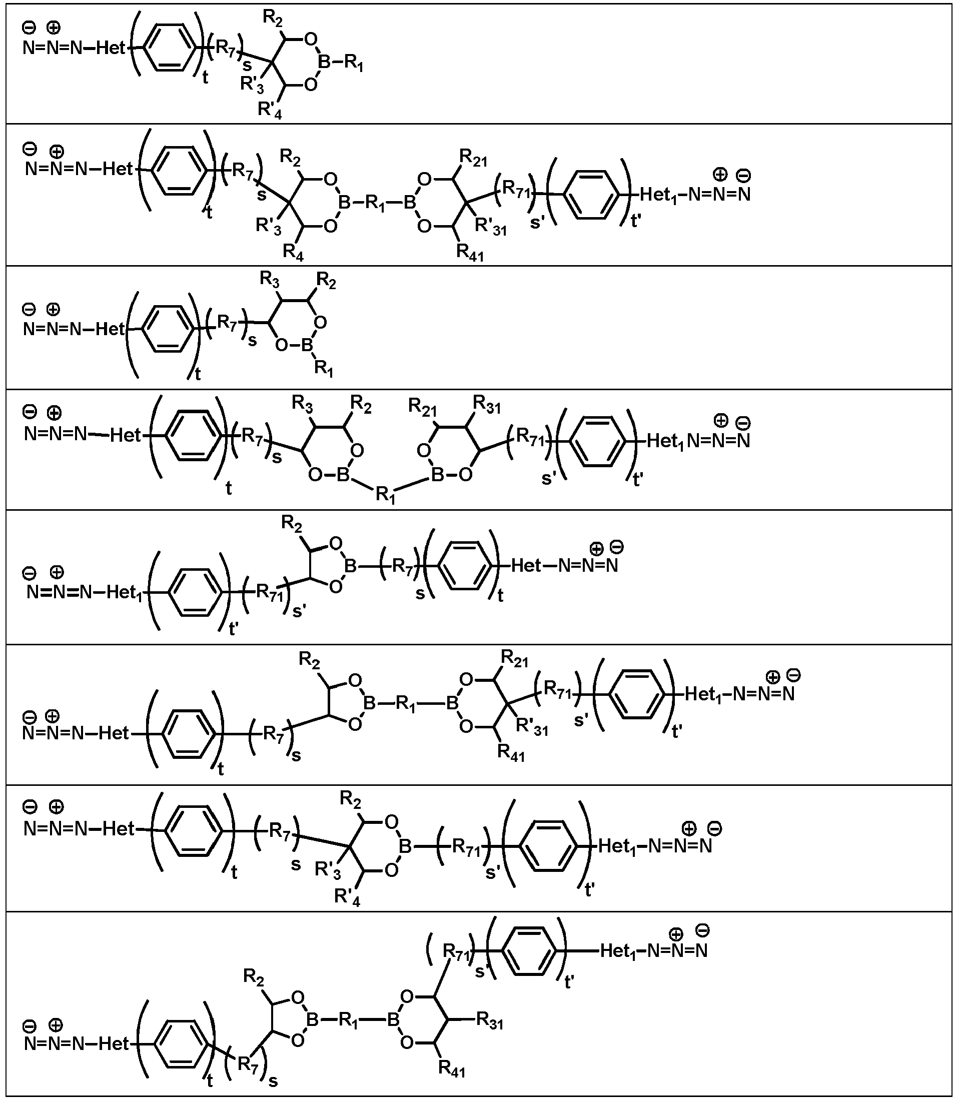 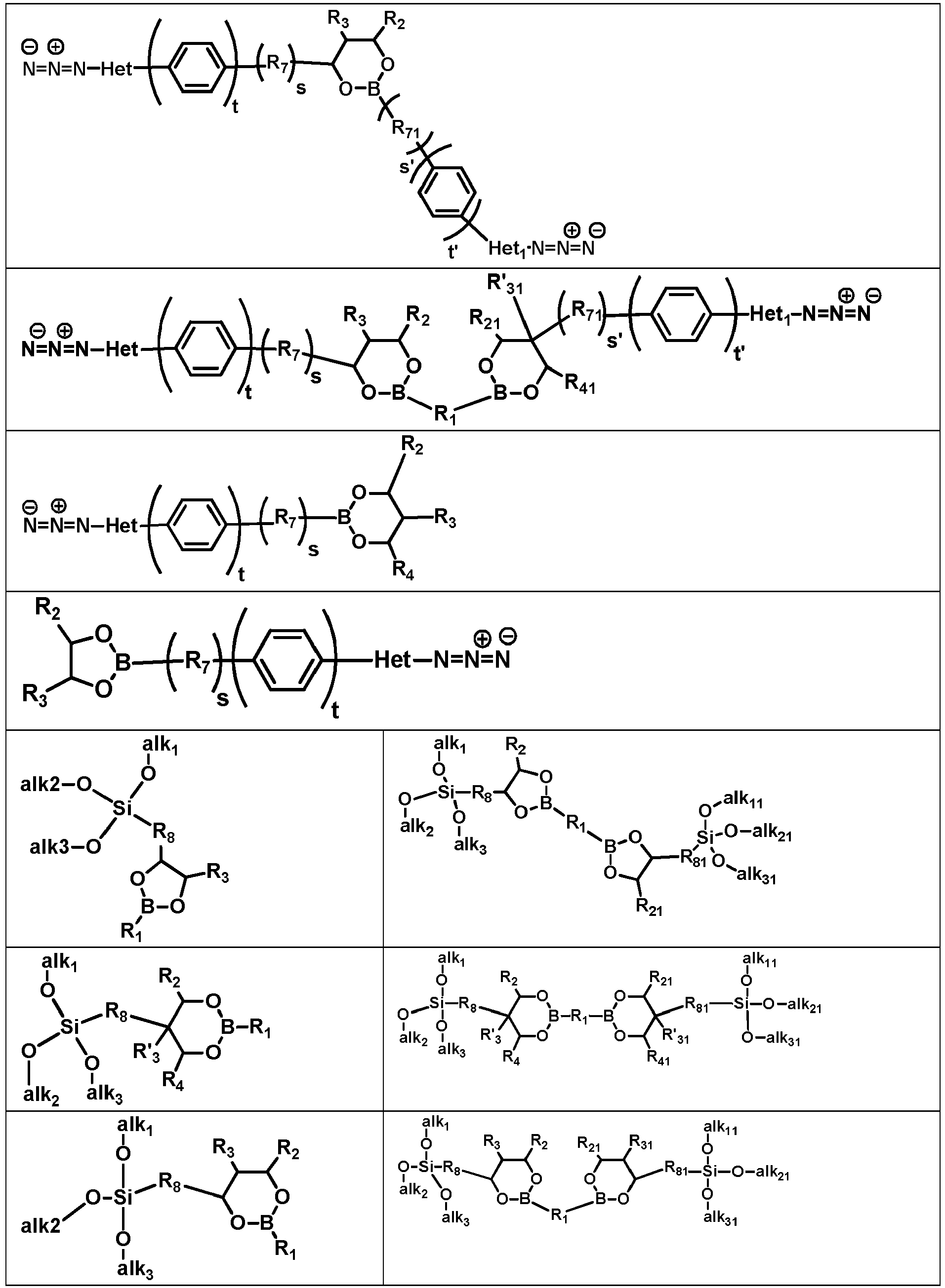 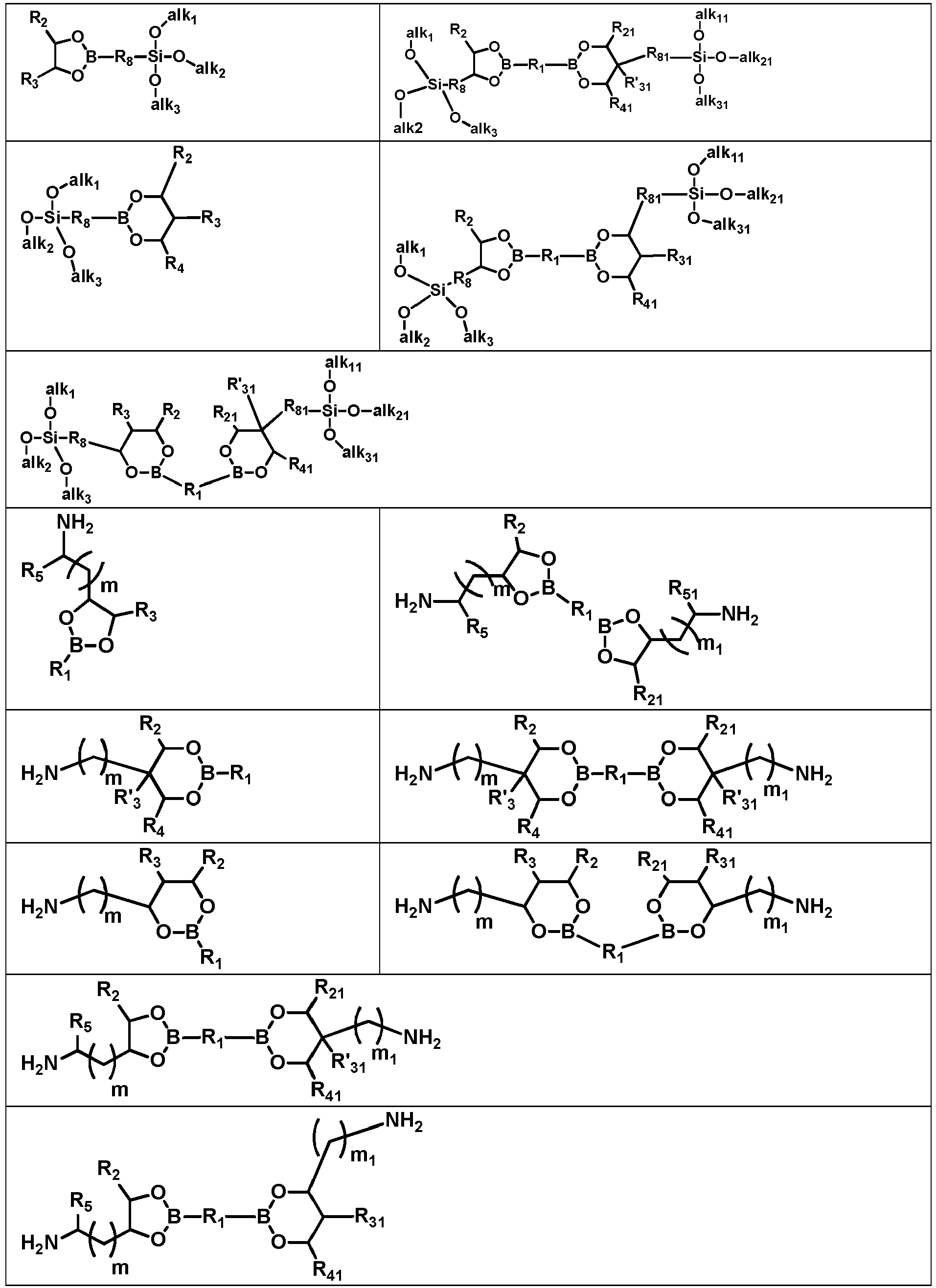 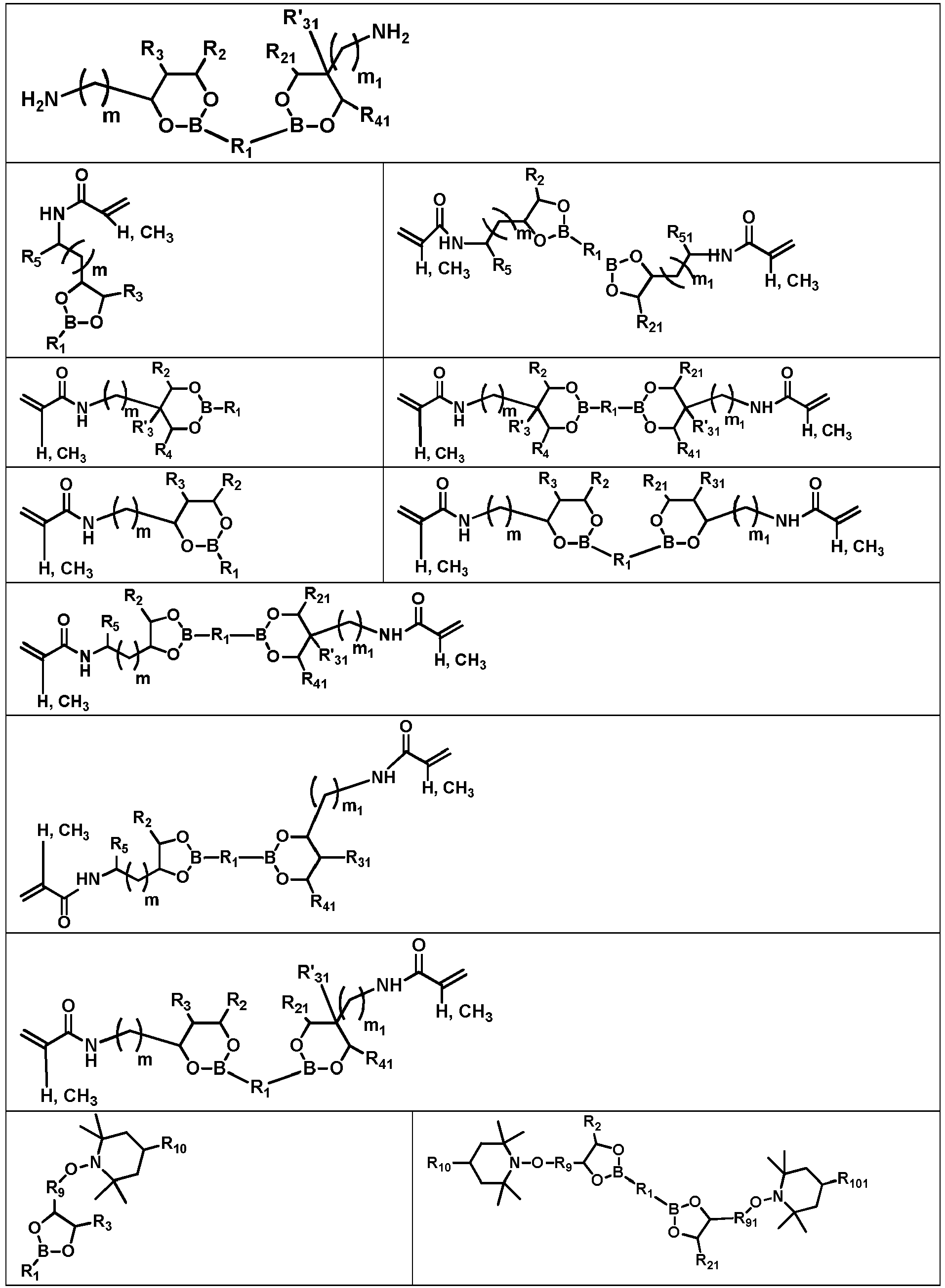 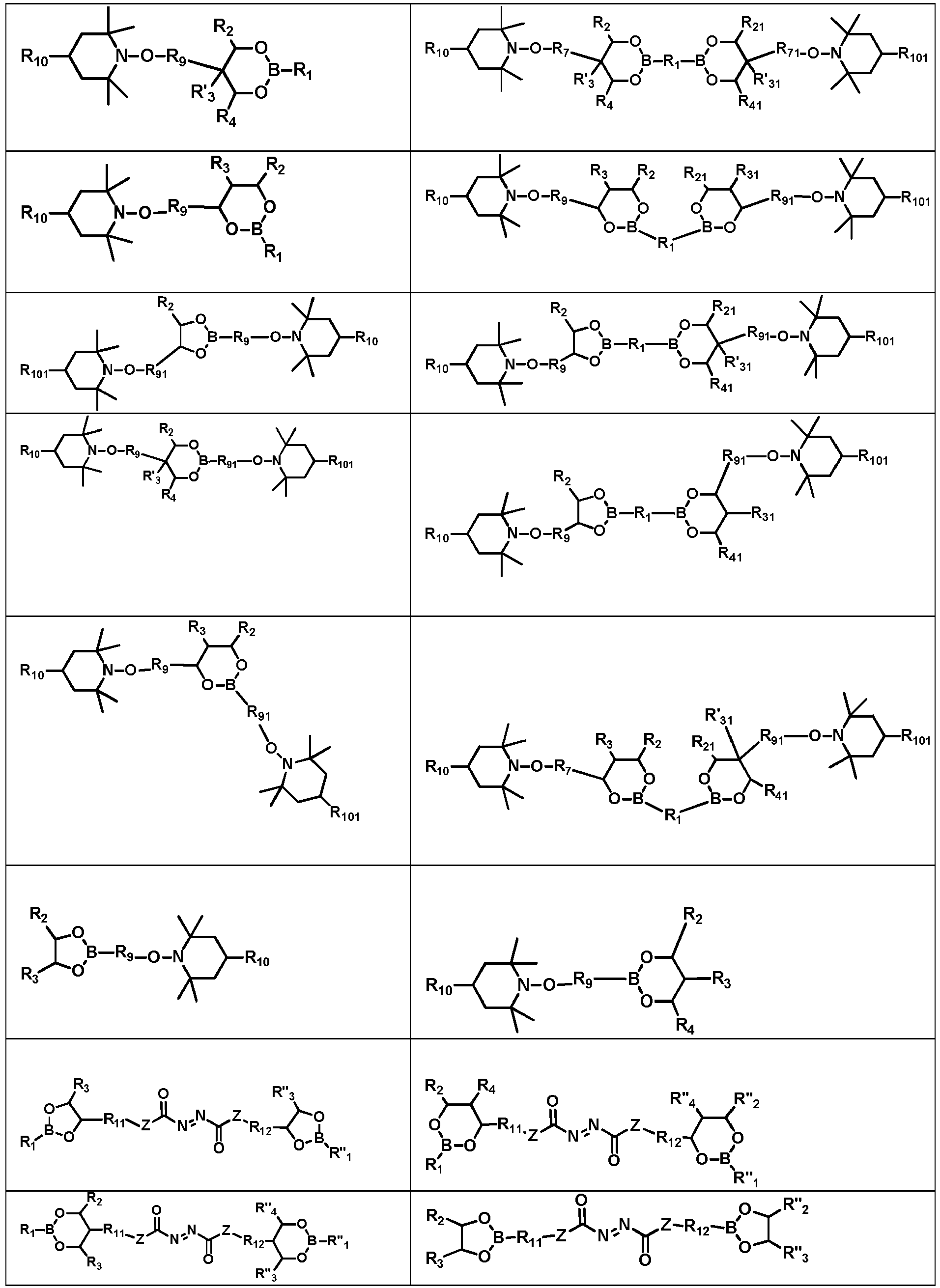 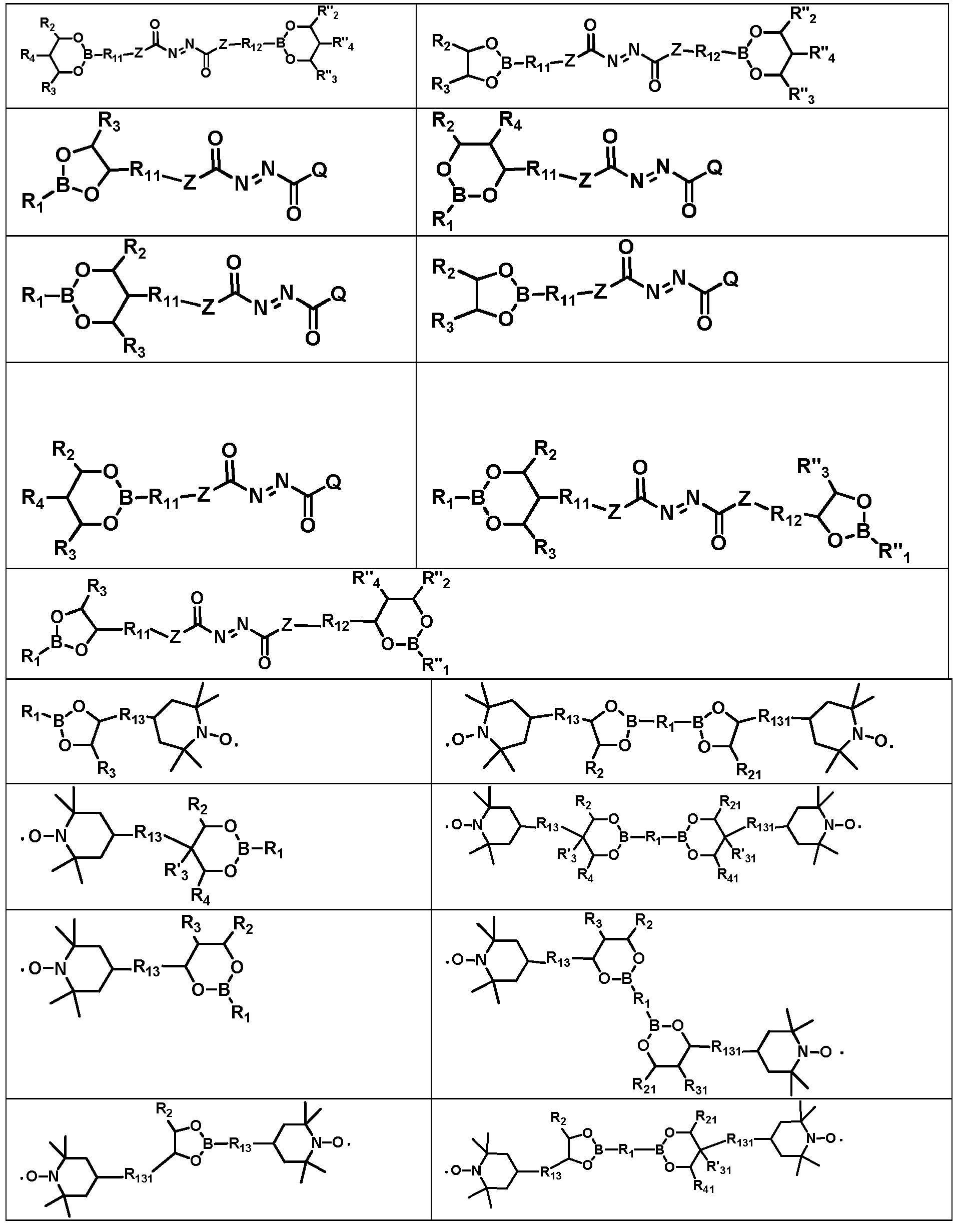 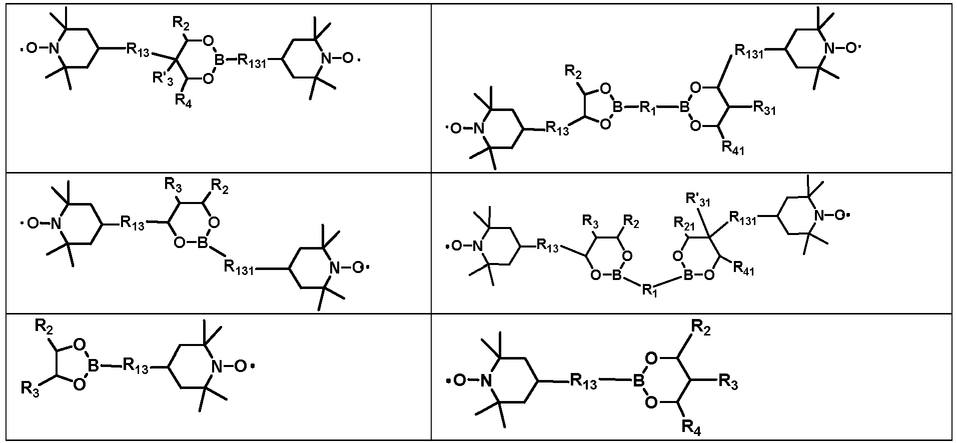
m, R₁, R₂, R₂₁, R₃, R'₃, R₃₁, R'₃₁, R₄, R₄₁, R₅, R₆, R₇, R₈, R₉, R₁₀, R₁₁, R₁₂, R₁₃, R"₂, R"₃,
R"₄, Het, alk₁, alk₂, alk₃, s and t being as defined any one of the preceding claims with i=1,
s' is 0 or 1, t' is 0 or 1, s'+t' = 1 or 2, preferentially s'+t' = 1
Q is a C₁-C₆ alkoxy radical,
R₅₁ has the same definition as that given for R₅ in any one of the preceding claims,
R₆₁ has the same definition as that given for R₆ in any one of the preceding claims,
R₇₁ has the same definition as that given for R₇ in any one of the preceding claims,
R₈₁ has the same definition as that given for R₈ in any one of the preceding claims,
R₉₁ has the same definition as that given for R₉ in any one of the preceding claims,
R₁₀₁ has the same definition as that given for R₁₀ in any one of the preceding claims,
R₁₃₁ has the same definition as that given for R₁₃ in any one of the preceding claims,
Het₁, Het₂, identical or different, have the same definition as that given for Het in any one of the preceding claims,
alk₁₁, alk₂₁, alk₃₁, identical or different, have the same definition as that given for alk₁, alk₂, alk₃ in any one of the preceding claims,
m₁ has the same definition as that given for m in any one of the preceding claims.

13. A use of a compound according to any one of the preceding claims, to functionalize a polymer.

14. A process for preparing a cross-linked polymer composition, said process comprises the following steps:
a. selecting a linear or branched polymer comprising functions that allow grafting or functionalization,
b. selecting a combination of molecules, at least one of which is selected from the compounds defined according to any one of claims 1 to 12, the combination allowing the grafting/ the functionalization and the creation of exchangeable pendant bonds and of exchangeable cross-linking points by boronic ester metathesis reactions;
c. mixing, in the molten state or in solution, said polymer and said combination to obtain said composition.

15. A use of a compound according to any one of claims 1 to 12, as a coupling agent to a molecule of interest.
